(19) Europäisches Patentamt / European Patent Office / Office européen des brevets

(11) **EP 4 501 839 B1**

(12) **EUROPÄISCHE PATENTSCHRIFT**

(45) Veröffentlichungstag und Bekanntmachung des Hinweises auf die Patenterteilung:
**22.07.2026  Patentblatt 2026/30**

(21) Anmeldenummer: **24221600.0**

(22) Anmeldetag: **13.06.2019**

(51) Internationale Patentklassifikation (IPC):
**B66C 13/06** *(2006.01)*

(52) Gemeinsame Patentklassifikation (CPC):
**B66C 13/063**

(54) **KRAN UND VERFAHREN ZUM STEUERN EINES SOLCHEN KRANS**

CRANE AND METHOD FOR CONTROLLING SUCH A CRANE

GRUE ET PROCÉDÉ DE COMMANDE D'UNE TELLE GRUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **26.06.2018  DE 102018005068**

(43) Veröffentlichungstag der Anmeldung:
**05.02.2025  Patentblatt 2025/06**

(62) Dokumentnummer(n) der früheren Anmeldung(en) nach Art. 76 EPÜ:
**19731917.1 / 3 784 616**

(73) Patentinhaber: **Liebherr-Werk Biberach GmbH**
**88400 Biberach an der Riss (DE)**

(72) Erfinder:
• **RAUSCHER, Florentin**
**70563 Stuttgart (DE)**
• **SAWODNY, Oliver**
**70186 Stuttgart (DE)**
• **NANN, Samuel**
**78586 Deilingen (DE)**

(74) Vertreter: **Lorenz Seidler Gossel Part. mbB**
**Widenmayerstr. 23**
**80538 München (DE)**

(56) Entgegenhaltungen:
EP-A1- 2 436 637          CN-U- 207 418 145
DE-A1- 102016 004 350     JP-A- 2016 222 363
JP-A- H08 143 273         US-A1- 2009 194 498

• ULF SCHAPER ET AL: "A load position observer for cranes with gyroscope measurements", 25 January 2012 (2012-01-25), pages 3563 - 3568, XP002667913, ISBN: 978-3-902661-93-7, Retrieved from the Internet <URL:http://ac.elscdn.com/S1474667016441637/1-s2.0-S1474667016441637-main.pdf?_tid=35c43e2e-662c-11e7-885f-00000aab0f6b&acdnat=1499772752_4aa720eb19864594d8e926b3788adb40> [retrieved on 20110902], DOI: 10.3182/20110828-6-IT-1002.01456
• KIJIMA Y ET AL: "AN OPTIMIZATION OF FUZZY CONTROLLER AND IT'S APPLICATION TO OVERHEAD CRANE", PROCEEDINGS OF THE 1995 IEEE IECON: INTERNATIONAL CONFERENCE ON INDUSTRIAL ELECTRONICS, CONTROL, AND INSTRUMENTATION. ORLANDO, NOV. 6 - 10, 1995. PLENARY SESSION, INVITED SESSIONS, AND POWER ELECTRONICS; [PROCEEDINGS OF THE INTERNATIONAL CONFERENCE O, vol. 2 OF 02, 6 November 1995 (1995-11-06), pages 1508 - 1513, XP000559392, ISBN: 978-0-7803-3027-6

# EP 4 501 839 B1

**Beschreibung**

Die vorliegende Erfindung betrifft einen Kran in Form eines einen Turmdrehkran, mit einem Hubseil, das von einem Ausleger abläuft und ein Lastaufnahmemittel trägt, Antriebseinrichtungen zum Bewegen mehrerer Kranelemente und Verfahren des Lastaufnahmemittels, einer Steuervorrichtung zum Steuern der Antriebseinrichtungen derart, dass das Lastaufnahmemittel entlang eines Verfahrwegs verfährt, sowie einer Pendeldämpfungseinrichtung zum Dämpfen von Pendelbewegungen des Lastaufnahmemittels, wobei die genannte Pendeldämpfungseinrichtung eine Pendelsensorik zum Erfassen von Pendelbewegungen des Hubseils und/oder des Lastaufnahmemittels sowie einen Reglerbaustein mit einem geschlossenen Regelkreis zum Beeinflussen der Ansteuerung der Antriebseinrichtungen in Abhängigkeit von Pendelsignalen, die von der Pendelsensorik erfaßte Pendelbewegungen angeben und dem Regelkreis rückgeführt werden, aufweist. Die Erfindung betrifft ferner auch ein Verfahren zum Steuern eines solchen Krans, bei dem die Ansteuerung der Antriebseinrichtungen von einer Pendeldämpfungseinrichtung in Abhängigkeit von pendelrelevanten Parametern beeinflusst wird.

Um den Lasthaken eines Krans entlang eines Verfahrwegs bzw. zwischen zwei Zielpunkten verfahren zu können, müssen üblicherweise diverse Antriebseinrichtungen betätigt und gesteuert werden.

Um den Lasthaken eines Krans entlang eines Verfahrwegs bzw. zwischen zwei Zielpunkten verfahren zu können, müssen üblicherweise diverse Antriebseinrichtungen betätigt und gesteuert werden.

Bediener von Brückenkranen (bzw. Verladebrücken) steuern dabei die Antriebe in der Regel direkt an, so dass es viel Übung und Konzentration erfordert, eine Last schnell an die Abladestelle verfahren und dort sicher absetzen zu können. Insbesondere entstehen durch das Ansteuern des Krans schnell große Pendelschwingungen der Last, die aufgrund der geringen Dämpfung nur sehr langsam abklingen. Dies zu vermeiden, ist manuell sehr schwierig und gelingt auch erfahrenen Kranführern nicht immer bzw. kaum.

Bei manchen Krantypen kommt hinzu, dass diese in sich selbst nachgiebig sind und selbst schwingen können, was angesichts diverser Bewegungsachsen vom Kranführer kaum vorhersagbar ist. Beispielsweise bei einem Turmdrehkran, bei dem das Hubseil von einer Laufkatze abläuft, die am Ausleger des Krans verfahrbar ist, muss üblicherweise das Drehwerk, mittels dessen der Turm mit dem darauf vorgesehenen Ausleger bzw. der Ausleger relativ zum Turm um eine aufrechte Drehachse verdreht werden, sowie der Katzantrieb, mittels dessen die Laufkatze entlang des Auslegers verfahren werden kann, und das Hubwerk, mittels dessen das Hubseil verstellt und damit der Lasthaken angehoben und abgesenkt werden kann, jeweils betätigt und gesteuert werden. Bei Kranen mit einem wippbaren Teleskopausleger werden zusätzlich zum Drehwerk, der den Ausleger bzw. den den Ausleger tragenden Oberwagen um eine aufrechte Achse verdreht, und zum Hubwerk zum Verstellen des Hubseils, auch der Wippantrieb zum Auf- und Niederwippen des Auslegers sowie der Teleskopierantrieb zum Ein- und Ausfahren der Teleskopschüsse betätigt, ggf. auch ein Wippspitzenantrieb bei Vorhandensein einer Wippspitze am Teleskopausleger. Bei Mischformen solcher Krane und ähnlichen Krantypen, beispielsweise Turmkranen mit wippbarem Ausleger oder Derrick-Kranen mit wippbarem Gegenausleger können jeweils auch weitere Antriebseinrichtungen anzusteuern sein.

Die genannten Antriebseinrichtungen werden hierbei üblicherweise vom Kranführer über entsprechende Bedienelemente beispielsweise in Form von Joysticks, Kippschaltern, Drehknöpfen und Schiebern und dergleichen betätigt und gesteuert, was erfahrungsgemäß viel Gefühl und Erfahrung benötigt, um die Zielpunkte rasch und dennoch sanft ohne größere Pendelbewegungen des Lasthakens anzufahren. Während zwischen den Zielpunkten möglichst rasch gefahren werden soll, um eine hohe Arbeitsleistung zu erzielen, soll am jeweiligen Zielpunkt sanft angehalten werden, ohne dass der Lasthaken mit der daran angeschlagenen Last nachpendelt.

Ein solches Steuern der Antriebseinrichtungen eines Krans ist angesichts der erforderlichen Konzentration für den Kranführer ermüdend, zumal oft immer wiederkehrende Verfahrwege und monotone Aufgaben zu erledigen sind. Zudem kommt es bei nachlassender Konzentration oder auch bei einer nicht ausreichenden Erfahrung mit dem jeweiligen Krantyp zu größeren Pendelbewegungen der aufgenommenen Last und damit zu einem entsprechenden Gefährdungspotenzial, wenn der Kranführer die Bedienhebel bzw. -elemente des Krans nicht feinfühlig genug bedient. In der Praxis entstehen durch das Ansteuern des Krans auch bei erfahrenen Kranführern bisweilen immer wieder schnell große Pendelschwingungen der Last, die nur sehr langsam abklingen.

Um der Problematik unerwünschter Pendelbewegungen zu begegnen, wurde bereits vorgeschlagen, die Steuervorrichtung des Krans mit Pendeldämpfeinrichtungen zu versehen, die mittels Steuerungsbausteinen in die Steuerung eingreifen und das Ansteuern der Antriebseinrichtungen beeinflussen, beispielsweise zu große Beschleunigungen einer Antriebseinrichtung durch zu schnelles oder zu starkes Betätigen des Bedienhebels verhindern oder abschwächen oder bestimmte Verfahrgeschwindigkeiten bei größeren Lasten beschränken oder in ähnlicher Weise in die Verfahrbewegungen auch aktiv eingreifen, um ein zu starkes Pendeln des Lasthakens zu verhindern.

Solche Pendeldämpfungseinrichtungen für Krane sind in verschiedenen Ausführungen bekannt, beispielsweise durch Ansteuerung der Drehwerk-, Wipp- und Laufkatzenantriebe in Abhängigkeit von bestimmten Sensorsignalen, beispielsweise Neigungs- und/oder Gyroskopsignalen. Beispielsweise zeigen die Schriften DE 20 2008 018 260 U1 oder DE 10 2009 032 270 A1 bekannte Lastpendeldämpfungen an Kranen, auf deren Gegenstand insoweit, das heißt hinsichtlich der Grundlagen der Pendeldämpfungseinrichtung, ausdrücklich Bezug genommen wird. Weiterhin offenbart das Dokument DE 10 2016 004350 A1 einen Turmdrehkran gemäß dem Oberbegriff des Anspruchs 1. Bei der DE 20 2008 018 206 U1 wird beispielsweise mittels einer Gyroskopeinheit der Seilwinkel relativ zur Vertikalen und dessen Änderung in Form der Seilwinkelgeschwindigkeit gemessen, um bei Überschreiten eines Grenzwerts für die Seilwinkelgeschwindigkeit gegenüber der Vertikalen automatisch in die Steuerung einzugreifen.

Weiterhin zeigen die Schriften EP 16 28 902 B1, DE 103 24 692 A1, EP 25 62 125 B1, US 2013 01 61 279 A, DE 100 64 182 A1, oder US 55 26 946 B jeweils Konzepte zur Closed-Loop-Regelung von Kranen, die die Pendeldynamik oder auch die Pendel- und Antriebsdynamik berücksichtigen. Allerdings führt die Anwendung dieser bekannten Konzepte an "weichen", nachgiebigen Kranen mit länglichen, ausgereizten Strukturen wie beispielsweise an einem Turmdrehkran mit Strukturdynamik in der Regel recht schnell zu einem gefährlichen, instabilen Aufschwingen der anregbaren Strukturdynamik.

Solche Close-Loop-Regelungen an Kranen mit Berücksichtigung der Pendeldynamik sind auch bereits Gegenstand diverser wissenschaftlicher Publikationen, vgl. bspw. E. Arnold, O. Sawodny, J. Neupert and K. Schneider, "Anti-sway system for boom cranes based on a model predictive control approach", IEEE International Conference Mechatronics and Automation, 2005, Niagara Falls, Ont., Canada, 2005, pp. 1533-1538 Vol. 3., sowie Arnold, E., Neupert, J., Sawodny, O., "Modell-prädiktive Trajektoriengenerierung für flachheitsbasierte Folgeregelungen am Beispiel eines Hafenmobilkrans", at - Automatisierungstechnik, 56(8/2008), oder J. Neupert, E. Arnold, K. Schneider & O. Sawodny, "Tracking and anti-sway control for boom cranes", Control Engineering Practice, 18, pp. 31-44, 2010, doi:10.1016/j.coneng-prac.2009.08.003.

Ferner ist von der Firma Liebherr unter dem Namen "Cycoptronic" ein Lastpendeldämpfungssystem für maritime Krane bekannt, welches Lastbewegungen und Einflüsse wie Wind im Voraus berechnet und auf Basis dieser Vorausberechnung automatisch Kompensationsbewegungen einleitet, um ein Schwingen der Last zu vermeiden. Konkret werden auch bei diesem System mittels Gyroskopen der Seilwinkel gegenüber der Vertikalen und dessen Änderungen erfasst, um in Abhängigkeit der Gyroskopsignale in die Steuerung einzugreifen.

Aus der Schrift EP 2 436 637 A1 ist eine Vorrichtung zum Bestimmen der Lage eines Lasthakens eines Teleskopkrans bekannt, bei der am Lasthaken translatorische Beschleunigungen und die Neigung des Lasthakens gegenüber der vertikalen Bestimmt wird, wobei die Vorrichtung mit zwei Koordinatensystemen arbeitet und die Verkippung der beiden Koordinatensysteme zueinander bestimmt. Weitere Vorrichtungen zum Bestimmen der Lage eines Lasthakens sind aus den Schriften CN 207 418 145 U, DE 10 2016 004350 A1, JP H08 143273 A und JP 2016 222363 A bekannt.

Bei langen, schlanken Kranstrukturen mit ambitionierter Traglastauslegung, wie dies insbesondere bei Turmdrehkranen der Fall ist, aber auch bei anderen Kranen mit um eine aufrechte Achse verdrehbaren Auslegern wie bspw. wippbaren Telekopausleger-Kranen relevant werden kann, ist es mit herkömmlichen Pendeldämpfungseinrichtungen jedoch bisweilen schwierig, in der richtigen Art und Weise in die Ansteuerung der Antriebe einzugreifen, um die gewünschte, pendeldämpfende Wirkung zu erzielen. Hierbei kommt es im Bereich der Strukturteile, insbesondere des Turms und Auslegers, zu dynamischen Effekten und elastischem Verformen der Strukturteile, wenn ein Antrieb beschleunigt oder abgebremst wird, sodass sich Eingriffe in die Antriebseinrichtungen - beispielsweise Abbremsen oder Beschleunigen des Katzantriebs oder des Drehwerks - nicht direkt in der gewünschten Weise auf die Pendelbewegung des Lasthakens auswirken.

Zum einen kann es durch dynamische Wirkungen in den Strukturteilen zu Zeitverzögerungen bei der Übertragung auf das Hubseil und den Lasthaken kommen, wenn Antriebe pendeldämpfend betätigt werden. Zum anderen können die genannten dynamischen Effekte auch übermäßige oder sogar kontraproduktive Auswirkungen auf ein Lastpendel haben. Wenn beispielsweise eine Last durch zunächst zu schnelles Betätigen des Laufkatzantriebs nach hinten zum Turm hin pendelt und die Pendeldämpfungseinrichtung gegensteuert, indem der Katzantrieb verzögert wird, kann es zu einer Nickbewegungen des Auslegers kommen, da sich der Turm entsprechend verformt, wodurch die gewünschte pendeldämpfende Wirkung beeinträchtigt werden kann.

Insbesondere bei Turmdrehkranen tritt dabei aufgrund der Leichtbauweise auch das Problem auf, dass im Gegensatz zu bestimmten anderen Krantypen die Schwingungen der Stahlstruktur nicht vernachlässigbar sind, sondern bei einer Regelung (closed loop) aus Sicherheitsgründen behandelt werden sollten, da es andernfalls in der Regel zu einem gefährlichen instabilen Aufschwingen der Stahlstruktur kommen kann.

Grundsätzliches Ziel ist es daher, die Pendelbewegungen zu erfassen und ihnen durch eine Regelung aktiv entgegen zu wirken. Eine solche Regelung kann einerseits als Assistenzsystem dienen, das es dem Kranführer erlaubt, über die Bediengeräte direkt die Lastbewegung vorzugeben (anstatt der Brücken- oder Laufkatzenbewegung). Durch diese Unterstützung können Arbeitssicherheit und Produktivität erhöht werden. Eine Schwingungsdämpfung ist zudem eine wichtige Voraussetzung für die Vollautomatisierung von Brückenkranen.

Speziell stellt sich dabei das Problem, dass Systeme zur aktiven Schwingungsdämpfung bislang nicht kostengünstig nachrüstbar oder nicht universell einsetzbar waren. In wissenschaftlichen Publikationen und industriellen Produkten finden sich viele Vorrichtungen und Verfahren für solche Schwingungsdämpfungen. Recherchen zeigen allerdings, dass

- die Vorrichtungen in der Regel entweder nicht oder nur aufwändig & teuer nachrüstbar sind
- sich die verwendeten Regelungsverfahren bedingt nicht universell, sondern nur in Spezialfällen (z.B. nur Verladebrücken für Containerkrane) anwendbar sind.

Weiter Nachteile ergeben sich dabei dadurch, dass

- bekannte Schwingungsdämpfungen auf Basis von Pendelwinkelmessungen bislang recht teuer teuer sind,
- Lösungen, die über spezielle Konstruktionen die Seilbewegung kurz unterhalb der Laufkatze messen, die möglichen Hubhöhen/Senktiefen des Krans verringern und daher in der Praxis oft unerwünscht sind, zumal sie oft nur aufwändig nachrüstbar sind,
- in der Regel mögliche Kippbewegungen des Hakens nur unzureichend berücksichtigt werden.

Hiervon ausgehend liegt der vorliegenden Erfindung die Aufgabe zugrunde, einen verbesserten Kran sowie ein verbessertes Verfahren zu dessen Steuerung zu schaffen, die Nachteile des Standes der Technik vermeiden und letzteren in vorteilhafter Weise weiterbilden. Vorzugsweise soll erreicht werden, die Nutzlast entsprechend der Sollwerte des Kranführers zu bewegen und dabei unerwünschte Pendelbewegungen über eine Regelung aktiv zu dämpfen, während gleichzeitig unerwünschte Bewegungen der Strukturdynamik nicht angeregt, sondern ebenfalls durch die Regelung gedämpft werden, um eine Erhöhung der Sicherheit, der erleichterten Bedienbarkeit sowie der Automatisierbarkeit zu erreichen. Insbesondere soll eine verbesserte Pendeldämpfung bei Turmdrehkranen erzielt werden, die die mannigfachen Einflüsse der Kranstruktur besser berücksichtigt.

Erfindungsgemäß wird die genannte Aufgabe durch einen Kran gemäß Anspruch 1 sowie ein Verfahren gemäß Anspruch 13 gelöst. Bevorzugte Ausgestaltungen der Erfindungen sind Gegenstand der abhängigen Ansprüche.

Es wird also vorgeschlagen, eine Pendelerfassung am Lasthaken vorzunehmen und die Pendelsensorik am Lasthaken mit einer Intertialerfassungseinrichtung zu versehen, die am Lasthaken bzw.den Lastaufnahmemitteln angebracht ist und Beschleunigungs- und Drehratensignale bereitstellt, die translatorische Beschleunigungen und Drehraten des Lasthakens wiedergeben.

Eine solche am Lastaufnahmemittel angebrachte Inertialmeßeinrichtung, die bisweilen auch als IMU bezeichnet wird, kann Beschleunigungs- und Drehratensensormittel zum Bereitstellen von Beschleunigungs- und Drehratensignalen aufweisen, die einerseits translatorische Beschleunigungen entlang verschiedener Raumachsen und andererseits Drehraten bzw. gyroskopische Signale bezüglich verschiedener Raumachsen angeben, umfassen. Als Drehraten können dabei Drehgeschwindigkeiten, grundsätzlich aber auch Drehbeschleunigungen oder auch beides bereitgestellt werden.

Vorteilhafterweise kann die Inertialmesseinrichtung Beschleunigungen in drei Raumachsen und Drehraten um zumindest zwei Raumachsen erfassen. Die Beschleunigungssensormittel können dreiachsig arbeitend und die Gyroskopensensormittel können zweiachsig arbeitend ausgebildet sein.

Die am Lasthaken angebrachte Inertialmesseinrichtung kann ihre Beschleunigungsund Drehratensignale und/oder daraus abgeleitete Signale vorteilhafterweise drahtlos an eine Steuer- und/oder Auswerteeinrichtung übermitteln, die an einem Strukturteil des Krans angebracht oder auch separat in Krannähe angeordnet sein kann. Insbesondere kann die Übermittlung an einen Empfänger erfolgen, der an der Laufkatze und/oder an der Aufhängung, von der das Hubseil abläuft, angebracht sein kann. Vorteilhafterweis kann die Übertragung bspw. über eine WLAN-Verbindung erfolgen.

Durch eine solche drahtlose Anbindung einer Inertialmesseinrichtung kann eine Pendeldämpfung sehr einfach auch an bestehenden Kranen nachgerüstet werden, ohne dass hierfür komplexe Nachrüstmassnahmen erforderlich wären. Es ist im wesentlichen nur die Inertialmesseinrichtung am Lasthaken und der damit kommunizierende Empfänger anzubringen, der die Signale an die Steuer- bzw. Reglereinrichtung übermittelt.

Aus den Signalen der Inertialmeßeinrichtung kann vorteilhafterweise in einem zweistufigen Verfahren die Auslenkung des Lasthakens bzw. des Hubseils gegenüber der Vertikalen bestimmt werden. Zunächst wird die Verkippung des Lasthakens bestimmt, da diese nicht mit der Auslenkung des Lasthakens gegenüber der Laufkatze bzw. dem Aufhängepunkt und der Auslenkung des Hubseils gegenüber der Vertikalen übereinstimmen muß, wird sodann aus der Verkippung des Lasthakens und dessen Beschleunigung die gesuchte Auslenkung des Lasthakens bzw. des Hubseils gegenüber der Vertikalen bestimmt. Da die Inertialmesseinrichtung am Lasthaken befestigt ist, werden die Beschleunigungs- und Drehratensignale sowohl von den Pendelbewegungen des Hubseils auch als von der Dynamik des relativ zum Hubseil verkippenden Lasthakens beeinflußt.

Insbesondere kann durch drei Berechnungsschritte eine genaue Schätzung des Lastpendelwinkels erfolgen, die dann vom Regler zur aktiven Pendeldämpfung verwendet werden kann. Die drei Berechnungsschritte können insbesondere folgende Schritte umfassen:

i. Eine Bestimmung der Hakenkippung, z.B. durch ein Komplementärfilter, der hochfrequente Anteile aus den Gyroskopsignalen und niederfrequente Anteile aus Richtung des Gravitationsvektors bestimmen und einander ergänzend zur Ermittlung der HAkenkippung zusammenführen kann;

ii. Eine Rotation der Beschleunigungsmessung bzw. eine Transformation vom körperfesten ins inertiale Koordinatensystem;

iii. Schätzung des Lastpendelwinkels mittels eines erweiterten Kalman-Filters und/oder mittels einer vereinfachten Relation des Pendelwinkel zum Quotienten aus Querbeschleunigungsmessung und Gravitationskonstante.

Durch eine modellbasierte Regelung wird eine stabilisierende Rückführung dieser Pendelwinkelschätzung auf die Stellsignale des Brücken- oder Turmdrehkrans berechnet.

Die damit erzielbare, hochgenauen Pendelwinkelschätzung ist dabei grundsätzlich für universelle Hakentypen (die für bestimmte Pendelschwingungen anfällig sein können) einsetzbar und kommt mit einer sehr kostengünstig nachrüstbaren Sensorik auskommt. Gleichzeitig ergeben sich beträchtlich Vorteile wie erhöhte Sicherheit, verbesserte Bedienbarkeit, erhöhte Umschlagleistung und Automatisierbarkeit. Zudem ist die Pendelsensorik kostengünstig nachrüstbar.

Vorteilhafterweise wird dabei zunächst die Verkippung des Lasthakens aus den Signalen der Inertialmesseinrichtung mit Hilfe eines Komplementärfilters bestimmt, der sich die unterschiedlichen Besonderheiten der translatorischen Beschleunigungs-Signale und der gyroskopischen Signale der Inertialmeßeinrichtung zunutze macht, wobei alternativ oder zusätzlich aber auch ein Kalman-Filter zum Bestimmen der Verkippung des Lasthakens aus den Beschleunigungs- und Drehratensignalen verwendet werden kann.

Aus der ermittelten Verkippung des Lastaufnahmemittels kann sodann mittels eines Kalman-Filters und/oder mittels statischer Berechnung aus horizontaler Inertialbeschleunigung und Erdbeschleunigung die gesuchte Auslenkung des Lasthakens gegenüber der Laufkatze bzw. gegenüber dem Aufhängepunkt des Hubseils und/oder die Auslenkung des Hubseils gegenüber der Vertikalen bestimmt werden.

Insbesondere kann die Pendelsensorik erste Bestimmungsmittel zum Bestimmen und/oder Schätzen einer Verkippung des Lastaufnahmemittels aus den Beschleunigungs- und Drehratensignalen der Inertialmeßeinrichtung und zweite Bestimmungsmittel zum Bestimmen der Auslenkung des Hubseils und/oder des Lastaufnahmemittels gegenüber der Vertikalen aus der ermittelten Verkippung des Lastaufnahmemittels und einer Inertial-Beschleunigung des Lastaufnahmemittels aufweisen.

Die genannten ersten Bestimmungsmittel können insbesondere einen Komplementärfilter mit einem Hochpass-Filter für das Drehratensignal der Inertialmeßeinrichtung und einen Tiefpass-Filter für das Beschleunigungssignal der Inertialmeßeinrichtung oder ein daraus abgeleitetes Signal aufweisen, wobei der genannte Komplementärfilter dazu ausgebildet sein kann, eine drehratengestützte Schätzung der Verkippung des Lastaufnahmemittels, die auf dem hochpassgefilterten Drehratensignal basiert, und eine beschleunigungsgestützte Schätzung der Verkippung des Lastaufnahmemittels, die auf dem tiefpassgefilterten Beschleunigungssignal basiert, miteinander zu verknüpfen und aus den verknüpften drehraten- und beschleunigungsgestützten Schätzungen der Verkippung des Lastaufnahmemittels die gesuchte Verkippung des Lastaufnahmemittels zu bestimmen.

Dabei kann die drehratengestützte Schätzung der Verkippung des Lastaufnahmemittels eine Integration des hochpassgefilterten Drehratensignals umfassen.

Die beschleunigungsgestützte Schätzung der Verkippung des Lastaufnahmemittels kann auf dem Quotienten einer gemessenen Horizontalbeschleunigungskomponente und einer gemessenen Vertikalbeschleunigungskomponente beruhen, aus dem die beschleunigungsgestützte Schätzung der Verkippung anhand der Beziehung

$$\varepsilon_{\beta,a} = \arctan\left(\frac{_K a_x}{_K a_z}\right)$$ . gewonnen wird.

Die zweiten Bestimmungsmittel zum Bestimmen der Auslenkung des Lasthakens bzw. des Hubseils gegenüber der Vertikalen anhand der ermittelten Verkippung des Lasthakens kann eine Filter- und/oder Beobachtereinrichung aufweisen, die als Eingangsgröße die ermittelte Verkippung des Lastaufnahmemittels berücksichtigt und aus einer Inertialbeschleunigung am Lastaufnahmemittel die Auslenkung des Hubseils und/oder des Lastaufnahmemittels gegenüber der Vertikalen bestimmt.

Die genannte Filter- und/oder Beobachtereinrichtung kann insbesondere einen Kalman-Filter, insbesondere einen erweiterten Kalman-Filter, umfassen.

Alternativ oder zusätzlich zu einem solchen Kalman-Filter können die zweiten Bestimmungsmittel auch eine Berechnungseinrichtung zum Berechnen der Auslenkung des Hubseils und/oder des Lastaufnahmemittels gegenüber der Vertikalen aus einer statischen Beziehung der Beschleunigungen, insbesondere aus dem Quotienten einer horizontalen Inertialbeschleunigung und der Erdbeschleunigung aufweisen.

Die Erfassungseinrichtung für die Positionserfassung des Lasthakens kann vorteilhafterweise auch eine bildgebende Sensorik, beispielsweise eine Kamera umfassen, die vom Aufhängungspunkt des Hubseils, beispielsweise der Laufkatze, im Wesentlichen senkrecht nach unten blickt. Eine Bildauswerteeinrichtung kann in dem von der bildgebenden Sensorik bereitgestellten Bild den Kranhaken identifizieren und dessen Exzentrizität bzw. dessen Verschiebung aus dem Bildzentrum heraus bestimmen, welche ein Maß für die Auslenkung des Kranhakens gegenüber der Vertikalen ist und damit das Lastpendeln charakterisiert. Alternativ oder zusätzlich kann ein gyroskopischer Sensor den Hubseil-Abzugwinkel vom Ausleger und/oder gegenüber der Vertikalen erfassen und dem Kalman-Filter zuführen.

Um eine bessere Pendeldämpfung zu erzielen, kann bei den pendeldämpfenden Maßnahmen nicht nur die eigentliche Pendelbewegung des Seils an sich zu berücksichtigt werden, sondern auch die Dynamik der Kranstruktur bzw. des Stahlbaus des Krans und dessen Antriebsstränge. Der Kran wird nicht mehr als unbeweglicher Starrkörper angenommen, der Antriebsbewegungen der Antriebseinrichtungen unmittelbar und identisch, d.h. 1:1 in Bewegungen des Aufhängungspunktes des Hubseils umsetzt. Stattdessen betrachtet die Pendeldämpfungseinrichtung den Kran als weiche Struktur, die in ihren Stahlbau- bzw. Strukturteilen wie beispielsweise dem Turmgitter und dem Ausleger, und in ihren Antriebssträngen Elastizitäten und Nachgiebigkeiten bei Beschleunigungen zeigt, und berücksichtigt diese Dynamik der Strukturteile des Krans bei der pendeldämpfenden Beeinflussung der Ansteuerung der Antriebseinrichtungen.

Dabei wird mittels eines geschlossenen Regelkreises sowohl die Pendeldynamik als auch die Strukturdynamik aktiv gedämpft. Insbesondere wird die gesamte Systemdynamik als Verkopplung der Pendel-, Antriebs- und Strukturdynamik des Turmdrehkrans aktiv geregelt, um die Nutzlast entsprechend der Sollvorgaben zu bewegen. Dabei werden Sensoren einerseits zur Messung von Systemgrößen der Pendeldynamik sowie andererseits zur Messung von Systemgrößen der Strukturdynamik eingesetzt, wobei nicht messbare Systemgrößen in einem modellbasierten Beobachter als Systemzustände geschätzt werden können. Die Stellsignale für die Antriebe werden durch eine modellbasierte Regelung als Zustandsrückführung der Systemzustände berechnet, wodurch ein Regelkreis geschlossen wird und sich eine veränderte Systemdynamik ergibt. Die Regelung ist derart ausgebildet, dass die Systemdynamik des geschlossenen Regelkreises stabil ist und Regelfehler schnell ausgeglichen werden.

Vorteilhafterweise ist ein geschlossener Regelkreis an dem Kran, insbesondere Turmdreh- oder Brückenkran, mit Strukturdynamik durch die Rückführung von Messungen nicht nur der Pendeldynamik, sondern ebenfalls der Strukturdynamik vorgesehen. Die Pendeldämpfungseinrichtung umfasst neben der Pendelsensorik zum Erfassen von Hubseil- und/oder Lastaufnahmemittel-Bewegungen auch eine Strukturdynamik-Sensorik zum Erfassen von dynamischen Verformungen und Bewegungen der Kranstruktur bzw. zumindest Strukturbauteilen hiervon, wobei der Reglerbaustein der Pendeldämpfungseinrichtung, der das Ansteuern der Antriebseinrichtung pendeldämpfend beeinflusst, dazu ausgebildet ist, beim Beeinflussen der Ansteuerung der Antriebseinrichtungen sowohl die von der Pendelsensorik erfaßten Pendelbewegungen als auch die von der Strukturdynamik-Sensorik erfassten dynamischen Verformungen der Strukturbauteile des Krans zu berücksichtigen. Dem geschlossenen Regelkreis werden sowohl die Pendelsensorsignale als auch die Strukturdynamik-Sensorsignale rückgeführt.

Die Pendeldämpfungseinrichtung betrachtet also die Kran- bzw. Maschinenstruktur nicht als starre, sozusagen unendlich steife Struktur, sondern geht von einer elastisch verformbaren und/oder nachgiebigen und/oder relativ weichen Struktur aus, die - zusätzlich zu den Stellbewegungsachsen der Maschine wie beispielsweise der Auslegennrippachse oder der Turmdrehachse - Bewegungen und/oder Positionsänderungen durch Verformungen der Strukturbauteile zulässt.

Die Berücksichtigung der In-Sich-Beweglichkeit der Maschinenstruktur infolge von Strukturverformungen unter Last oder dynamischen Belastungen ist gerade bei langgestreckten, schlanken und von den statischen und dynamischen Randbedingungen her bewusst - unter Berücksichtigung der notwendigen Sicherheiten - ausgereizten Strukturen wie bei Turmdrehkranen oder Teleskopkranen von Bedeutung, da hier spürbare Bewegungsanteile beispielsweise für den Ausleger und damit die Lasthakenposition durch die Verformungen der Strukturbauteile hinzukommen. Um die Pendelursachen besser bekämpfen zu können, berücksichtigt die Pendeldämpfung solche Verformungen und Bewegungen der Maschinenstruktur unter dynamischen Belastungen.

Hierdurch können beträchtliche Vorteile erreicht werden:
Zunächst wird die Schwingungsdynamik der Strukturbauteile durch das Regelverhalten der Steuereinrichtung reduziert. Dabei wird durch das Fahrverhalten die Schwingung aktiv gedämpft bzw. durch das Regelverhalten erst gar nicht angeregt.

Ebenso wird der Stahlbau geschont und weniger beansprucht. Insbesondere Stoßbelastungen werden durch das Regelverhalten reduziert.

Ferner kann durch dieses Verfahren der Einfluss des Fahrverhaltens definiert werden.

Durch die Kenntnisse der Strukturdynamik und das Reglerverfahren kann insbesondere die Nickschwingung reduziert und gedämpft werden. Dadurch verhält sich die Last ruhiger und schwankt später in Ruhelage nicht mehr auf und ab. Auch Querpendelbewegungen in Umfangsrichtung um die aufrechte Auslegerdrehachse können durch Berücksichtigung von Turmtorsion und Ausleger-Schwenkbiegeverformungen besser kontrolliert werden.

Die vorgenannten elastischen Verformungen und Bewegungen der Strukturbauteile und Antriebsstränge und die sich hierdurch einstellenden Eigenbewegungen können grundsätzlich in verschiedener Art und Weise bestimmt werden.

Insbesondere kann die hierzu vorgesehene Strukturdynamik-Sensorik dazu ausgebildet sein, elastische Verformungen und Bewegungen von Strukturbauteilen unter dynamischen Belastungen zu erfassen.

Eine solche Strukturdynamik-Sensorik kann beispielsweise Verformungssensoren wie Dehnungsmessstreifen am Stahlbau des Krans, beispielsweise den Gitterfachwerken des Turms und/oder des Auslegers umfassen.

Alternativ oder zusätzlich können Drehratensensoren, insbesondere in Form von Gyroskopen, Gyrosensoren und/oder Gyrometern, und/oder Beschleunigungs- und/oder Geschwindigkeitssensoren vorgesehen sein, um bestimmte Bewegungen von Strukturbauteilen wie beispielsweise Nickbewegungen der Auslegerspitze und/oder rotatorische Dynamikeffekte am Ausleger und/oder Torsions- und/oder Biegebewegungen des Turms zu erfassen.

Weiterhin können Neigungssensoren vorgesehen sein, um Neigungen des Auslegers und/oder Neigungen des Turms, insbesondere Auslenkungen des Auslegers aus der Horizontalen und/oder Auslenkungen des Turms aus der Vertikalen zu erfassen.

Grundsätzlich kann die Strukturdynamik-Sensorik dabei mit verschiedenen Sensortypen arbeiten, insbesodere auch verschieden Sensortypen miteinander kombinieren. Vorteilhafterweise können Dehnungsmesstreifen und/oder Beschleinigungssensoren und/oder Drehratensensoren, insbesondere in Form von Gyroskopen, Gyrosensoren und/oder Gyrometern, zum Erfassen der Verformungen und/oder dynamischen Insich-Bewegungen von Strukturbauteilen des Krans verwendet werden, wobei die Beschleunigungssensoren und/oder Drehratensensoren vorzugsweise dreiachsig erfassend ausgebildet sind.

Solche Strukturdynamiksensoren können am Ausleger können und/oder am Turm, insbesondere an dessen oberen Abschnitt, an dem der Ausleger gelagert ist, vorgesehen sein, um die Dynamik des Turms zu erfassen. Beispielsweise führen ruckartige Hubbewegungen zu Nickbewegungen des Auslegers, die mit Biegebewegungen des Turm einhergehen, wobei eine Nachschwingen des Turm wiederum zu Nickschwingungen des Auslegers führt, was mit entsprechenden Lasthakenbewegungen einhergeht.

Insbesondere kann eine Winkelsensorik zur Bestimmung des Differenzdrehwinkels zwischen einem oberen Turmendabschnitt und dem Ausleger vorgesehen sein, wobei bspw. am oberen Turmendabschnitt und am Ausleger jeweils ein Winkelsensor angebracht sein kann, deren Signale bei einer Differenzbetrachtung den genannten Differenzdrehwinkel angeben können. Ferner kann vorteilhafterweise auch ein Drehratensensor zur Bestimmung der Drehgeschwindigkeit des Auslegers und/oder des oberen Turmendabschnitts vorgesehen sein, um in Verbindung mit dem vorgenannten Differenzdrehwinkel den Einfluss der Turmtorsionsbewegung bestimmen zu können. Hieraus kann einerseits eine genauere Lastpositionsschätzung, andererseits aber auch eine aktive Dämpfung der Turmtorsion im laufenden Betrieb erreicht werden.

In vorteilhafter Weiterbildung der Erfindung können zwei- oder dreiachsige Drehratensensoren und/oder Beschleunigungssensoren an der Auslegerspitze und/oder an dem Ausleger im Bereich der aufrechten Krandrehachse angebracht werden, um strukturdynamische Bewegungen des Auslegers bestimmen zu können.

Alternativ oder zusätzlich können auch den Antriebssträngen Bewegungs- und/oder Beschleunigungssensoren zugeordnet sein, um die Dynamik der Antriebsstränge erfassen zu können. Beispielsweise können den Umlenkrollen der Laufkatze für das Hubseil und/oder Umlenkrollen für ein Abspannseil eines Wippauslegers Drehgeber zugeordnet sein, um die tatsächliche Seilgeschwindigkeit am relevanten Punkt erfassen zu können.

Vorteilhafterweise sind auch den Antriebseinrichtungen selbst geeignete Bewegungs- und/oder Geschwindigkeits- und/oder Beschleunigungssensoren zugeordnet, um die Antriebsbewegungen der Antriebseinrichtungen entsprechend erfassen und in Zusammenhang mit den abgeschätzten und/oder erfassten Verformungen der Strukturbauteile bzw. des Stahlbaus und Nachgiebigkeiten in den Antriebssträngen setzen zu können.

Insbesondere kann durch einen Abgleich der Signale der den Antriebseinrichtungen direkt zugeordneten Bewegungs- und/oder Beschleunigunssensoren mit den Signalen der Strukturdynamik-Sensoren in Kenntnis der Strukturgeometrie der Bewegungs-und/oder Beschleunigungsanteil an einem Strukturteil bestimmt werden, der auf eine dynamische Verformung bzw. Verwindung der Kranstruktur zurückgeht und zusätzlich zur eigentlichen Kranbewegung, wie sie von der Antriebsbewegung induziert ist und auch bei einem vollständig steifen, starren Kran aufträte. Wird beispielsweise das Drehwerk eines Turmdrehkrans um 10° verstellt, an der Auslegerspitze aber nur eine Verdrehung um 9° erfaßt, kann auf eine Torsion des Turms und/oder eine Biegeverformung des Auslegers rückgeschlossen werden, was gleichzeitig wiederum mit bspw. dem Verdrehsignal eines an der Turmspitze angebrachten Drehratensensors abgeglichen werden kann, um zwischen Turmtorsion und Auslegerbiegung differenzieren zu können. Wird der Lasthaken vom Hubwerk um einen Meter angehoben, am Ausleger im aber gleichzeitig eine Nickbewegung nach unten um bspw. 1° festgestellt, kann unter Berücksichtigung der Ausladung der Laufkatze auf die tatsächliche Lasthakenbewegung geschlossen werden.

Vorteilhafterweise kann die Strukturdynamik-Sensorik verschiedene Bewegungsrichtungen der Strukturverformungen erfassen. Insbesondere kann die Strukturdynamik-Sensorik zumindest einen Radialdynamik-Sensor zum Erfassen von dynamischen Bewegungen der Kranstruktur in einer aufrechten Ebene parallel zum Kranausleger, und zumindest einen Schwenkdynamiksensor zum Erfassen von dynamischen Bewegungen der Kranstruktur um eine aufrechte Krandrehachse, insbesondere Turmachse aufweisen. Der Reglerbaustein der Pendeldämpfungseinrichtung kann dabei dazu ausgebildet sein, die Ansteuerung der Antriebseinrichtungen, insbesondere eines Katzantriebs und Drehwerkantriebs, in Abhängigkeit der erfassten dynamischen Bewegungen der Kranstruktur in der aufrechten, auslegerparallelen Ebene, insbesondere parallel zur Auslegerlängsrichtung, und der erfassten dynamischen Bewegungen der Kranstruktur um die aufrechte Krandrehachse zu beeinflussen.

Ferner kann die Strukturdynamik-Sensorik zumindest einen Hubdynamik-Sensor zum Erfassen von vertikalen dynamischen Verformungen des Kranauslegers aufweisen und der Reglerbaustein der Pendeldämpfungseinrichtung dazu ausgebildet sein, die Ansteuerung der Antriebseinrichtungen, insbesondere eines Hubwerkantriebs, in Abhängigkeit der erfassten vertikalen dynamischen Verformungen des Kranauslegers zu beeinflussen.

Vorteilhafterweise ist die Strukturdynamik-Sensorik dazu ausgebildet, alle Eigenmoden der dynamischen Verwindungen des Kranauslegers und/oder des Kranturms, deren Eigenfrequenzen in einem vorbestimmten Frequenzbereich liegen, zu erfassen. Hierzu kann die Strukturdynamik-Sensorik zumindest einen, vorzugsweise mehrere Turmsensor(en), der/die beabstandet von einem Knotenpunkt einer Turmeigenschwingung angeordnet ist, zum Erfassen von Turmverwindungen sowie zumindest einen, vorzugsweise mehrere Auslegersensor(en), der/die beabstandet von einem Knotenpunkt einer Auslegereigenschwingung angeordnet ist, zum Erfassen von Auslegerverwindungen aufweisen.

Insbesondere können mehrere Sensoren zur Erfassung einer Strukturbewegung so platziert sein, dass eine Beobachtbarkeit aller Eigenmoden gewährleistet ist, deren Eigenfrequenzen im relevanten Frequenzbereich liegen. Hierzu kann grundsätzlich ein Sensor pro Pendel-Bewegungs-Richtung genügen, in der Praxis empfiehlt sich aber der Einsatz mehrerer Sensoren. Beispielsweise führt die Platzierung eines einzelnen Sensors in einem Knotenpunkt der Messgröße einer Struktur-Eigenmode (z.B. Position der Laufkatze an einem Drehungs-Knotenpunkt der ersten Ausleger-Eigenmode) führt zum Verlust der Beobachtbarkeit, was sich durch Hinzunahme eines Sensors an einer anderen Position vermeiden lässt. Insbesondere ist die Verwendung von dreiachsigen Drehratensensoren oder Beschleunigungssensoren an der Auslegerspitze sowie auf dem Ausleger nahe des Drehwerks empfehlenswert.

Die Strukturdynamik-Sensorik kann zum Erfassen der Eigenmoden grundsätzlich mit verschiedenen Sensortypen arbeiten, insbesodere auch verschieden Sensortypen miteinander kombinieren. Vorteilhafterweise können gie zuvor genannten Dehnungsmessstreifen und/oder Beschleinigungssensoren und/oder Drehratensensoren, insbesondere in Form von Gyroskopen, Gyrosensoren und/oder Gyrometern, zum Erfassen der Verformungen und/oder dynamischen Insich-Bewegungen von Strukturbauteilen des Krans verwendet werden, wobei die Beschleunigungssensoren und/oder Drehratensensoren vorzugsweise dreiachsig erfassend ausgebildet sind.

Insbesondere kann die Strukturdynamik-Sensorik zumindest einen Drehratenund/oder Beschleunigungssensor und/oder Dehnungsmessstreifen zum Erfassen von dynamischen Turmverformungen und zumindest einen Drehraten- und/oder Beschleunigungssensor und/oder Dehnungsmessstreifen zum Erfassen von dynamischen Auslegerverformungen aufweisen. Vorteilhafterweise können Drehratenund/oder Beschleunigungssensoren an verschiedenen Turmabschnitten, insbesondere zumindest an der Turmspitze und am Anlenkpunkt des Auslegers und ggf. in einem Turmmittelabschnitt unterhalb des Auslegers vorgesehen sein. Alternativ oder zusätzlich können Drehraten- und/oder Beschleunigungssensoren an verschiedenen Abschnitten des Auslegers, insbesondere zumindest an der Auslegerspitze und/oder der Laufkatze und/oder dem Auslegerfuß, an dem der Ausleger angelenkt ist, und/oder an einem Auslegerabschnitt beim Hubwerk vorgesehen sein. Vorteilhafterweise sind die genannten Sensoren derart am jeweiligen Strukturbauteil angeordnet, dass sie die Eigenmoden von dessen elastischen Verwindungen erfassen können.

In Weiterbildung der Erfindung kann die Pendeldämpfungseinrichtung auch eine Schätzeinrichtung umfassen, die Verformungen und Bewegungen der Maschinenstruktur unter dynamischen Belastungen, die sich in Abhängigkeit von am Steuerstand eingegegebenen Steuerbefehlen und/oder in Abhängigkeit von bestimmten Ansteueraktionen der Antriebseinrichtungen und/oder in Abhängigkeit bestimmter Geschwindigkeits- und/oder Beschleunigungprofile der Antriebseinrichtungen ergeben, unter Berücksichtigung von die Kranstruktur charakterisierenden Gegebenheiten abschätzt. Insbesondere können mittels einer solchen Schätzeinrichtung Systemgrößen der Strukturdynamik, ggf. auch der Pendeldynamik geschätzt werden, die nicht oder nur schwer sensorisch erfasst werden können.

Eine solche Schätzeinrichtung kann beispielsweise auf ein Datenmodell zugreifen, in dem Strukturgrößen des Krans wie Turmhöhe, Auslegerlänge, Steifigkeiten, Flächenträgheitsmomente und ähnliches abgelegt und/oder miteinander verknüpft sind, um dann anhand einer konkreten Lastsituation, also Gewicht der am Lasthaken aufgenommenen Last und momentane Ausladung, abzuschätzen, welche dynamischen Effekte, das heißt Verformungen im Stahlbau und in den Antriebssträngen für eine bestimmte Betätigung einer Antriebseinrichtung ergeben. In Abhängigkeit einer solchermaßen geschätzten dynamischen Wirkung kann die Pendeldämpfungseinrichtung dann in die Ansteuerung der Antriebseinrichtungen eingreifen und die Stellgrößen der Antriebsregler der Antriebseinrichtungen beeinflussen, um Pendelbewegungen des Lasthakens und des Hubseils zu vermeiden bzw. zu reduzieren.

Insbesondere kann die Bestimmungseinrichtung zur Bestimmung solcher Strukturverformungen eine Berechnungseinheit aufweisen, die diese Strukturverformungen und sich daraus ergebende Strukturteilbewegungen anhand eines gespeicherten Berechnungsmodells in Abhängigkeit der am Steuerstand eingegebenen Steuerbefehle berechnet. Ein solches Modell kann ähnlich einem Finite-Elemente-Modell aufgebaut sein oder ein Finite-Elemente-Modell sein, wobei vorteilhafterweise jedoch ein gegenüber einem Finite-Elemente-Modell deutlich vereinfachtes Modell verwendet wird, das beispielsweise empirisch durch Erfassung von Strukturverformungen unter bestimmten Steuerbefehlen und/oder Belastungszuständen am echten Kran bzw. der echten Maschine bestimmt werden kann. Ein solches Berechnungsmodell kann beispielsweise mit Tabellen arbeiten, in denen bestimmten Steuerbefehlen bestimmte Verformungen zugeordnet sind, wobei Zwischenwerte der Steuerbefehle mittels einer Interpolationsvorrichtung in entsprechende Verformungen umgerechnet werden können.

Gemäß einem weiteren vorteilhaften Aspekt der Erfindung kann der Reglerbaustein im geschlossenen Regelkreis eine Filtereinrichtung bzw. einen Beobachter umfassen, der einerseits die strukturdynamischen Kranreaktionen und die Hubseil- bzw. Lasthakenpendelbewegungen beobachtet, wie sie von der Strukturdynamik-Sensorik und der Pendelsensorik erfaßt werden und sich bei bestimmten Stellgrößen der Antriebsregler einstellen, so dass die Beobachter- bzw. Filtereinrichtung unter Berücksichtigung vorbestimmter Gesetzmäßigkeiten eines Dynamikmodells des Krans, das grundsätzlich verschieden beschaffen sein kann und durch Analyse und Simulation des Stahlbaus gewonnen werden kann, anhand der beobachteten Kranstruktur- und Pendelreaktionen die Stellgrößen des Reglers beeinflussen kann.

Eine solche Filter- bzw. Beobachtereinrichtung kann insbesondere in Form eines sogenannten Kalmanfilters ausgebildet sein, dem als Eingangsgröße einerseits die Stellgrößen der Antriebsregler des Krans und andererseits sowohl die Pendelsignale der Pendelsensorik als auch die dem Regelkreis rückgeführten Strukturdynamiksignale, die Verformungen und/oder dynamische Insich-Bewegungen der Strukturbauteile angeben, zugeführt werden und der aus diesen Eingangsgrößen anhand von Kalman-Gleichungen, die das Dynamiksystem der Kranstruktur, insbesondere dessen Stahlbauteile und Antriebsstränge, modellieren, die Stellgrößen der Antriebsregler entsprechend beeinflusst, um die gewünschte pendeldämpfende Wirkung zu erzielen.

In dem Kalman-Filter sind vorteilhafterweise erfasste und/oder geschätzte und/oder berechnete und/oder simulierte Funktionen, die die Dynamik der Strukturbauteile des Krans charakterisieren, implementiert.

Insbesondere werden mittels der Strukturdynamik-Sensorik erfaßte dynamische Auslegerverformungen und Turmverformungen sowie die mittels der Pendel-Sensorik erfaßte Position des Lasthakens, insbesondere auch dessen Schrägzug gegenüber der Vertikalen, das heißt die Auslenkung des Hubseils gegenüber der Vertikalen, dem genannten Kalmanfilter zugeführt.

Nach einem weiteren vorteilhaften Aspekt der Erfindung kommt bei der Pendeldämpfung eine Zwei-Freiheitsgrade-Regelungsstruktur zum Einsatz, durch welche die oben beschriebene Zustandsrückführung (feedback) um eine Vorsteuerung (feedforward) ergänzt wird. Dabei dient die Zustandsrückführung zur Sicherstellung der Stabilität und zum schnellen Ausgleich von Regelfehlern, die Vorsteuerung dagegen einem guten Führungsverhalten durch das im Idealfall gar keine Regelfehler auftreten.

Die Vorsteuerung kann dabei vorteilhafterweise über die per se bekannte Methode der differentiellen Flachheit bestimmt werden. Bezüglich der genannten Methode der differentiellen Flachheit wird auf die Dissertation "Anwendung der flachheitsbasierten Analyse und Regelung nichtlinearer Mehrgrößensysteme", von Ralf Rothfuß, VDI-Verlag, 1997, verwiesen, die insoweit, d.h. bezüglich der genannten Methode der differentiellen Flachheit, zum Gegenstand der vorliegenden Offenbarung gemacht wird.

Da die Auslenkungen der Strukturbewegungen im Gegensatz zu den angetriebenen Kranbewegungen sowie den Pendelbewegungen nur klein sind, kann zur Bestimmung der Vorsteuerung die Strukturdynamik vernachlässigt werden, wodurch der Kran, insbesondere Turmdrehkran als flaches System mit den Lastkoordinaten als flache Ausgänge dargestellt werden kann.

Vorteilhafterweise wird also die Vorsteuerung sowie die Berechnung der Referenz-Zustände der Zwei-Freiheitsgrade-Struktur im Gegensatz zur feed back Regelung des geschlossenen Regelkreises unter Vernachlässigung der Strukturdynamik berechnet, d.h. der Kran wird für die Zwecke der Vorsteuerung als starre bzw. sozusagen unendlich steife Struktur angenommen. Aufgrund der kleinen Auslenkungen der elastischen Struktur, die im Vergleich zu den von den Antrieben auszuführenden Kranbewegungen sehr klein sind, führt dies nur zu sehr kleinen und daher vernachlässigbaren Abweichungen der Vorsteuerung. Dafür wird jedoch die Beschreibung des - für die Zwecke der Vorsteuerung als starr angenommenen Turmdrehkrans, insbesondere Turmdrehkrans als ein flaches System ermöglicht, welches leicht invertierbar ist. Die Koordinaten der Lastposition sind flache Ausgänge des Systems. Aus den flachen Ausgängen und ihren zeitlichen Ableitungen kann der notwendige Sollverlauf der Stellgrößen sowie der Systemzustände exakt algebraisch berechnet werden (inverses System) - ohne Simulation oder Optimierung. Damit kann die Last ohne Überschwingen an eine Zielposition gebracht werden.

Die für die flachheitsbasierte Vorsteuerung benötigte Lastposition und deren Ableitungen können vorteilhafterweise von einem Trajektorienplanungs-Modul und/oder durch eine Sollwert-Filterung berechnet werden. Wird nun über eine Trajektorienplanung oder eine Sollwertfilterung ein Sollverlauf für die Lastposition und deren erste vier Zeitableitungen bestimmt, so können daraus in der Vorsteuerung über algebraische Gleichungen der exakte Verlauf der notwendigen Stellsignale zur Ansteuerung der Antriebe, sowie der exakte Verlauf der entsprechenden Systemzustände berechnet werden.

Um durch die Vorsteuerung keine Strukturbewegungen anzuregen, können vorteilhafterweise Kerbfilter zwischen Trajektorienplanung und Vorsteuerung geschaltet werden, um aus dem geplanten Trajektoriensignal die anregbaren Eigenfrequenzen der Strukturdynamik zu eliminieren.

Das der Regelung zugrundeliegende Modell kann grundsätzlich verschieden beschaffen sein. Vorteilhafterweise wird eine kompakte Darstellung der gesamten Systemdynamik als verkoppelte Pendel-, Antriebs- und Strukturdynamik verwendet, die sich als Grundlage für den Beobachter und die Regelung eignet. In vorteilhafter Weiterbildung der Erfindung wird das Kranregelungsmodel durch ein Modellierungs-Verfahren bestimmt, bei dem die gesamte Krandynamik in weitgehend unabhängige Teile aufgetrennt wird, und zwar vorteilhafterweise für einen Turmdrehkran in einen Teil aller Bewegungen, die im Wesentlichen durch einen Drehwerk-Antrieb angeregt werden (Schwenkdynamik), einen Teil aller Bewegungen, die im Wesentlichen durch einen Katzwerk-Antrieb angeregt werden (Radialdynamik) und die Dynamik in Richtung des Hubseils, welche durch einen Windwerk-Antrieb angeregt wird.

Die unabhängige Betrachtung dieser Teile unter Vernachlässigung der Verkopplungen erlaubt eine Berechnung der Systemdynamik in Echtzeit und vereinfacht insbesondere die kompakte Darstellung der Schwenkdynamik als ein verteiltparametrisches System (beschrieben durch eine lineare partielle Differentialgleichung), das die Strukturdynamik des Auslegers exakt beschreibt und über bekannte Methoden leicht auf die benötigte Anzahl an Eigenmoden reduziert werden kann.

Die Antriebsdynamik wird dabei vorteilhafterweise als Verzögerungsglied 1. Ordnung oder als statischer Verstärkungsfaktor modelliert, wobei den Antrieben als Stellgröße ein Drehmoment, eine Drehgeschwindigkeit, eine Kraft oder eine Geschwindigkeit vorgegeben werden kann. Durch die unterlagerte Regelung im Frequenzumrichter des jeweiligen Antriebs wird diese Stellgröße eingeregelt.

Die Pendeldynamik kann als idealisiertes einfaches / doppeltes Fadenpendel modelliert mit ein / zwei punktförmigen Lastmassen und einem / zwei einfachen Seilen, die entweder als masselos angenommen werden, oder als massebehaftet mit modaler Ordnungsreduktion auf die wichtigsten Seil-Eigenmoden.

Die Strukturdynamik kann durch Approximation der Stahlstruktur in Form kontinuierlicher Balken als verteiltparametrisches Modell hergeleitet werden, das durch bekannte Methoden diskretisiert und in der Systemordnung reduziert werden kann, wodurch es eine kompakte Form annimmt, schnell berechnet werden kann und den Beobachter- und Regelungsentwurf vereinfacht.

Die genannte Pendeldämpfeinrichtung kann bei manueller Betätigung des Krans durch Betätigung entsprechender Bedienelemente wie Joysticks und dergleichen die Eingabebefehle des Kranführers überwachen und bei Bedarf übersteuern, insbesondere in dem Sinne, dass vom Kranführer beispielsweise zu stark vorgegebene Beschleunigungen reduziert werden oder auch Gegenbewegungen automatisch eingeleitet werden, wenn eine vom Kranführer vorgegebene Kranbewegung zu einem Pendeln des Lasthakens geführt hat oder führen würde. Der Reglerbaustein versucht dabei vorteilhafterweise, so nahe wie möglich an den vom Kranführer gewünschten Bewegungen und Bewegungsprofilen zu bleiben, um dem Kranführer ein Gefühl der Kontrolle zu geben, und übersteuert die Manuell eingegebenen Stellsignale nur soweit es nötig ist, um die gewünschte Kranbewegung möglichst pendel- und schwingungsfrei auszuführen.

Alternativ oder zusätzlich kann die Pendeldämpfungseinrichtung auch bei einer automatisierten Betätigung des Krans eingesetzt werden, bei der die Steuervorrichtung des Krans im Sinne eines Autopiloten das Lastaufnahmemittel des Krans automatisch zwischen zumindest zwei Zielpunkten entlang eines Verfahrwegs verfährt. Bei einem solchen Automatikbetrieb, bei dem ein Verfahrweg-Bestimmungsmodul der Steuervorrichtung einen gewünschten Verfahrweg beispielsweise im Sinne einer Bahnsteuerung bestimmt und ein automatisches Verfahrsteuermodul der Steuervorrichtung die Antriebsregler bzw. Antriebseinrichtungen so ansteuert, dass der Lasthaken entlang des bestimmten Verfahrwegs verfahren wird, kann die Pendeldämpfungseinrichtung in die Ansteuerung der Antriebsregler durch das genannte Verfahrsteuermodul eingreifen, um den Kranhaken pendelfrei zu verfahren bzw. Pendelbewegungen zu dämpfen.

Die Erfindung wird nachfolgend anhand eines bevorzugten Ausführungsbeispiels und zugehöriger Zeichnungen näher erläutert. In den Zeichnungen zeigen:

Fig. 1:    eine schematische Darstellung eines Turmdrehkrans, bei dem die Lasthakenposition und ein Seilwinkel gegenüber der Vertikalen durch eine bildgebende Sensorik erfasst wird, und bei dem eine Pendeldämpfungseinrichtung die Ansteuerung der Antriebseinrichtungen beeinflusst, um Pendelbewegungen des Lasthakens und dessen Hubseils zu verhindern,

Fig. 2:    eine schematische Darstellung einer Zwei-Freiheitsgrade-Regelstruktur der Pendeldämpfungseinrichtung und die von dieser vorgenommene Beeinflussung der Stellgrößen der Antriebsregler,

Fig. 3:    eine schematische Darstellung von Verformungen und Schwingungsformen eines Turmdrehkrans unter Last und deren Dämpfung bzw. Vermeidung durch eine Schrägzugregelung, wobei die Teilansicht a.) eine Nickverformung des Turmdehkrans unter Last und einen damit verknüpften Schrägzug des Hubseils zeigt, die Teilansichten b.) und c.) eine Querverformung des Turmdrehkrans in perspektivischer Darstellung sowie in Draufsicht von oben zeigen, und die Teilansichten d.) und e.) einen mit solchen Querverformungen verknüpften Schrägzug des Hubseils zeigen,

Fig. 4:     eine schematische Darstellung eines elastischen Auslegers in einem mit der Drehrate rotierenden Referenzsystem,

Fig. 5:     eine schematische Darstellung eines Auslegers als kontinuierlicher Balken mit Einspannung in den Turm unter Berücksichtigung von Turmbiegung und Turmtorsion,

Fig. 6:     eine schematische Darstellung eines elastischen Turms und eines Feder-Masse-Ersatzmodells der Turmbiegung quer zum Ausleger,

Fig. 7:     eine schematische Darstellung der Pendeldynamik in Schwenkrichtung des Krans mit konzentrierter Lastmasse und masselosem Seil,

Fig. 8:     eine schematische Darstellung der drei wichtigsten Eigenmoden eines Turmdrehkrans,

Fig. 9:     eine schematische Darstellung der Pendeldynamik in Radialrichtung des Krans und dessen Modellierung mittels mehrerer verkoppelter Starrkörper,

Fig. 10:    eine schaematische Darstellung eines pendelnden Hubseils mit Lasthaken, an dem eine Inertialmesseinrichtung befestigt ist, die ihre Messignale drahtlos an einen Empfänger an der Laufkatze übermittelt, von der das Hubseil abläuft,

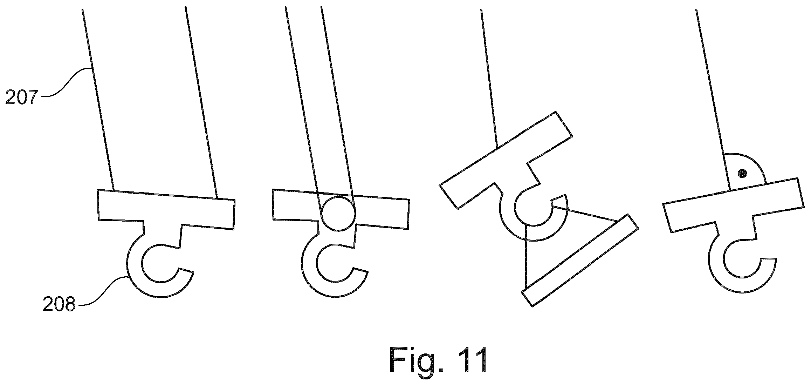

Fig. 11:    eine schematische Darstellung verschiedener Lasthaken zur Verdeutlichung der möglichen Verkippung des Lasthakens gegenüber dem Hubseil,

Fig. 12:    ein schematisches zweidimensionales Modell der Pendeldynanamik der Lasthakenaufhängung aus den beiden vorhergehenden Figuren,

Fig. 13:    eine Darstellung der Verkippung bzw. des Kippwinkels des Lasthakens, der die Rotation zwischen Inertial- und Lasthakenkoordinaten beschreibt,

Fig. 14:    ein Blockdiagramm eines Komplementär-Filters mit Hochpass- und Tiefpass-Filter zum Bestimmen der Verkippung des Lasthakens aus den Beschleunigungs- und Drehratensignalen der Inertialmesseinrichtung,

Fig. 15:    eine vergleichsweise Darstellung der mittels erweitertem Kaman-Filter und mittels statischer Abschätzung bestimmten Pendelwinkel-Verläufe im Vergleich zu dem an einem Kardangelenk gemessenen Pendelwinkelverlauf, und

Fig. 16:    eine schematische Darstellung einer Steuerungs- bzw. Regelungs-Struktur mit zwei Freiheitsgraden zur automatischen Beeinflussung der Antriebe, um Pendelschwingungen zu vermeiden.

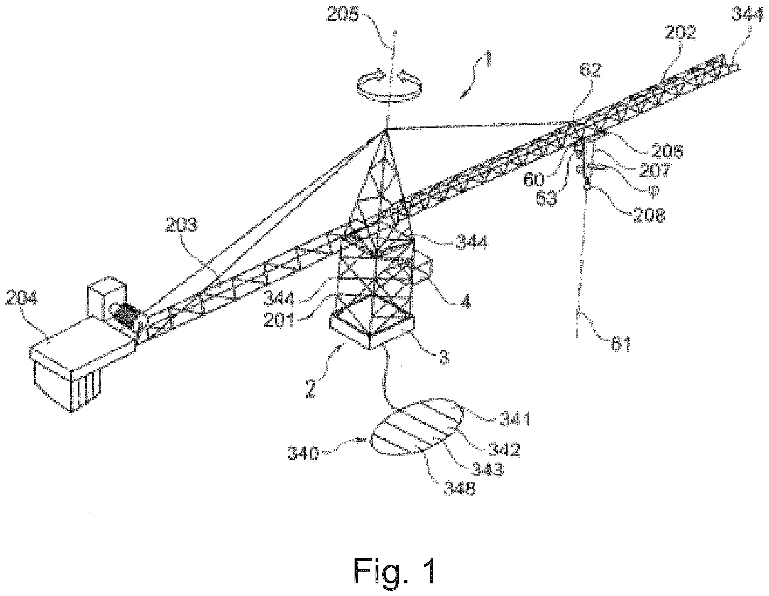

Wie Fig. 1 zeigt, kann der Kran als Turmdrehkran ausgebildet sein. Der in Fig. 1 gezeigte Turmdrehkran kann beispielsweise in an sich bekannter Weise einen Turm 201 aufweisen, der einen Ausleger 202 trägt, der von einem Gegenausleger 203 ausbalanciert wird, an dem ein Gegengewicht 204 vorgesehen ist. Der genannte Ausleger 202 kann zusammen mit dem Gegenausleger 203 um eine aufrechte Drehachse 205, die koaxial zur Turmachse sein kann, durch ein Drehwerk verdreht werden. An dem Ausleger 202 kann eine Laufkatze 206 durch einen Katzantrieb verfahren werden, wobei von der Laufkatze 206 ein Hubseil 207 abläuft, an dem ein Lasthaken 208 befestigt ist.

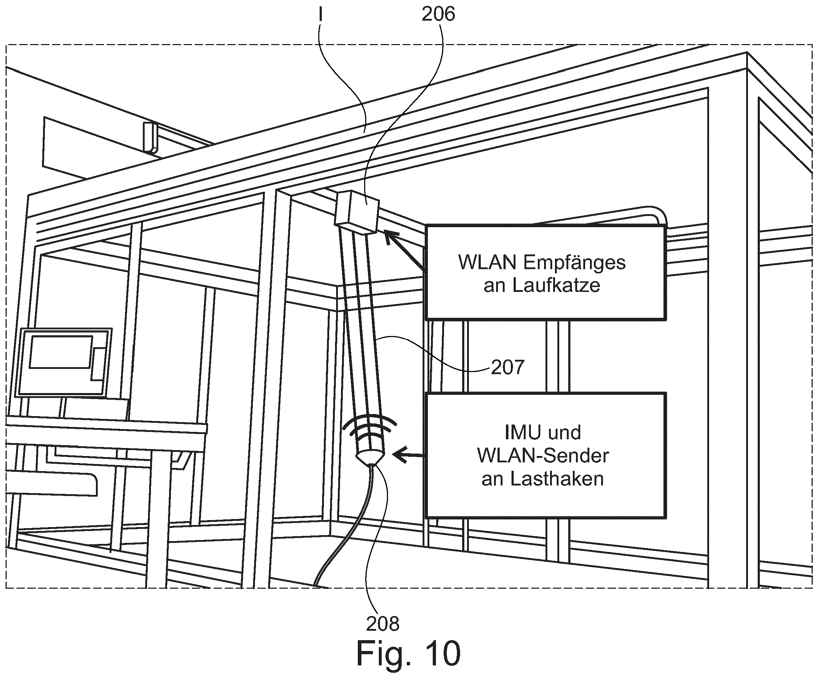

Wie Fig. 10 weiterhin zeigt, kann der Kran aber auch als Brückenkran ausgebildet sein.

Wie Fig. 1 ebenfalls zeigt, kann der Kran 2 - natürlich auch bei Ausbildung als Brückenkran oder sonstiger Kran - dabei eine elektronische Steuervorrichtung 3 aufweisen, die beispielsweise einen am Kran selbst angeordneten Steuerungsrechner umfassen kann. Die genannte Steuervorrichtung 3 kann hierbei verschiedene Stellglieder, Hydraulikkreise, Elektromotoren, Antriebsvorrichtungen und andere Arbeitsaggregate an der jeweiligen Baumaschine ansteuern. Dies können beispielsweise bei dem gezeigten Kran dessen Hubwerk, dessen Drehwerk, dessen Katzantrieb, dessen -ggf. vorhandener - Ausleger-Wippantrieb oder dergleichen sein.

Die genannte elektronische Steuervorrichtung 3 kann hierbei mit einem Endgerät 4 kommunizieren, das am Steuerstand bzw. in der Führerkabine angeordnet sein kann und beispielsweise die Form eines Tablets mit Touchscreen und/oder Joysticks, Drehknöpfe, Schiebeschalter und ähnliche Bedienelemente aufweisen kann, so dass einerseits verschiedene Informationen vom Steuerungsrechner 3 an dem Endgerät 4 angezeigt und umgekehrt Steuerbefehle über das Endgerät 4 in die Steuervorrichtung 3 eingegeben werden können.

Die genannte Steuervorrichtung 3 des Krans 1 kann insbesondere dazu ausgebildet sein, die genannten Antriebsvorrichtungen des Hubwerks, der Laufkatze und des Drehwerks auch dann anzusteuern, wenn eine Pendeldämpfungseinrichtung 340 pendelrelevante Bewegungsparameter erfaßt.

Hierzu kann der Kran 1 eine Pendelsensorik bzw. Erfassungseinrichtung 60 aufweisen, die einen Schrägzug des Hubseils 207 und/oder Auslenkungen des Lasthakens 208 gegenüber einer Vertikalen 61, die durch den Aufhängungspunkt des Lasthakens 208, d.h. die Laufkatze 206 geht, erfasst. Insbesondere kann der Seilzugwinkel φ gegen die Schwerkraftwirklinie, d.h. die Vertikale 62 erfaßt werden, vgl. Fig. 1.

Die Pendelsensorik 60 kann hierzu an der Laufkatze 206 eine Kamera 63 oder eine andere bildgebende Sensorik angebracht sein, die von der Laufkatze 206 senkrecht nach unten blickt, so dass bei unausgelenktem Lasthaken 208 dessen Bildwiedergabe im Zentrum des von der Kamera 63 bereitgestellten Bilds liegt. Wird indes der Lasthaken 208 gegenüber der Vertikalen 61 ausgelenkt, beispielsweise durch ruckhaftes Anfahren der Laufkatze 206 oder abruptes Bremsen des Drehwerks, wandert die Bildwiedergabe des Lasthakens 208 aus dem Zentrum des Kamerabilds heraus, was durch eine Bildauswerteeinrichtung 64 bestimmt werden kann.

Andereseits wird der Schrägzug des Hubseils bzw. die Auslenkung des Lasthakens gegenüber der Vertikalen auch mithilfe einer Inertialmesseinrichtung IMU bewerkstelligt, die am Lasthaken 208 angebracht wird und ihre Messignale vorzugsweise drahtlos zu einem Empfänger an der Laufkatze 206 übermitteln kann, vgl. Fig. 10. Die Inertialmesseinrichtung IMU und die Auswertung ihrer Beschleunigungs- und Drehratensignale wird später noch näher erläutert.

In Abhängigkeit der erfassten Auslenkung gegenüber der Vertikalen 61, insbesondere unter Berücksichtigung der Richtung und Größe der Auslenkung, kann die Steuervorrichtung 3 mithilfe der Pendeldämpfungseinrichtung 340 den Drehwerksantrieb und den Laufkatzenantrieb ansteuern, um die Laufkatze 206 wieder mehr oder minder exakt über den Lasthaken 208 zu bringen und Pendelbewegungen zu kompensieren, bzw. zu reduzieren oder gar nicht erst eintreten zu lassen.

Hierzu umfasst die Pendeldämpfungseinrichtung 340 eine Strukturdynamik-Sensorik 344 zum Bestimmen von dynamischen Verformungen von Strukturbauteilen, wobei der Reglerbaustein 341 der Pendeldämpfungseinrichtung 340, der das Ansteuern der Antriebseinrichtung pendeldämpfend beeinflusst, dazu ausgebildet ist, beim Beeinflussen der Ansteuerung der Antriebseinrichtungen die bestimmten dynamischen Verformungen der Strukturbauteile des Krans zu berücksichtigen.

Dabei kann auch eine Schätzeinrichtung 343 vorgesehen sein, die die Verformungen und Bewegungen der Maschinenstruktur unter dynamischen Belastungen, die sich in Abhängigkeit von am Steuerstand eingegegebenen Steuerbefehlen und/oder in Abhängigkeit von bestimmten Ansteueraktionen der Antriebseinrichtungen und/oder in Abhängigkeit bestimmter Geschwindigkeits- und/oder Beschleunigungsprofile der Antriebseinrichtungen ergeben, unter Berücksichtigung von die Kranstruktur charakterisierenden Gegebenheiten abschätzt. Insbesondere kann eine Berechnungseinheit 348 die Strukturverformungen und sich daraus ergebende Strukturteilbewegungen anhand eines gespeicherten Berechnungsmodells in Abhängigkeit der am Steuerstand eingegebenen Steuerbefehle berechnen.

Vorteilhafterweise erfasst die Pendeldämpfungseinrichtung 340 mittels der Strukturdynamik-Sensorik 344 solche elastischen Verformungen und Bewegungen von Strukturbauteilen unter dynamischen Belastungen. Eine solche Sensorik 344 kann beispielsweise Verformungssensoren wie Dehnungsmessstreifen am Stahlbau des Krans, beispielsweise den Gitterfachwerken des Turms 201 oder des Auslegers 202 umfassen. Alternativ oder zusätzlich können Beschleunigungs- und/oder Geschwindigkeitssensoren und/oder Drehratensensoren vorgesehen sein, um bestimmte Bewegungen von Strukturbauteilen wie beispielsweise Nickbewegungen der Auslegerspitze oder rotatorische Dynamikeffekte am Ausleger 202 zu erfassen. Alternativ oder zusätzlich können solche Strukturdynamik-Sensoren auch am Turm 201, insbesondere an dessen oberen Abschnitt, an dem der Ausleger gelagert ist, vorgesehen sein, um die Dynamik des Turms 201 zu erfassen. Alternativ oder zusätzlich können auch den Antriebssträngen Bewegungs- und/oder Beschleunigungssensoren zugeordnet sein, um die Dynamik der Antriebsstränge erfassen zu können. Beispielsweise können den Umlenkrollen der Laufkatze 206 für das Hubseil und/oder Umlenkrollen für ein Abspannseil eines Wippauslegers Drehgeber zugeordnet sein, um die tatsächliche Seilgeschwindigkeit am relevanten Punkt erfassen zu können.

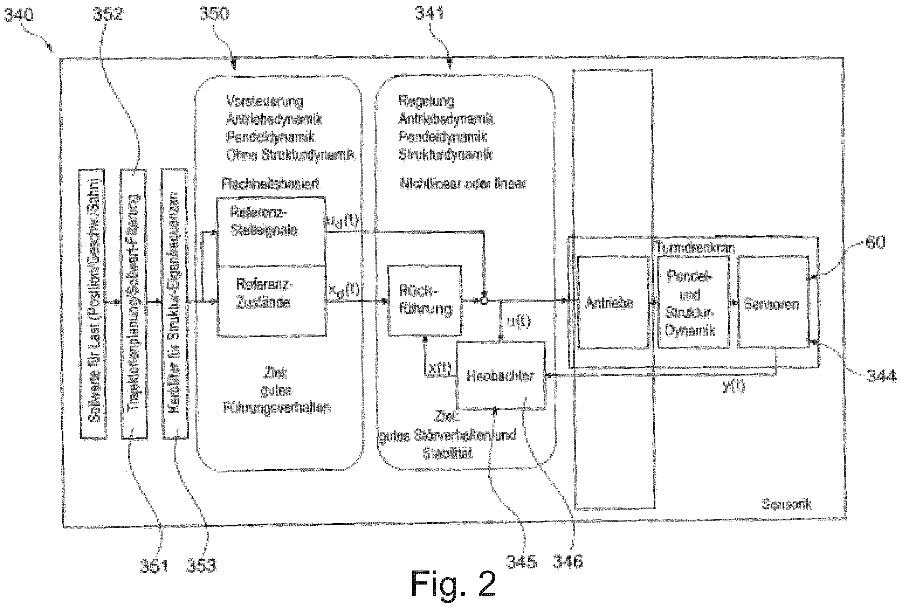

Wie Fig. 2 verdeutlicht, werden die Signale y (t) der Strukturdynamik-Sensoren 344 und der Pendelsensorik 60 an den Reglerbaustein 341 zurückgeführt, sodass ein geschlossener Regelkreis realisiert wird. Der besagte Reglerbaustein 341 beeinflusst die Ansteuersignale u (t) zum Ansteuern der Kranantriebe, insbesondere des Drehwerks, des Hubwerks und des Laufkatzantriebs in Abhängigkeit der rückgespeisten Strukturdynamik- und Pendelsensoriksignale.

Wie Fig. 2 zeigt, besitzt die Reglerstruktur ferner eine Filtereinrichtung bzw. einen Beobachter 345, der die rückgeführten Sensorsignale bzw. die Kranreaktionen beobachtet, die sich bei bestimmten Stellgrößen der Antriebsregler einstellen und unter Berücksichtigung vorbestimmter Gesetzmäßigkeiten eines Dynamikmodells des Krans, das grundsätzlich verschieden beschaffen sein kann und durch Analyse und Simulation des Stahlbaus gewonnen werden kann, anhand der beobachteten Kranreaktionen die Stellgrößen des Reglers beeinflusst.

Eine solche Filter- bzw. Beobachtereinrichtung 345b kann insbesondere in Form eines sogenannten Kalmanfilters 346 ausgebildet sein, dem als Eingangsgröße die Stellgrößen u (t) der Antriebsregler 347 des Krans und die rückgeführten Sensorsignale y (t), d.h. die erfassten Kranbewegungen, insbesondere der Seilzugwinkel $\varphi$ gegenüber der Vertikalen 62 und/oder dessen zeitliche Änderung bzw. die Winkelgeschwindigkeit des genannten Schrägzugs, sowie die strukturdynamischen Verwindungen des Auslegers 202 und des Turms 201 zugeführt werden und der aus diesen Eingangsgrößen anhand von Kalman-Gleichungen, die das Dynamiksystem der Kranstruktur, insbesondere dessen Stahlbauteile und Antriebsstränge, modellieren, die Stellgrößen der Antriebsregler 347 entsprechend beeinflusst, um die gewünschte pendeldämpfende Wirkung zu erzielen.

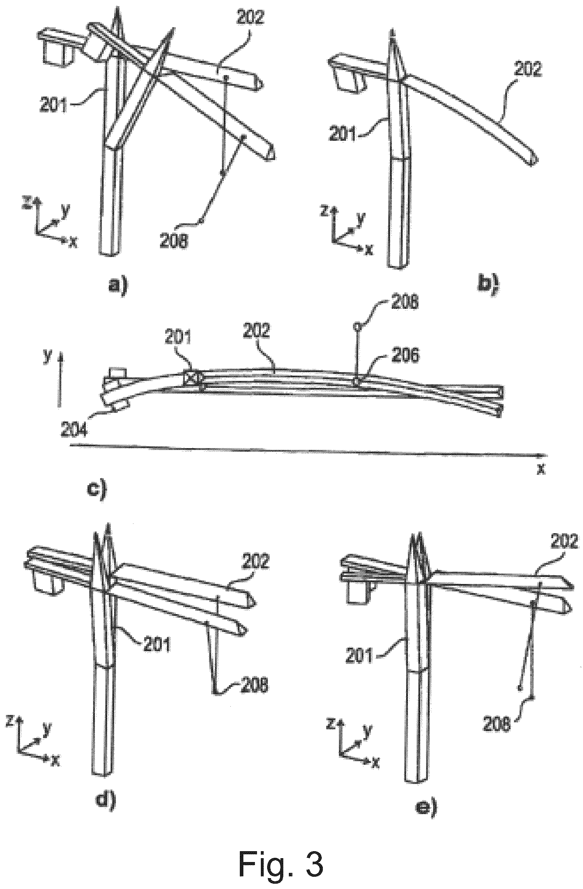

Mithilfe einer solchen closed-loop-Regelung können insbesondere Verformungen und Schwingungsformen des Turmdrehkrans unter Last gedämpft bzw. von Anfang an vermieden werden, wie sie in Fig. 3 beispielhaft gezeigt sind, wobei dort die Teilansicht a.) zunächst schematisch eine Nickverformung des Turmdehkrans unter Last infolge eines Durchbiegens des Turms 201 mit dem damit einhergenden Absenken des Auslegers 202 und einen damit verknüpften Schrägzug des Hubseils zeigt.

Ferner zeigen die Teilansichten b.) und c.) der Fig. 3 beispielhaft in schematischer Weise eine Querverformung des Turmdrehkrans in perspektivischer Darstellung sowie in Draufsicht von oben mit den dabei auftretenden Verformungen des Turms 201 und des Auslegers 202.

Schließlich zeigt die Fig. 3 in ihren Teilansichten d.) und e.) einen mit solchen Querverformungen verknüpften Schrägzug des Hubseils.

Wie Fig. 2 ferner zeigt, ist die Reglerstruktur in Form einer Zwei-Freiheitsgrade-Regelung ausgebildet und umfasst neben der genannten "closed-loop"-Regelung mit Rückführung der Pendelsensorik- und Strukturdynamik-Sensorsignale eine Vorsteuerung bzw. feed-forward-Steuerstufe 350, die durch ein möglichst gutes Führungsverhalten versucht, im Idealfalls gar keine Regelfehler auftreten zu lassen.

Die genannte Vorsteuerung 350 ist vorteilhafterweise flachheitsbasiert ausgebildet und nach der sogenannte differentiellen Flachheitsmethode bestimmt, wie eingangs schon erwähnt.

Da die Auslenkungen der Strukturbewegungen und auch der Pendelbewegungen im Vergleich zu den angetriebenen Kranbewegungen, die den Soll-Verfahrweg darstellen, sehr klein sind, werden für die Bestimmung der Vorsteuerungssignale $u_d$ (t) und $x_d$ (t) die Strukturdynamiksignale und Pendelbewegungssignale vernachlässigt, das heißt die Signale y (t) der Pendel- und Strukturdynamiksensoriken 60 bzw. 344 werden dem Vorsteuermodul 350 nicht rückgeführt.

Wie Fig. 2 zeigt, werden dem Vorsteuermodul 350 Sollwerte für das Lastaufnahmemittel 208 zugeführt, wobei diese Sollwerte Positionsangaben und/oder Geschwindigkeitsangaben und/oder Bahnparameter für die genannten Lastaufnahmemittel 208 sein können und die gewünschte Verfahrbewegung definieren.

Insbesondere können die Sollwerte für die gewünschte Lastposition und deren zeitliche Ableitungen vorteilhafterweise einem Trajektorien-Planungsmodul 351 und/oder einem Sollwertfilter 352 zugeführt werden, mittels derer bzw. mittels dessen ein Sollverlauf für die Lastposition und deren erste vier Zeitableitungen bestimmt werden kann, woraus in dem Vorsteuermodul 350 über algebraische Gleichungen der exakte Verlauf der notwendigen Stellsignale $u_d$ (t) zum Ansteuern der Antriebe sowie der exakte Verlauf $u_d$ (t) der entsprechenden Systemzustände berechnet werden können.

Um durch die Vorsteuerung keine Strukturbewegungen anzuregen, kann vorteilhafterweise eine Kerbfiltereinrichtung 353 dem Vorsteuermodul 350 vorgeschaltet sein, um die dem Vorsteuermodul 350 zugeführten Eingangsgrößen entsprechend zu filtern, wobei eine solche Kerbfiltereinrichtung 353 insbesondere zwischen dem genannten Trajektorien-Planungsmodul 351 bzw. dem Sollwertfiltermodul 352 einerseits und dem Vorsteuermodul 350 andererseits vorgesehen sein kann. Die genannte Kerbiltereinrichtung 353 kann insbesondere dazu ausgebildet sein, aus den der Vorsteuerung zugeführten Sollwertsignale die angeregten Eigenfrequenzen der Strukturdynamik zu eliminieren.

Um eine Schwingungsdynamik zu reduzieren bzw. gar nicht erst entstehen zu lassen, kann die Pendeldämpfungseinrichtung 340 dazu ausgebildet sein, das Drehwerk und das Katzfahrwerk und ggf. auch das Hubwerk so zu korrigieren, dass das Seil möglichst immer im senkrechten Lot zur Last steht, auch wenn sich der Kran durch das zunehmende Lastmoment immer mehr nach vorne neigt.

Beispielsweise kann beim Anheben einer Last vom Boden die Nickbewegung des Krans infolge seiner Verformung unter der Last berücksichtigt und das Katzfahrwerk unter Berücksichtigung der erfassten Lastposition so nachgefahren bzw. unter vorausschauender Abschätzung der Nickverformung so positioniert werden, dass das Hubseil bei der sich ergebenden Kranverformung im senkrechten Lot über der Last steht. Die größte statische Verformung tritt dabei an dem Punkt auf, an dem die Last den Boden verlässt. In entsprechender Weise kann alternativ oder zusätzlich auch das Drehwerk unter Berücksichtigung der erfassten Lastposition so nachgefahren und/oder unter vorausschauender Abschätzung einer Querverformung so positioniert werden, dass das Hubseil bei der sich ergebenden Kranverformung im senkrechten Lot über der Last steht.

Das der pendeldämpfenden Regelung zugrundeliegende Modell kann grundsätzlich verschieden beschaffen sein.

Für die regelungsorientierte mechanische Modellierung von elastischen Drehkranen ist dabei die entkoppelte Betrachtung der Dynamik in Schwenkrichtung sowie innerhalb der Turm-Ausleger Ebene nützlich. Die Schwenkdynamik wird durch den Drehwerksantrieb angeregt und geregelt, während die Dynamik in der Turm-Ausleger-Ebene durch den Katzwerks- und den Hubwerks-Antrieb angeregt und geregelt wird. Die Last pendelt in zwei Richtungen - einerseits quer zum Ausleger (Schwenkrichtung), andererseits in Ausleger-Längsrichtung (radial). Die vertikale Last-Bewegung entspricht aufgrund der geringen Hubseil-Elastizität weitgehend der vertikalen Auslegerbewegung, die bei Turmdrehkranen klein im Vergleich zu den Last-Auslenkungen aufgrund der Pendelbewegung ist.

Für eine Stabilisierung der Lastpendelbewegung müssen inbesondere die Anteile der Systemdynamik berücksichtigt werden, die durch das Drehwerk und durch das Katzwerk angeregt werden. Diese werden als Schwenk- bzw. Radialdynamik bezeichnet. Solange die Pendelwinkel nicht null sind, können sowohl Schwenk- als auch Radialdynamik zusätzlich durch das Hubwerk beeinflusst werden. Für einen Regelungsentwurf ist dies jedoch vernachlässigbar, insbesondere für die Schwenkdynamik.

Die Schwenkdynamik umfasst insbesondere Stahlstruktur-Bewegungen wie Turmtorsion, Auslegerquerbiegung um die vertikale Achse und die Turmbiegung quer zur Auslegerlängsrichtung, sowie die Pendeldynamik quer zum Ausleger und die Drehwerk-Antriebsdynamik. Die Radialdynamik umfasst die Turmbiegung in Auslegerrichtung, die Pendeldynamik in Auslegerrichtung und je nach Betrachtungsweise auch die Auslegerbiegung in vertikaler Richtung. Zudem wird der Radialdynamik auch die Antriebsdynamik des Katzwerks sowie ggfs. des Hubwerks zugerechnet.

Für die Regelung wird vorteilhafterweise ein lineares Entwurfsverfahren angestrebt, das auf der Linearisierung der nichtlinearen mechanischen Modellgleichungen um eine Ruhelage basiert. Durch eine solche Linearisierung fallen alle Kopplungen zwischen Schwenk- und Radialdynamik weg. Das bedeutet auch, dass für den Entwurf einer linearen Regelung auch dann keine Verkopplungen berücksichtigt werden, wenn das Modell zunächst gekoppelt hergeleitet wurde. Beide Richtungen von können vornherein als entkoppelt betrachtet werden, da dies die mechanische Modellbildung deutlich vereinfacht. Zudem wird so für die Schwenkdynamik ein übersichtliches Modell in kompakter Form erzielt, das sich schnell auswerten lässt, wodurch einerseits Rechenleistung eingespart und andererseits der Entwicklungsprozess des Regelungsentwurfes beschleunigt wird.

Um die Schwenkdynamik als ein kompaktes, übersichtliches und genaues dynamisches Systemmodell herzuleiten, kann der Ausleger als ein Euler-Bernoulli Balken und damit zunächst als ein System mit verteilter Masse (verteiltparametrisches System) betrachtet werden. Ferner kann zudem die Rückwirkung der Hubdynamik auf die Schwenkdynamik vernachlässigt werden, was für kleine Pendelwinkel aufgrund des verschwindenden horizontalen Kraftanteils eine gerechtfertigte Annahme ist. Wenn große Pendelwinkel auftreten, kann die Wirkung des Windwerks auf die Schwenkdynamik als Störgröße mit berücksichtigt werden.

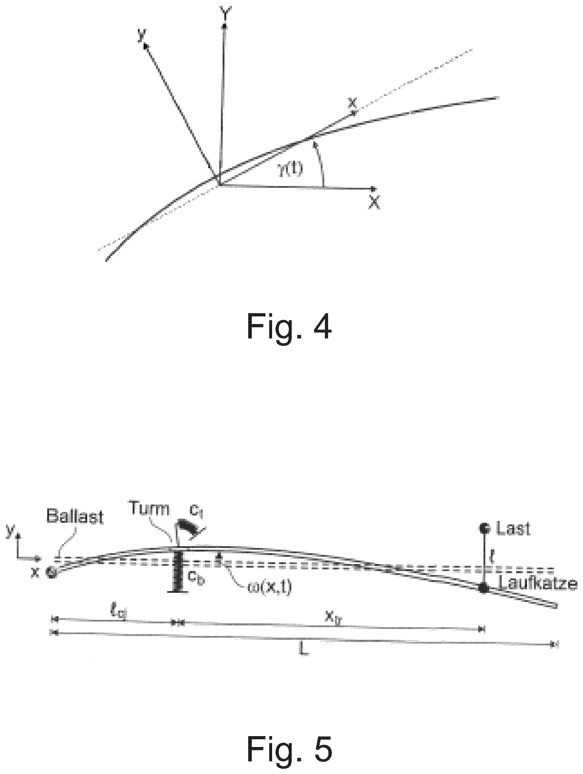

Der Ausleger wird als Balken in einem bewegten Referenzsystem modelliert, das durch den Drehwerksantrieb mit der Drehrate $\dot{\gamma}$ rotiert, wie in Fig. 4 gezeigt.

Damit wirken drei Scheinbeschleunigungen innerhalb des Referenzsystems, die als Coriolis, Zentrifugal- und Euler-Beschleunigung bekannt sind. Da das Referenzsystem um einen festen Punkt rotiert, ergibt sich für jeden Punkt

$$r' = \begin{bmatrix} r_{x'} & r_{y'} & r_{z'} \end{bmatrix} \qquad (1)$$

innerhalb des Referenzsystems die Scheinbeschleunigung $a'$ zu

$$a' = \underbrace{2\,\omega \times v'}_{\text{Coriolis}} - \underbrace{\dot{\omega} \times r'}_{\text{Euler}} - \underbrace{\omega \times (\omega \times r')}_{\text{Zentrifugal}}, \qquad (2)$$

wobei $\times$ das Kreuzprodukt darstellt,

$$\omega = \begin{bmatrix} 0 & 0 & \dot{\gamma} \end{bmatrix}^T \qquad (3)$$

den Rotationsvektor und $v'$ den Geschwindigkeitsvektor des Punktes relativ zum rotierenden Referenzsystem.

Von den drei Scheinbeschleunigungen stellt nur die Coriolisbeschleunigung eine bidirektionale Verkopplung zwischen Schwenk- und Radialdynamik dar. Diese ist proportional zur Drehgeschwindigkeit des Referenzsystems sowie zur relativen Geschwindigkeit. Typische maximale Drehraten eines Turmdrehkrans liegen im Bereich von ca.

$\gamma_{MAX} \approx 0.1 \dfrac{rad}{s}$ , weshalb die Coriolisbeschleunigung typischerweise kleine Werte annimmt im Vergleich zu den angetriebenen Beschleunigungen des Turmdrehkrans. Während der Stabilisierung der Lastpendelbewegung an einer festen Position ist die Drehrate sehr klein, während großer Führungsbewegungen kann die Coriolisbeschleunigung durch eine Vorsteuerung vorgeplant und explizit berücksichtigt werden. In beiden Fällen führt daher die Vernachlässigung der Coriolisbeschleunigung nur zu geringen Approximationsfehlern, weshalb sie im Folgenden vernachlässigt wird.

Die Zentrifugalbeschleunigung wirkt in Abhängigkeit der Drehrate nur auf die Radialdynamik und kann für diese als Störgröße berücksichtigt werden. Auf die Schwenkdynamik wirkt sie sich aufgrund der langsamen Drehraten kaum aus und kann daher vernachlässigt werden. Wichtig ist allerdings die lineare Euler Beschleunigung, die in tangentialer Richtung wirkt und daher bei der Betrachtung der Schwenkdynamik eine zentrale Rolle spielt.

Aufgrund der kleinen Querschnittsfläche des Auslegers und kleinen Schubverformungen kann der Ausleger als Euler-Bernoulli Balken betrachtet werden. Damit wird die rotatorische kinetische Energie der Balkendrehung um die vertikale Achse vernachlässigt. Es wird angenommen, dass die mechanischen Parameter wie Massebeläge und Flächenträgheitsmomente der Euler-Bernoulli Näherung der Ausleger-Elemente bekannt sind und zur Berechnung verwendet werden können.

Abspannungen zwischen dem A-Bock und dem Ausleger wirken sich kaum auf die Schwenkdynamik aus und werden daher nicht mit modelliert. Verformungen des Auslegers in Längsrichtung sind ebenfalls so gering, dass sie vernachlässigt werden können. Damit lässt sich die ungedämpfte Dynamik des Auslegers im rotierenden Referenzsystem durch die bekannte partielle Differentialgleichung

$$\mu(x)\ddot{w}(x,t) + \left(EI(x)w''(x,t)\right) = \widetilde{q}(x,t) \qquad (4)$$

für die Ausleger-Auslenkung $w(x,t)$ an der Stelle $x$ zur Zeit $t$ angeben. Dabei ist $\mu(x)$ der Massebelag, $I(x)$ das Flächenträgheitsmoment an der Stelle $x$, $E$ der Elastizitätsmodul und $\tilde{q}(x,t)$ die einwirkende verteilte Kraft auf den Ausleger. Der Nullpunkt der Ortskoordinate $x$ liegt für diese Herleitung am Ende des Gegenauslegers. Die Schreibweise $(\cdot)' = \frac{\partial(\cdot)}{\partial x}$ beschreibt dabei die örtliche Differentiation. Dämpfungsparameter werden an späterer Stelle eingeführt.

Um eine Beschreibung der Auslegerdynamik im Inertialsystem zu erhalten wird die Eulerkraft aus der verteilten Kraft ausgegliedert, was auf die partielle Differentialgleichung

$$\mu(x)(x - l_{cj})\ddot{\gamma} + \mu(x)\ddot{w}(x,t) + E(I(x)w''(x,t))'' = q(x,t) \qquad (5)$$

führt. Dabei ist $l\,cj$ die Länge des Gegenauslegers und $q(x,t)$ die tatsächliche verteilte Kraft auf den Ausleger ohne die Eulerkraft. Beide Balkenenden sind frei und nicht eingespannt. Daher gelten die Randbedingungen

$$w''(0,t) = 0, \qquad w''(L,t) = 0 \qquad (6)$$

$$w'''(0,t) = 0 \qquad w'''(L,t) = 0 \qquad (7)$$

mit der Gesamtlänge $L$ von Ausleger und Gegenausleger.

Eine Skizze des Auslegers ist in Fig. 5 dargestellt. Die Federsteifigkeiten $c_t$ und $c_b$ repräsentieren die Torsionssteifigkeit bzw. Biegesteifigkeit des Turms und werden im Folgenden erläutert.

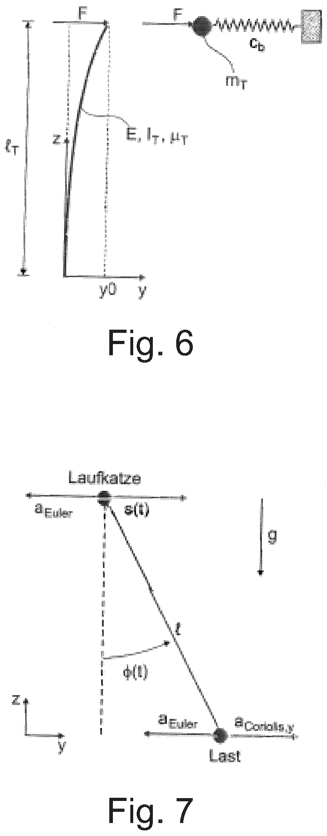

Für die Modellierung der Schwenkdynamik wird vorteilhafterweise die Turmtorsion und Turmbiegung quer zur Auslegerrichtung berücksichtigt. Der Turm kann aufgrund seiner Geometrie zunächst als homogener Euler-Bernoulli-Balken angenommen werden. Zugunsten einer einfacheren Modellierung wird der Turm an dieser Stelle durch ein Starrkörper-Ersatzmodell dargestellt. Es wird nur eine Eigenmode für die Turmbiegung und eine für die Turmtorsion berücksichtigt. Da im Wesentlichen nur die Bewegung an der Turmspitze für die Schwenkdynamik relevant ist, kann die Turmdynamik durch jeweils ein Feder-Masse-System mit übereinstimmender Eigenfrequenz als Ersatzsystem für Biegung bzw. Torsion verwendet werden. Für den Fall einer höheren Elastizität des Turmes lassen sich die Feder-Masse-Systeme an dieser Stelle leichter um weitere Eigenmoden ergänzen, indem entsprechend viele Massen und Federn hinzugefügt werden, vgl. Fig. 6.

Die Parameter Federsteifigkeit $c_b$ und Masse $m_T$ werden so gewählt, dass die Auslenkung an der Spitze sowie die Eigenfrequenz mit der des Euler-Bernoulli-Balkens übereinstimmen, welcher die Turmdynamik repräsentiert. Sind für den Turm das konstante Flächenträgheitsmoment $I_T$, die Turmhöhe $l_T$ und der Massebelag $\mu_T$ bekannt, so lassen sich die Parameter aus der statischen Auslenkung am Balkenende

$$y_0 = \frac{F l_T^{\,3}}{3 E I_T} \qquad (8)$$

und der ersten Eigenfrequenz

$$\omega_1 = \sqrt{\frac{12.362 E I_T}{\mu_T l_T^{\,4}}} \qquad (9)$$

eines homogenen Euler-Bernoulli Balkens analytisch zu

$$c_b = \frac{F}{y_0} = \frac{3 E I_T}{l_T^{\,3}}, \qquad m_T = \frac{c_b}{\omega_1^2} = \frac{3 \mu_T l_T}{12.362}. \qquad (10)$$

berechnen.

Für die Turmtorsion lässt sich analog ein Starrkörper Ersatzmodell mit der Trägheit $J_T$ und der Torsionsfedersteifigkeit $c_t$ herleiten wie in Abb. 5 gezeigt.

Sind für den Turm das polare Flächenträgheitsmoment $I_p$, trägheitsmoment $J_T$ (welches für Kreisringquerschnitte dem polaren Flächenträgheitsmoment entspricht), die Massendichte $\rho$ und der Schubmodul $G$ bekannt, so lassen sich die Parameter des Ersatzmodells zu

$$c_t = \frac{G J_T, T}{l_T}, \qquad J_T = 0.405 \rho I_p l_T \qquad (11)$$

bestimmen, um eine übereinstimmende erste Eigenfrequenz zu erzielen.

Um sowohl die Ersatzmasse $m_T$ als auch die Ersatzträgheit $J_T$ in Form eines additiven Massebelags des Auslegers zu berücksichtigen, kann die Approximation der Trägheit für schlanke Objekte verwendet werden, aus der folgt, dass ein schlankes Balkensegment der Länge

$$b = \sqrt{\frac{12 J_T}{m_T}} \qquad (12)$$

die Masse $m_T$ und bezüglich seines Schwerpunkts die Trägheit $J_T$ besitzt. D.h. der Massebelag des Auslegers $\mu(x)$ wird an der Stelle der Turmeinspannung über eine Länge von $b$ um den konstanten Wert $\dfrac{m_T}{b}$ erhöht.

Da die Dimensionen und Trägheitsmomente der Nutzlasten eines Turmdrehkrans in der Regel unbekannt sind, kann die Nutzlast weiterhin als konzentrierter Massenpunkt modelliert werden. Die Seilmasse kann vernachlässigt werden. Im Gegensatz zum Ausleger wird die Nutzlast etwas stärker durch Euler, Coriolis und Zentrifugalkräfte beeinflusst. Die Zentrifugalbeschleunigung wirkt nur in Auslegerrichtung, ist also an dieser Stelle nicht relevant, die Coriolisbeschleunigung ergibt sich mit dem Abstand $x_L$ der Last zum Turm zu

$$a_{Coriolis,y} = 2 \dot{\gamma} \dot{x}_L. \qquad (13)$$

Aufgrund der geringen Ausleger-Drehraten kann die Coriolisbeschleunigung auf die Last vernachlässigt werden, insbesondere wenn die Last positioniert werden soll. Um bei Bedarf eine Störgrößenaufschaltung realisieren zu können wird sie jedoch noch für einige Schritte mitgeführt.

Für die Herleitung der Pendeldynamik wird diese auf eine Tangentialebene projiziert, die orthogonal zum Ausleger orientiert ist und die Position der Laufkatze schneidet.

Die Eulerbeschleunigung ergibt sich zu

$$a_{Euler,L} = \dot{\gamma} x_L. \qquad (14)$$

Aufgrund der in der Regel kleinen Pendelwinkel gilt die Näherung

$$x_L / x_{tr} \approx 1 \qquad (15)$$

aus der die Approximation

$$a_{Euler,L} = a_{Euler} \qquad (16)$$

folgt, dass die Euler-Beschleunigung aufgrund der Drehung des Referenzsystems in etwa gleiche Weise auf Last und Laufkatze wirkt.

Die Beschleunigung auf die Last sind in Fig. 7 dargestellt.

Dabei ist

$$s(t) = x_{tr}\,\gamma(t) + w(x_{tr}, t). \qquad (17)$$

die y-Position der Laufkatze in der Tangentialebene. Die Position der Laufkatze auf dem Ausleger $x_{tr}$ wird aufgrund der Entkopplung von Radial- und Schwenkdynamik hier als konstanter Parameter approximiert.

Die Pendeldynamik lässt sich leicht über den Lagrange Formalismus herleiten. Dazu wird zunächst die potentielle Energie

$$U = -m_L\,l(t)\,g\cos(\phi(t)) \qquad (18)$$

mit der Lastmasse $m_L$, $lt$ sowie die kinetische Energie

$$T = \frac{1}{2} m_L \dot{\mathbf{r}}^T \dot{\mathbf{r}}, \qquad (19)$$

wobei

$$\mathbf{r}(t) = \begin{bmatrix} s(t) + l(t)\sin(\phi(t)) \\ -l(t)\cos(\phi(t)) \end{bmatrix}. \qquad (20)$$

die y-Position der Last in der Tangentialebene. Mit der Lagrange Funktion

$$L = T - U \qquad (21)$$

und den Lagrange'schen Gleichungen der 2. Art

$$\frac{\mathrm{d}}{\mathrm{d}t}\frac{\partial L}{\partial \dot{\phi}} - \frac{\partial L}{\partial \phi} = Q \qquad (22)$$

mit der nicht-konservativen Corioliskraft

$$Q = \begin{bmatrix} m_L\,a_{Coriolis,y} \\ 0 \end{bmatrix}^T \cdot \frac{\partial r}{\partial \phi} = m_L\,l\,a_{Coriolis,y}\cos(\phi) \qquad (23)$$

folgt die Pendeldynamik in Schwenkrichtung als

$$2\dot{\phi}\dot{l} + (\ddot{s} - a_{Coriolis,y})\cos\phi + g\sin\phi + \ddot{\phi}l = 0. \qquad (24)$$

Linearisiert um $\phi = 0$, $\dot{\phi} = 0$ folgt daraus unter Vernachlässigung der Seillängenänderung $l \approx 0$ und der

Coriolisbeschleunigung $a_{Coriolis,y} \approx 0$ die vereinfachte Pendeldynamik

$$\ddot{\phi} = \frac{-\ddot{s} - g\phi}{l} = \frac{-x_{tr}\ddot{\gamma} - \ddot{w}(x_{tr},t) - g\phi}{l}. \qquad (25)$$

Um die Rückwirkung der Pendeldynamik auf die Strukturdynamik von Ausleger und Turm zu beschreiben, muss die Seilkraft $F_R$ bestimmt werden. Am einfachsten wird diese dazu durch ihren Hauptanteil durch die Erdbeschleunigung zu

$$F_{R,h} = m_L g\cos(\phi)\sin(\phi), \qquad (26)$$

approximiert. Ihr horizontaler Anteil in $y$-Richtung ergibt sich damit zu

$$F_{R,h} = m_L g\cos(\phi)\sin(\phi), \qquad (27)$$

bzw. linearisiert um $\phi = 0$ zu

$$F_{R,h} = m_L g\phi. \qquad (28)$$

Das verteiltparametrische Modell (5) der Auslegerdynamik beschreibt unendlich viele Eigenmoden des Auslegers und ist in der Form noch nicht für einen Regelungsentwurf geeignet. Da für Beobacher und Regelung nur wenige der niederfrequentesten Eigenmoden relevant sind, bietet sich eine Modaltransformation mit anschließender modaler Ordnungsreduktion auf diese wenigen Eigenmoden an. Eine analytische Modaltransformation der Gleichung (5) ist jedoch eher schwierig. Stattdessen bietet es sich an, Gleichung (5) zunächst mittels finiten Differenzen oder der finite Elemente Methode örtlich zu diskretisieren und somit eine gewöhnliche Differentialgleichung zu erhalten.
Bei einer Diskretisierung mittels der finiten Differenzen wird der Balken auf $N$ äquidistant verteilte Massepunkte an den Auslegerpositionen

$$x_i, \quad i \in [1 \dots N] \qquad (29)$$

aufgeteilt. Die Balkenauslenkung an jeder dieser Positionen wird als

$$w_i = w(x_i, t) \qquad (30)$$

notiert. Die örtlichen Ableitungen werden mit dem zentralen Differenzenquotient

$$w_i' \approx \frac{-w_{i-1} + w_{i+1}}{2\Delta_x} \qquad (31)$$

$$w_i'' \approx \frac{w_{i-1} - 2w_i + w_{i+1}}{\Delta_x^2} \qquad (32)$$

approximiert, wobei $\Delta_x = x_{i+1} - x_i$ den Abstand der diskreten Massepunkte und $w_i'$ die örtliche Ableitung $w'(x_i,t)$ beschreiben.
Für die Diskretisierung von $w''(x)$ müssen die Randbedingungen (6)-(7)

$$w_{i-1} - 2w_i + w_{i+1} = 0, \quad i \in \{1, N\} \qquad (33)$$

$$-w_{i-2} + 2w_{i-1} - 2w_{i+1} + w_{i+2} = 0, \quad i \in \{1, N\} \qquad (34)$$

nach $w_{-1}, w_{-2}, w_{N+1}$ und $w_{N+2}$ aufgelöst werden. Die Diskretisierung des Terms $(l(x)w'')''$ in Gleichung (5) ergibt sich zu

$$(I(x)w'')'' \approx \frac{\eta_{i-1} - 2\eta_i + \eta_{i+1}}{\Delta_x^2} \qquad (35)$$

mit

$$\eta_i = I(x_i)w_i''. \qquad (36)$$

Durch die Wahl der zentralen Differenzen Approximation hängt Gleichung (35) an den Rändern von den Werten $I_{-1}$ und $I_{N+1}$ ab, welche in der Praxis durch die Werte $I_1$ und $I_N$ ersetzt werden können.

Für das weitere Vorgehen bietet sich eine Vektorschreibweise (fett gedruckt) an. Der Vektor der Ausleger Auslenkungen wird als

$$\vec{w} = \begin{bmatrix} w_1 & \dots & w_N \end{bmatrix}^T \qquad (37)$$

bezeichnet, womit die Diskretisierung des Terms $(I(x)w'')''$ in Vektorschreibweise als

$$K_0 \vec{w} \qquad (38)$$

mit der Steifigkeitsmatrix

$$K_0 = \begin{pmatrix} I_1 + I_2 & -2I_1 - 2I_2 & I_1 + I_2 & 0 & 0 \\ -2I_2 & 4I_2 + I_3 & -2I_2 - 2I_3 & I_3 & 0 \\ I_2 & -2I_2 - 2I_3 & I_2 + 4I_3 + I_4 & -2I_3 - 2I_4 & I_4 \\ & & \ddots & & \\ 0 & I_{N-2} & -2I_{N-2} - 2I_{N-1} & I_{N-2} + 4I_{N-1} & -2I_{N-1} \\ 0 & 0 & I_{N-1} + I_N & -2I_{N-1} - 2I_N & I_{N-1} + I_N \end{pmatrix}$$

ausgedrückt werden kann.

Ebenso wird die Massenmatrix des Massebelags (Einheit kgm) als Diagonalmatrix

$$M_0 = \mathrm{diag}(\begin{bmatrix} \mu(x_1) & \dots & \mu(x_N) \end{bmatrix}) \qquad (39)$$

definiert, mit dem Vektor

$$\vec{x}_T = \begin{bmatrix} (x_1 - l_{cj}) & \dots & (x_N - l_{cj}) \end{bmatrix}^T \qquad (40)$$

welcher für jeden Knoten den Abstand zum Turm beschreibt.

Für die verteilte einwirkende Kraft wird der Vektor

$$\vec{q} = \begin{bmatrix} q_1 & \dots & q_N \end{bmatrix} \qquad (41)$$

mit den Einträgen $q_i = q(x_i)$ definiert, so dass die Diskretisierung der partiellen Balkendifferentialgleichung (5) in diskretisierter Form als

$$M_0 \ddot{\vec{w}} + \frac{E}{\Delta_x^4} K_0 = \vec{q} - M\vec{x}_T \ddot{\gamma}. \qquad (42)$$

angegeben werden kann.

Nun soll das dynamische Zusammenwirken von Stahlstruktur-Bewegung und Pendeldynamik beschrieben werden.

Hierzu werden zunächst die zusätzlichen Punktmassen auf dem Ausleger, nämlich die Gegenballastmasse $m_{cj}$, $m_T$ sowie die Katzmasse $m_{tr}$ der verteilten Massenmatrix

$$M_1 = M_0 + diag\left(\left[\frac{m_{cj}}{\Delta_x} \quad \dots \quad \frac{m_T}{b} \quad \dots \quad \frac{m_T}{b} \quad \dots \quad \frac{m_{tr}}{\Delta_x} \quad 0\right]\right) \qquad (43)$$

hinzugefügt.

Zudem können die Kräfte und Momente beschrieben werden, mit denen Turm und Last auf den Ausleger wirken. Die Kraft aufgrund der Turmbiegung ist über das Ersatzmodell durch

$$q_T \Delta_x = -c_b w(x_T). \qquad (44)$$

mit $q_T = q(l_{cj})$ gegeben. Für die Bestimmung des Moments durch die Turmtorsion wird zunächst die Verdrehung des Ausleger-Balkens an der Einspannungsstelle,

$$\psi = w_T' = \frac{-w_{T-1} + w_{T+1}}{2\Delta_x} \qquad (45)$$

benötigt, aus der sich dann das Torsionsmoment

$$\tau = -c_T \frac{-w_T - 1 + w_T + 1}{2\Delta_x} \qquad (46)$$

ergibt, das beispielsweise durch zwei gleich weit vom Turm entfernt angreifende (Hebelarm), gleichgroße Kräfte approximiert werden kann. Der Wert dieser beiden Kräfte ist

$$F_\tau = \frac{\tau}{2\Delta_x}, \qquad (47)$$

wenn $\Delta x$ jeweils der Hebelarm ist. Dadurch kann das Moment durch den Vektor $\vec{\overline{q}}$ der Kräfte auf den Ausleger beschrieben werden. Dazu müssen nur die beiden Einträge

$$q_{T-1} \Delta_x = -F_\tau, \qquad q_{T+1} \Delta_x = F_\tau, \qquad (48)$$

gesetzt werden.

Durch die horizontale Seilkraft (28) ergibt sich der Eintrag

$$q_{tr} \Delta_x = m_L g \phi \qquad (49)$$

in $\vec{\overline{q}}$.

Da somit nun alle Kräfte von $\phi$ oder $\vec{\overline{w}}$ abhängen, kann die Verkopplung aus Struktur- und Pendeldynamik in Matrixschreibweise geschrieben werden als

$$\underbrace{\begin{bmatrix} M_0 & 0 \\ x_{tr}^T & 1 \end{bmatrix}}_{M} \underbrace{\begin{bmatrix} \ddot{\vec{w}} \\ \ddot{\phi} \end{bmatrix}}_{\ddot{x}} + \underbrace{\begin{bmatrix} \left(\frac{E}{\Delta_x^4}K_0 + K_1\right) & F_{tr} \\ 0 & g \end{bmatrix}}_{K} \underbrace{\begin{bmatrix} \vec{w} \\ \phi \end{bmatrix}}_{x} = \underbrace{\begin{bmatrix} -MX_T \\ -x_{tr} \end{bmatrix}}_{B} \ddot{\gamma} \qquad (50)$$

mit

$$K_1 = \frac{1}{4\Delta_x^3} \begin{bmatrix} \dots & & & \\ & c_T & 0 & -c_T \\ & 0 & 4\Delta_x^2 c_b & 0 \\ & -c_T & 0 & c_T \\ & & & & \dots \end{bmatrix}, \tag{51}$$

$$F_{tr} = \frac{1}{\Delta_x} \begin{bmatrix} 0 & \dots & -m_L g & \dots & 0 \end{bmatrix}^T \tag{52}$$

und

$$x_{tr} = \begin{bmatrix} 0 & \dots & 1 & \dots & 0 \end{bmatrix}^T \quad \text{sodass} \quad \ddot{w}(x_{tr}, t) = x_{tr}^{\ T} \ddot{\vec{w}}. \tag{53}$$

An dieser Stelle sei angemerkt, dass die drei Parameter Position der Laufkatze auf dem Ausleger $x_{tr}$, / $m_L$ im laufenden Betrieb variieren. Daher handelt es sich bei (50) um eine lineare parametervariante Differentialgleichung, deren konkrete Ausprägung erst zur Laufzeit insbesondere online ermittelt werden kann. Beim späteren Beobachter- und Regelungsentwurf muss dies beachtet werden.

Die Anzahl der Diskretisierungspunkte N sollte groß genug gewählt werden, um eine präzise Beschreibung der Balkenverformung und -Dynamik zu gewährleisten. Damit wird (50) zu einem großen Differentialgleichungs-System. Für die Regelung bietet sich jedoch eine modale Ordnungsreduktion an, um die Vielzahl der Systemzustände auf eine niedrigere Anzahl zu reduzieren.

Die modale Ordnungsreduktion ist eines der am häufigsten verwendeten Reduktionsverfahren. Die Grundidee besteht darin, zunächst eine Modaltransformation durchzuführen, also die Dynamik des Systems auf Basis der Eigenmoden (Formen) und der Eigenfrequenzen anzugeben. Anschließend werden dann nur die relevanten Eigenmoden (in der Regel die niederfrequentesten) ausgewählt und alle höherfrequenten Moden vernachlässigt. Die Anzahl der berücksichtigten Eigenmoden wird im Folgenden mit $\xi$ bezeichnet.

Zunächst müssen die Eigenvektoren $\rightarrow\vec{v}_i$ mit $i \in [1, N+1]$ berechnet werden, welche zusammen mit den entsprechenden Eigenfrequenzen $\omega_i$ das Eigenwertproblem

$$K \vec{v}_i = \omega_i^2 M \vec{v}_i \tag{54}$$

erfüllen. Diese Berechnung lässt sich über bekannte Standardverfahren leicht lösen. Die Eigenvektoren werden daraufhin mit steigender Eigenfrequenz sortiert in die Modalmatrix

$$V = \begin{bmatrix} \vec{v}_1 & \vec{v}_2 & \dots \end{bmatrix} \tag{55}$$

geschrieben. Die Modaltransformation lässt sich dann durchführen über die Berechnung

$$\ddot{z} + \underbrace{V^{-1} M^{-1} K V}_{\hat{K}} z = \underbrace{V^{-1} M^{-1} B}_{\hat{B}} \ddot{\gamma} \tag{56}$$

wobei der neue Zustandsvektor $\rightarrow\overline{Z}(t) = V^{-1} \rightarrow\overline{x}(t)$ die Amplituden der Eigenmoden enthält. Da die modal transformierte Steifigkeitsmatrix $\hat{K}$ eine Diagonalform aufweist, lässt sich das modal reduzierte System einfach durch Beschränkung auf die ersten $\xi$ Spalten und Zeilen dieses Systems als

$$\ddot{z}_r + \hat{D}_r \dot{z}_r + \hat{K}_r z_r = \hat{B}_r \ddot{\gamma}. \tag{57}$$

erhalten, wobei der Zustandsvektor $\rightarrow\overline{z}_r$ nun nur noch die wenigen $\xi$ Modalamplituden beschreibt. Durch experimentelle Identifikation lassen sich zudem die Einträge der diagonalen Dämpfungsmatrix $\hat{D}_r$ ermitteln.

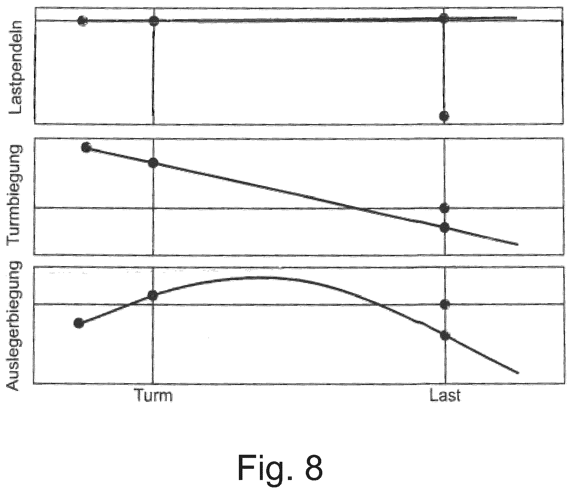

Drei der wichtigsten Eigenmoden sind in Fig. 8 dargestellt. Die oberste beschreibt die langsamste Eigenmode, die durch die Pendelbewegung der Last dominiert wird. Die zweite dargestellte Eigenmode weist eine deutliche Turmbiegung auf, während sich in der dritten der Ausleger deutlich biegt. Alle Eigenmoden, deren Eigenfrequenzen durch den Drehwerksantrieb angeregt werden können, sollten berücksichtigt bleiben.

Die Dynamik des Drehwerk-Antriebes wird vorteilhafterweise als ein PT1-Glied approximiert, das die Dynamik

$$\ddot{\gamma} = \frac{u - \dot{\gamma}}{T_\gamma} \qquad (58)$$

mit der Zeitkonstanten $T_\gamma$ aufweist. In Verbindung mit Gleichung (57) ergibt sich damit

$$\dot{\mathbf{x}} = \underbrace{\begin{bmatrix} 0 & I & 0 & 0 \\ -\hat{K}_r & -\hat{D}_r & 0 & \dfrac{-\hat{B}_r}{T_\gamma} \\ 0 & 0 & 0 & 1 \\ 0 & 0 & 0 & \dfrac{-1}{T_\gamma} \end{bmatrix}}_{A} \mathbf{x} + \underbrace{\begin{bmatrix} 0 \\ \dfrac{\hat{B}_r}{T_\gamma} \\ 0 \\ \dfrac{1}{T_\gamma} \end{bmatrix}}_{B} u \qquad (59)$$

mit dem neuen Zustandsvektor $\vec{x} = [z_r\ \dot{z}_r\ \gamma\ \hat{\gamma}]^T$ und dem Stellsignal $u$ der Sollgeschwindigkeit des Drehwerks.

Für den Beobachter und die Regelung der Schwenkdynamik kann das System (59) um einen Ausgangsvektor $\vec{y}$ zu

$$\dot{\vec{x}} = A\,\vec{x} + B\,u \qquad (60)$$

$$\vec{y} = C\,\vec{x} \qquad (61)$$

ergänzt werden, so dass das System beobachtbar ist, d.h. dass alle Zustände im Vektor $\vec{x}$ durch die Ausgänge $\vec{y}$, sowie endlich viele Zeitableitungen der Ausgänge rekonstruierbar sind und damit zur Laufzeit geschätzt werden können.

Der Ausgangsvektor $\vec{y}$ beschreibt dabei genau die Drehraten, Dehnungen oder Beschleunigungen, welche durch die Sensoren am Kran gemessen werden.

Auf Basis des Modells (61) lässt sich beispielsweise ein Beobachter 345, vgl. Fig. 2, in Form des Kalman Filters

$$\dot{\hat{\vec{x}}} = A\hat{\vec{x}} + B\vec{u} + P\,C^T\,R^{-1}\left(\vec{y} - C\hat{\vec{x}}\right)\hat{\vec{x}}(0) = \hat{\vec{x}}_0 \qquad (62)$$

entwerfen, wobei der Wert P aus der algebraischen Riccati Gleichung

$$0 = P\,A + P\,A^T + Q - P\,C^T\,R^{-1}\,C\,P \qquad (63)$$

folgen kann, die sich mit Standardverfahren leicht lösen lässt. $Q$ und R stellen die Kovarianzmatrizen des Prozess- und Messrauschens dar und dienen als Auslegungs-Parameter des Kalmanfilters.

Da die Gleichungen (60) und (61) ein parametervariantes System beschreiben, ist die Lösung P der Gleichung (63) immer nur für den entsprechenden Parametersatz $\{x_{tr}, l, m_L\}$ gültig. Die Standardverfahren zur Lösung algebraischer Riccati Gleichungen sind allerdings recht rechenintensiv. Um Gleichung (63) nicht zur Laufzeit auswerten zu müssen, kann die Lösung $P$ für ein fein aufgelöstes Kennfeld in den Parametern $x_{tr}, l, m_L$ offline vorberechnet werden. Zur Laufzeit (online) wird dann aus dem Kennfeld der Wert ausgewählt, dessen Parametersatz $\{x_{tr},\ l,\ m_L\}$ den momentanen Parametern am nächsten liegt.

Da durch den Beobachter 345 alle Systemzustände $\hat{\vec{x}}$ geschätzt werden können, lässt sich die Regelung in Form einer Zustandsrückführung

$$u = K\left(\vec{x}_{\text{ref}} - \hat{\vec{x}}\right) \qquad (64)$$

realisieren. Dabei enthält der Vektor $\vec{x}_{\mathrm{ref}}$ die Sollzustände, die in der Ruhelage typischerweise alle null sind (bis auf den Drehwinkel $\gamma$). Während dem Abfahren einer Bahn können die Werte ungleich null sein, sollten aber nicht zu weit von der Ruhelage abweichen, um die das Modell linearisiert wurde.

Hierzu eignet sich beispielsweise ein linear-quadratischer Ansatz, bei dem die Rückführungsverstärkung K so gewählt wird, dass das Gütefunktional

$$J = \int_{t=0}^{\infty} \mathbf{x}^T Q \mathbf{x} + \mathbf{u}^T R \mathbf{u} \, dt \qquad (65)$$

optimiert wird. Für den linearen Regelungsentwurf ergibt sich die optimale Rückführungsverstärkung zu

$$K = R^{-1} B^T P, \qquad (66)$$

wobei sich P analog zum Kalmanfilter über die algebraische Riccati-Gleichung

$$0 = PA + A^T P - PBR^{-1}B^T P + Q \qquad (67)$$

bestimmen lässt.

Da auch die Verstärkung $K$ in Gleichung (66) abhängig vom Parametersatz { $x_{tr}$, $l$, $m_L$ } ist, wird für diese analog zur Vorgehensweise für den Beobachter ein Kennfeld erzeugt. Im Kontext der Regelung ist dieser Ansatz unter dem Begriff "gain scheduling" bekannt.

Zur Anwendung der Regelung an einem Turmdrehkran, kann die Beobachterdynamik (62) auf einem Steuergerät zur Laufzeit simuliert werden. Dazu können einerseits die Stellsignale $u$ der Antriebe, sowie andererseits die Messignale $\vec{y}$ der Sensoren verwendet werden. Die Stellsignale berechnen sich widerum aus der Rückführungsverstärkung und dem geschätzten Zustandsvektor gemäß (62).

Da sich die Radialdynamik ebenfalls durch ein lineares Modell der Form (60)-(61) darstellen lässt, kann für die Regelung der Radialdynamik analog zur Schwenkdynamik vorgegangen werden. Beide Regelungen wirken am Kran dann unabhängig voneinander und stabilisieren die Pendeldynamik in radiale Richtung sowie quer zum Ausleger, jeweils unter Berücksichtigung der Antriebs- und Strukturdynamik.

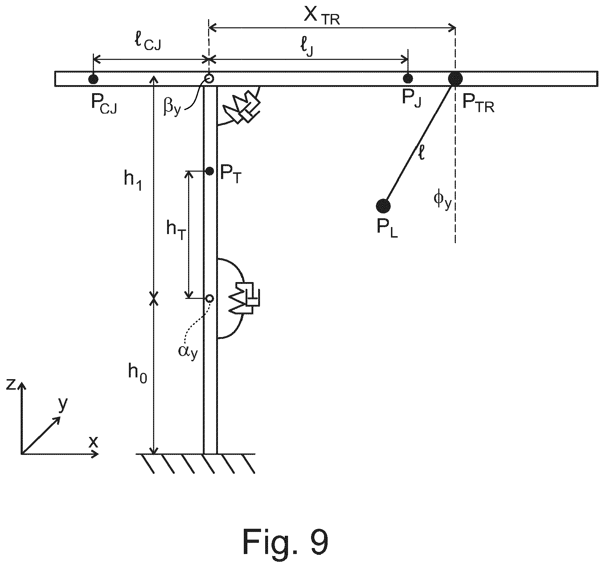

Im Folgenden wird ein Ansatz zur Modellierung der Radialdynamik beschrieben. Dieser unterscheidet sich von dem zuvor beschriebenen Ansatz zur Modellierung der Schwenkdynamik dadurch, dass der Kran nun durch ein Ersatzsystem aus mehreren verkoppelten Starrkörpern beschrieben wird und nicht durch kontinuierliche Balken. Dabei kann der Turm in zwei Starrkörper aufgeteilt werden, wobei ein weiterer Starrkörper den Ausleger repräsentieren kann, vgl. Fig. 9.

Dabei beschreiben $\alpha_y$ und $\beta_y$ die Winkel zwischen den Starrkörpern und $\phi_y$ den radialen Pendelwinkel der Last. Mit $P$ werden die Positionen der Schwerpunkte beschrieben, wobei der Index $_{CJ}$ für den Gegenausleger, $_J$ für den Ausleger, $_{TR}$ für die Laufkatze (engl.: trolley) und $_T$ für den Turm (in diesem Fall den oberen Starrkörper des Turmes) steht. Die Positionen hängen dabei zumindest teilweise von den durch die Antriebe gestellten Größen $x_{\mathrm{TR}}$ und $l$ ab. An den Gelenken zwischen den Starrkörpern befinden sich Federn mit den Federsteifigkeiten $\tilde{c}_{\alpha_x}$, $\tilde{c}_{\beta_y}$ sowie Dämpfer, deren viskose Reibung durch die Parameter $d_{\alpha y}$ und $d_{\beta y}$ beschrieben wird.

Die Dynamik lässt sich über den bekannten Lagrange Formalismus herleiten. Dabei sind die drei Freiheitsgrade im Vektor

$$\vec{q} = \left( \alpha_y, \beta_y, \phi_y \right)$$

zusammengefasst. Mit diesen lassen sich die translatorischen kinetischen Energien

$$T_{\mathrm{kin}} = \frac{1}{2} \left( m_{\mathrm{T}} \left\| \dot{P}_{\mathrm{T}} \right\|_2^2 + m_{\mathrm{J}} \left\| \dot{P}_{\mathrm{J}} \right\|_2^2 + m_{\mathrm{CJ}} \left\| \dot{P}_{\mathrm{CJ}} \right\|_2^2 + m_{\mathrm{TR}} \left\| \dot{P}_{\mathrm{TR}} \right\|_2^2 + m_{\mathrm{L}} \left\| \dot{P}_{\mathrm{L}} \right\|_2^2 \right)$$

sowie die potentiellen Energien aufgrund Gravitation und Federsteifigkeiten

$$T_{\mathrm{pot}} = g \left( m_{\mathrm{T}} P_{\mathrm{T},z} + m_{\mathrm{J}} P_{\mathrm{J},z} + m_{\mathrm{CJ}} P_{\mathrm{CJ},z} + m_{\mathrm{TR}} P_{\mathrm{TR},z} + m_{\mathrm{L}} P_{\mathrm{L},z} \right) + \frac{1}{2} \left( \tilde{c}_{\alpha_y} \alpha_y^2 + \tilde{c}_{\beta_y} \beta_y^2 \right)$$

ausdrücken. Da die rotatorischen Energien im Vergleich zu den translatorischen vernachlässigbar klein sind, kann die Lagrange Funktion als

$$L = T_{\mathrm{kin}} - T_{\mathrm{pot}}$$

formuliert werden. Daraus ergeben sich die Euler-Lagrange Gleichungen

$$\frac{\mathrm{d}}{\mathrm{d}t}\frac{\partial L}{\partial \dot{q}_i} - \frac{\partial L}{\partial q_i} = Q_i^*$$

mit den generalisierten Kräften $Q_i^*$, welche die Einflüsse der nicht-konservativen Kräfte, beispielsweise der Dämpfungskräfte, beschreiben. Ausgeschrieben ergeben sich die drei Gleichungen

$$\frac{\mathrm{d}}{\mathrm{d}t}\frac{\partial L}{\partial \dot{\alpha}_y} - \frac{\partial L}{\partial \alpha_y} = -d_{\alpha y}\dot{\alpha}_y, \tag{68}$$

$$\frac{\mathrm{d}}{\mathrm{d}t}\frac{\partial L}{\partial \dot{\beta}_y} - \frac{\partial L}{\partial \beta_y} = -d_{\beta y}\dot{\beta}_y, \tag{69}$$

$$\frac{\mathrm{d}}{\mathrm{d}t}\frac{\partial L}{\partial \dot{\phi}_y} - \frac{\partial L}{\partial \phi_y} = 0. \tag{70}$$

Durch Einsetzen von *L* und Berechnung der entsprechenden Ableitungen ergeben sich in diesen Gleichungen sehr große Terme, so dass eine explizite Darstellung hier nicht sinnvoll ist.

Die Dynamik der Antriebe des Katzwerks sowie des Hubwerks lässt sich in der Regel gut approximieren durch die PT1 Dynamiken erster Ordnung

$$\ddot{x}_{\mathrm{TR}} = \frac{1}{\tau_{\mathrm{TR}}}\left(u_x - \dot{x}_{\mathrm{TR}}\right), \tag{71}$$

$$\ddot{l} = \frac{1}{\tau_l}\left(u_l - \dot{l}\right). \tag{72}$$

Darin beschreiben $\tau_i$ die entsprechenden Zeitkonstanten und $u_i$ die Sollgeschwindigkeiten.

Hält man nun alle Antriebsbezogenen Variablen im Vektor

$$\mathbf{x}_a = \left(x_{\mathrm{TR}}, l, \dot{x}_{\mathrm{TR}}, \dot{l}, \ddot{x}_{\mathrm{TR}}, \ddot{l}\right) \tag{73}$$

fest, so lässt sich die gekoppelte Radialdynamik aus Antriebs-, Pendel- und Strukturdynamik darstellen als

$$\underbrace{\begin{pmatrix} a_{11}(\mathbf{q},\dot{\mathbf{q}},\mathbf{x}_a) & a_{12}(\mathbf{q},\dot{\mathbf{q}},\mathbf{x}_a) & a_{13}(\mathbf{q},\dot{\mathbf{q}},\mathbf{x}_a) \\ a_{31}(\mathbf{q},\dot{\mathbf{q}},\mathbf{x}_a) & a_{22}(\mathbf{q},\dot{\mathbf{q}},\mathbf{x}_a) & a_{23}(\mathbf{q},\dot{\mathbf{q}},\mathbf{x}_a) \\ a_{31}(\mathbf{q},\dot{\mathbf{q}},\mathbf{x}_a) & a_{32}(\mathbf{q},\dot{\mathbf{q}},\mathbf{x}_a) & a_{33}(\mathbf{q},\dot{\mathbf{q}},\mathbf{x}_a) \end{pmatrix}}_{\tilde{A}(\mathsf{X})} \ddot{\mathbf{q}} = \underbrace{\begin{pmatrix} b_1(\mathbf{q},\dot{\mathbf{q}},\mathbf{x}_a) \\ b_2(\mathbf{q},\dot{\mathbf{q}},\mathbf{x}_a) \\ b_3(\mathbf{q},\dot{\mathbf{q}},\mathbf{x}_a) \end{pmatrix}}_{\tilde{B}(\mathsf{X})} \tag{74}$$

oder durch Umstellen zur Laufzeit als die nichtlineare Dynamik in der Form

$$\ddot{\mathbf{q}} = \mathbf{f}\left(\dot{\mathbf{q}}, \mathbf{q}, \mathbf{x}_a\right). \tag{75}$$

Da die Radialdynamik somit in Minimalkoordinaten vorliegt, ist eine Ordnungsreduktion nicht erforderlich. Allerdings ist aufgrund der Komplexität der durch (75) beschriebenen Gleichungen eine analytische offline Vorberechnung der Jacobi Matrix $\dfrac{\partial \mathbf{f}}{\partial[\dot{\mathbf{q}}, \mathbf{q}]}$ nicht möglich. Um aus (75) ein lineares Modell der Form (60) für die Regelung zu erhalten, kann daher zur Laufzeit eine numerische Linearisierung durchgeführt werden. Hierfür kann zunächst die Ruhelage ($\dot{\mathbf{q}}_0$, $\mathbf{q}_0$) bestimmt werden, für die

$$\mathbf{0} = \mathbf{f}\left(\dot{\mathbf{q}}_0, \mathbf{q}_0, \mathbf{0}\right) \tag{76}$$

erfüllt ist. Dann lässt sich das Modell über die Gleichungen

$$\dot{\mathbf{x}}_{\text{lin}} = \underbrace{\left.\frac{\partial \mathbf{f}}{\partial[\dot{\mathbf{q}}, \mathbf{q}]}\right|_{(\dot{\mathbf{q}}_0, \mathbf{q}_0)}}_{A} \mathbf{x}_{\text{lin}} + \underbrace{\left.\frac{\partial \mathbf{f}}{\partial \mathbf{u}}\right|_{(\dot{\mathbf{q}}_0, \mathbf{q}_0)}}_{B} \mathbf{u}. \tag{77}$$

linearisieren und es ergibt sich ein lineares System wie in Gleichung (60). Durch die Wahl einer geeigneten Sensorik für Struktur- und Pendeldynamik, beispielsweise mit Hilfe von Gyroskopen, ergibt sich ein Messausgang wie in (61), durch den die Radialdynamik beobachtbar ist.

Das weitere Vorgehen des Beobachter- und Regelungsentwurfes entspricht dem für die Schwenkdynamik.

Wie schon erwähnt, kann die Auslenkung des Hubseils gegenüber der Vertikalen 62 nicht nur durch eine bildgebende Sensorik an der Laufkatze bestimmt werden, sondern auch durch eine Inertialmesseinrichtung am Lasthaken.

Eine solche Inertialmesseinrichtung IMU kann insbesondere Beschleunigungs- und Drehratensensormittel zum Bereitstellen von Beschleunigungs- und Drehratensignalen aufweisen, die einerseits translatorische Beschleunigungen entlang verschiedener Raumachsen und andererseits Drehraten bzw. gyroskopische Signale bezüglich verschiedener Raumachsen angeben, umfassen. Als Drehraten können dabei Drehgeschwindigkeiten, grundsätzlich aber auch Drehbeschleunigungen oder auch beides bereitgestellt werden.

Vorteilhafterweise kann die Inertialmesseinrichtung IMU dabei Beschleunigungen in drei Raumachsen und Drehraten um zumindest zwei Raumachsen erfassen. Die Beschleunigungssensormittel können dreiachsig arbeitend und die Gyroskopsensormittel können zweiachsig arbeitend ausgebildet sein.

Die am Lasthaken angebrachte Inertialmesseinrichtung IMU kann ihre Beschleunigungs- und Drehratensignale und/oder daraus abgeleitete Signale vorteilhafterweise drahtlos an die Steuer- und/oder Auswerteeinrichtung 3 bzw. deren Pendeldämpfungseinrichtung 340 übermitteln, die an einem Strukturteil des Krans angebracht oder auch separat in Krannähe angeordnet sein kann. Insbesondere kann die Übermittlung an einen Empfänger REC erfolgen, der an der Laufkatze 206 und/oder an der Aufhängung, von der das Hubseil abläuft, angebracht sein kann. Vorteilhafterweis kann die Übertragung bspw. über eine WLAN-Verbindung erfolgen, vgl. Fig. 10.

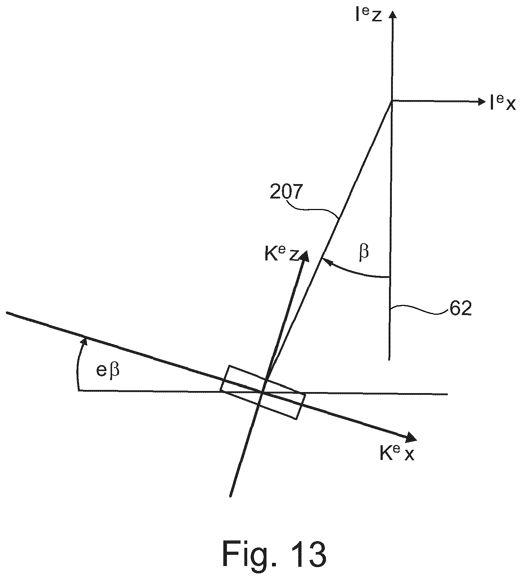

Wie Fig. 13 zeigt, kann der Lasthaken 208 gegenüber dem Hubseil 207 je nach Anbindung in verschiedene Richtungen und in verschiedener Weise verkippen. Der Schrägzugwinkel $\beta$ des Hubseil 207 muß nicht identisch mit der Ausrichtung des Lasthakens sein. Dabei beschreibt der Kippwinkel $\varepsilon_\beta$ die Verkippung bzw. Rotation des Lasthakens 207 gegenüber dem Schrägzug $\beta$ des Hubseils 2017 bzw. die Rotation zwischen Inertialkoordinaten und Lasthakenkoordinaten.

Für die Modellierung des Pendelverhaltens eines Krans können die beiden Pendelrichtungen in Verfahrrichtung der Laufkatze, d.h. in Längsrichtung des Auslegers einerseits und in Dreh- bzw. Bogenrichtung um die Turmachse, d.h. in Richtung quer zur Längsrichtung des Auslegers, separat voneinander betrachtet werden, da sich diese beiden Pendelbewegungen kaum gegenseitig beeinflussen. Jede Pendelrichtung kann daher zweidimensional modelliert werden.

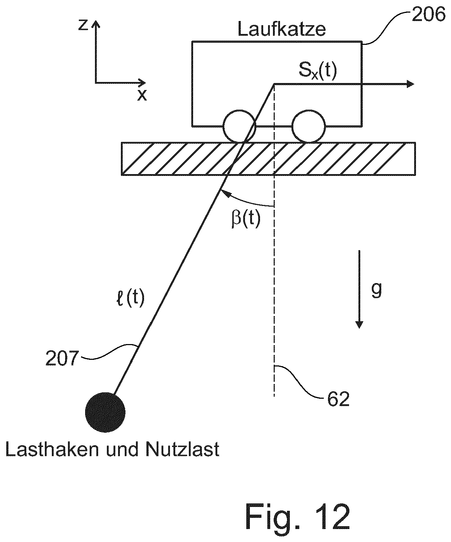

Betrachtet man das in Fig. 12 gezeigte Modell, läßt sich die Pendeldynamik mit Hilfe der Lagrange-Gleichungen beschreiben. Dabei werden die Laufkatzenposition $s_x(t)$, die Seillänge $l(t)$ und der Seil- bzw. Pendelwinkel $\beta(t)$ in Abhängigkeit der Zeit t definiert, wobei im Folgenden der Einfachheit und besserer Lesbarkeit halber die Zeitabhängkeit nicht mehr eigens durch den Term (t) angegeben wird. Zunächst kann die Lasthakenposition in inertialen Koordinaten als

$$\mathbf{r} = \begin{pmatrix} s_x - l\sin(\beta) \\ -l\cos(\beta) \end{pmatrix} \qquad (101)$$

definiert werden, wobei die zeitliche Ableitung

$$\dot{\mathbf{r}} = \begin{pmatrix} \dot{s}_x - \dot{l}\sin(\beta) - l\dot{\beta}\cos(\beta) \\ l\dot{\beta}\sin(\beta) - \dot{l}\cos(\beta) \end{pmatrix} \qquad (102)$$

die Inertialgeschwindigkeit unter Verwendung von $\dfrac{d\beta}{dt} = \dot{\beta}$ beschreibt. Die Hakenbeschleunigung

$$\ddot{\mathbf{r}} = \begin{pmatrix} \ddot{s}_x - 2\dot{\beta}\dot{l}\cos\beta - \ddot{l}\sin\beta + l\dot{\beta}^2\sin\beta - l\ddot{\beta}\cos\beta \\ 2\dot{l}\dot{\beta}\sin\beta - \ddot{l}\cos\beta + l\dot{\beta}^2\cos\beta + l\ddot{\beta}\sin\beta \end{pmatrix} \qquad (103)$$

wird für die Ableitung der Lastdynamik nicht benötigt, jedoch für die Gestaltung des Filters verwendet, wie noch erläutert.

Die kinetische Energie wird bestimmt durch

$$T = \frac{1}{2}m\dot{\mathbf{r}}^T\dot{\mathbf{r}} \qquad (104)$$

wobei die Masse $m$ des Lasthakens und der Last später eliminiert wird. Die potentielle Energie infolge der Schwerkraft entspricht

$$V = -m\mathbf{r}^T\mathbf{g}, \quad \mathbf{g} = \begin{pmatrix} 0 & -g \end{pmatrix}^T, \qquad (105)$$

Mit der Erdbeschleunigung $g$.

Da $V$ nicht von $\dot{\mathbf{r}}$ abhängt, lautet die Euler-Lagrange Gleichung

$$\frac{d}{dt}\frac{\partial T}{\partial \dot{\mathbf{q}}} - \frac{\partial T}{\partial \mathbf{q}} + \frac{\partial V}{\partial \mathbf{q}} = \mathbf{0} \qquad (106)$$

wobei der Vector $\mathbf{q} = [\beta\ \dot{\beta}]^T$ die generalisierten Koordinaten beschreibt. Dies ergibt die Pendeldynamik als nicht-lineare Differentialgleichung zweiter Ordnung bezüglich $\beta$,

$$l\ddot{\beta} + 2\dot{l}\dot{\beta} - \ddot{s}_x\cos\beta + g\sin\beta = 0. \qquad (107)$$

Die Dynamik in der $y$ - $z$ Ebene kann analog ausgedrückt werden.

Im Folgenden wird die Beschleunigung $\ddot{s}_x$ der Laufkatze bzw. eines Portalkran-Läufers als bekannte System-Eingangsgröße betrachtet. Diese läßt sich bisweilen direkt messen oder auf Basis der gemessenen Laufkatzen-Geschwindigkeit schätzen. Alternativ oder zusätzlich kann die Katzbeschleunigung mit einem separaten the trolley Accelerometer gemessen oder auch geschätzt werden, wenn die Antriebsdynamik bekannt ist. Das dynamische Verhalten elektrischer Kranantriebe kann anhand des Lastverhaltens erster Ordnung

$$\ddot{s}_x = \frac{u_x - \dot{x}}{T_x} \qquad (108)$$

Abgeschätzt werden, wobei das Eingangssignal $u_x$ der gewünschten Geschwindigkeit entspricht und $T_x$ die Zeitkonstante ist. Bei ausreichender Genauigkeit wird keine weitere Messung der Beschleunigung benötigt.

Die Kipprichtung des Lasthakens wird durch den Kippwinkel $\varepsilon_\beta$ beschrieben, vgl. Fig. 13.

Da die Drehrate oder Kippgeschwindigkeit gyroskopisch gemessen wird, entspricht das der Abschätzung der Verkippung zugrunde liegende Modell dem einfachen Integrator

$$\dot{\varepsilon}_\beta = \omega_\beta \qquad (109)$$

von der gemessenen Drehrate $\omega_\beta$ zum Kippwinkel.

Der IMU mißt alle Signale im sich mitbewegenden, mitdrehenden körperfesten Koordinatensystem des Lasthakens, was mit dem vorangestellten Index $K$ gekennzeichnet ist, während Vektoren in inertialen Koordinaten mit $I$ gekennzeichnet werden oder auch ganz ohne Index bleiben. Sobald $\varepsilon_\beta$ geschätzt ist, kann die gemessene Beschleunigung $_K\mathbf{a} = [_K a_x \ _K a_z]^T$ in Lasthaken-Koordinaten zu $_K\mathbf{a}$ in inertialen Koordinaten tranformiert werden, und zwar unter Verwendung von

$$_I\mathbf{a} = \begin{bmatrix} \cos(\varepsilon_\beta) & \sin(\varepsilon_\beta) \\ -\sin(\varepsilon_\beta) & \cos(\varepsilon_\beta) \end{bmatrix} \cdot_K \mathbf{a}. \qquad (110)$$

**Die inertiale** Beschleunigung kann dann zum Abschätzen des Pendelwinkels auf Basis von (107) and (103) genutzt werden.

Das Anschätzen des Seilwinkels $\beta$ erfordert eine genaue Abschätzung der Verkippung des Lasthakens $\varepsilon_\beta$. zu können, wird ein absoluter Refernezwert benötigt, da das Gyroskop begrenzt genau ist und ein Ausgangswert unbekannt ist. Zudem wird die gyroskopische Messung regelmäßig von einer näherungsweise konstanten Abweichung überlagert, die dem Messprinzip inherent ist. Ferner kann auch nicht angenommen werden, dass $\varepsilon_\beta$ generell um Null oszilliert. Daher wird der Beschleunigungs-Sensor dazu verwendet, einen solchen Referenzwert bereitzustellen, indem die Erdbeschleunigungskonstante (die im Signal mit niedriger Frequenz auftritt) ausgewertet wird und in inertialen Koordinaten als

$$_I\mathbf{g} = \begin{bmatrix} 0 & -g \end{bmatrix}^T. \qquad (111)$$

Bekannt ist und in Lasthaken-Koordinaten

$$_K\mathbf{g} = -g \begin{bmatrix} -\sin(\varepsilon_\beta) & \cos(\varepsilon_\beta) \end{bmatrix}^T. \qquad (112)$$

transformierbar ist. Die gemessene Beschleunigung ergibt sich als Summe von (103) und (112)

$$_K\mathbf{a} =_K \ddot{\mathbf{r}} -_K \mathbf{g}. \qquad (113)$$

Das negative Vorzeichen von $_K\mathbf{g}$ resultiert dabei aus dem Umstand, dass die Erdbeschleunigung aufgrund des Sensorprinzips als fiktive Aufwärtsbeschleunigung gemessen wird.

Da alle Komponenten von $_K\ddot{\mathbf{r}}$ generell signifikant kleiner als $g$ sind und um Null oszilieren, erlaubt die Anwendung eines Tiefpass-Filters mit ausreichend niedriger Ausblendfrequenz die Näherung

$$_K\mathbf{a} \approx -_K \mathbf{g}. \qquad (114)$$

Dividiert man die $x$ Komponente durch die $z$ Komponente, erhält man den Referenzkippwinkel für niedrige Frequenzen als

$$\varepsilon_{\beta,a} = \arctan\left(\frac{_K a_x}{_K a_z}\right). \qquad (115)$$

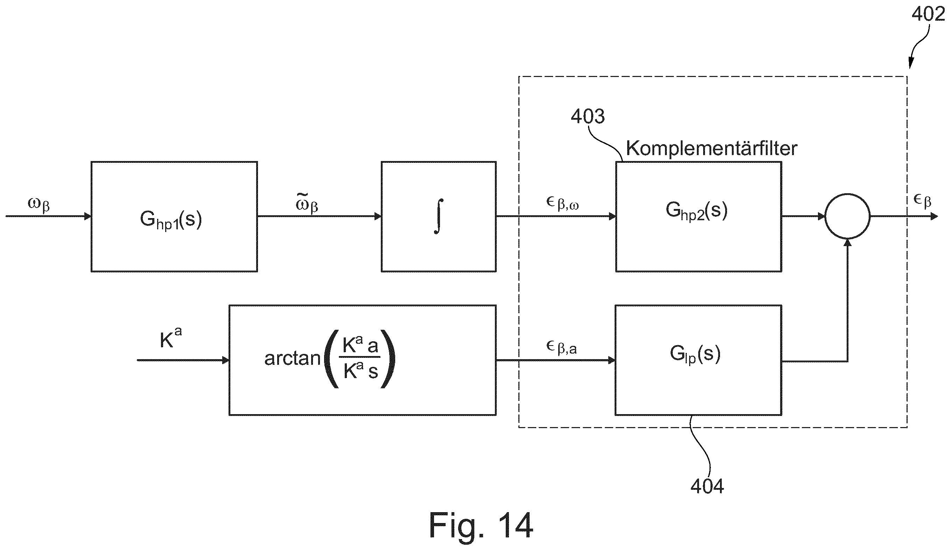

Die einfache Struktur der linearen Pendeldynamik nach (109) erlaubt die Verwendung von diversen Filtern, um die Orientierung abzuschätzen. Eine Option ist dabei ein sog. zeitkontinuierlicher Kalman Bucy Filter der durch Variation der Verfahrensparameter und Rauschmessung eingestellt werden kann. Im Folgenden wird indes ein Komplementärfilter wie in Fig. 14 gezeigt, eingesetzt, der hinsichtlich seiner Frequenzcharakteristik durch Auswahl der Hochpass- und Tiefpass-Transferfunktionen eingestellt werden kann.

Wie das Blockdiagram der Fig. 14 zeigt, kann der Komplementärfilter dazu ausgebildet sein, die Richtung der

Lasthakenverkippung $\varepsilon_\beta$ abzuschätzen. Ein Hochpass-Filtern des Gyroscopsignals $\omega_\beta$ mit $G_{hp1}(s)$ ergibt die versatzfreie Drehrate $\tilde\omega_\beta$ sowie nach Integration eine erste Kippwinkelschätzung $\varepsilon_{\beta,\omega}$. $\varepsilon_{\beta,a}$ stammt aus dem Signal $_K\mathbf{a}$ des Beschleunigungssensors.

Insbesondere kann zunächst ein einfacher Hochpass-Filter mit der Transfer-Funktion

$$G_{hp1} = \frac{s}{s+\omega_o} \qquad (116)$$

und sehr niedriger Ausblendfrrequenz $\omega_o$ auf das Gyroscopesignal $\omega_\beta$ angewendet werden, um den konstanten Messversatz zu eliminieren. Integration ergibt die Gyroskop-basierte Kippwinkel-Schätzung $\varepsilon_{\beta,\omega}$ die für hohe Frequenzen relativgenau ist, jedoch für niedrige Frequenzen relativ ungenau ist. Die grundlegende Idee des Komplementärfilters ist es, $\varepsilon_{\beta,\omega}$ und $\varepsilon_{\beta,a}$ aufzusummieren bzw. miteinander zu verknüpfen, wobei die hohen Frequenzen von $\varepsilon_{\beta,\omega}$ durch Verwendung des Hochpassfilters stärker gewichtet werden und die niedrigen Frequenzen von $\varepsilon_{\beta,a}$ durch die Verwendung des Tiefpassfilters stärker gewichtet werden, da (115) eine gute Abschätzung für niedrige frequenzen darstellt. Die Transferfunktionen können als einfache Filter erster Ordnung gewählt werden, nämlich

$$G_{hp2}(s) = \frac{s}{s+\omega}, \quad G_{lp}(s) = \frac{\omega}{s+\omega} \qquad (117)$$

wobei die Ausblendfrequenz $\omega$ niedriger als die Pendelfrequenz gewählt wird. Da

$$G_{hp2}(s) + G_{lp}(s) = 1 \qquad (118)$$

für alle Frequenzen gilt, wir die Abschätzung von $\varepsilon_\beta$ nicht falsch skaliert.

Auf Basis der geschätzten Lasthaken-Orientierung, kann die inertiale Beschleunigung $_I\mathbf{a}$ des Lasthakens aus der Messung von $_K\mathbf{a}$ bestimmt werden, und zwar unter Verwendung von (110), was die Gestaltung eines Beobachters auf Basis der Pendeldynamik (107) gestattet sowie die rotierte Beschleunigungsmessung

$$_I\mathbf{a} = \ddot{\mathbf{r}} - _I\mathbf{g}. \qquad (119)$$

Obwohl beide Komponenten dieser Gleichung gleichermaßen für die Abschätzung des Pendelwinkels hergenommen werden können, können gute Ergebnisse auch nur unter Verwendung der $x$-Komponente erhalten werden, die unabhängig von $g$ ist.

Nachfolgend wird angenommen, dass die Pendeldynamik durch prozeßbedingtes Hintergrundrauschen $\mathbf{w}$ : N(0, Q) und Messrauschen $v$ : N(0,R) überlagert wird, so dass sie als nicht-lineares stochastisches System ausdrückbar ist, nämlich

$$\dot{\mathbf{x}} = \mathbf{f}(\mathbf{x},u) + \mathbf{w}, \quad \mathbf{x}(0) = \mathbf{x}_0 \qquad (120)$$
$$y = h(\mathbf{x},u) + v$$

wobei der Statusvektor $\mathbf{x} = [\beta\ \dot\beta]^T$ ist. Zur Bestimmung der Zustände kann der kontinuierliche, zeitlich erweiterte Kalman Filter

$$\dot{\hat{\mathbf{x}}} = \mathbf{f}(\hat{\mathbf{x}},u) + K\big(y - h(\hat{\mathbf{x}},u)\big), \hat{\mathbf{x}}(0) = \hat{\mathbf{x}}_0,$$
$$\dot{P} = AP + PA^T - PC^T R^{-1} CP + Q, P(0) = P_0,$$
$$K = PC^T R^{-1}, \qquad (121)$$
$$A = \frac{\partial\mathbf{f}}{\partial\mathbf{x}}\Big|_{\hat{\mathbf{x}},u}, \quad C = \frac{\partial h}{\partial\mathbf{x}}\Big|_{\hat{\mathbf{x}},u},$$

verwendet werden.

Die räumliche Zustandsdarstellung der Pendeldynamik gemäß (107) lautet dabei

$$\mathbf{f}(\mathbf{x}, \ddot{s}_x) = \begin{bmatrix} \dot{\beta} \\ \dfrac{-1}{l}\left(2\dot{l}\dot{\beta} - \ddot{s}_x \cos\beta + g\sin\beta\right) \end{bmatrix} \tag{122}$$

wobei die Katzbeschleunigung $u = \ddot{s}_x$ als Eingangsgröße des Systems behandelt wird. Um einen Systemausgang zu definieren, kann die horizontale Komponente der Lasthakenbeschleunigung aus (119) in Abhaängigkeit der Systemzustände fomuliert werden, woraus sich ergibt:

$$_I a_x = \ddot{r}_x - \underbrace{_I g_x}_{0} \tag{123}$$

$$= \ddot{s}_x - 2\dot{\beta}\dot{l}\cos\beta - \ddot{l}\sin\beta + l\dot{\beta}^2\sin\beta - l\ddot{\beta}\cos\beta$$

$$= (1 - \cos(\beta)^2)\ddot{s}_x + \sin\beta\left(-\ddot{l} + g\cos\beta + l\dot{\beta}^2\right)$$

Die horizontale Komponente $_I g_x$ der Erdbeschleunigung ist dabei naturgemäß Null. Dabei können $\dot{l}, \ddot{l}$ aus der Messung von $l$ rekonstruiert werden, bspw. unter Verwendung der Antriebsdynamik gemäß (108). Bei Verwendung von (123) als Messfunktion

$$h(\mathbf{x}) = {_I a_x}, \tag{124}$$

ergibt sich der Linearisierungsterm als

$$A = \begin{bmatrix} 0 & 1 \\ \dfrac{\left(-g\cos\beta - \ddot{s}_x\sin\beta\right)}{l} & \dfrac{-2\dot{l}}{l} \end{bmatrix}\Big|_{\hat{\mathbf{x}},\ddot{s}_x}, \tag{125}$$

$$C = \begin{bmatrix} \cos\beta\left(2g\cos\beta - \ddot{l} + l\dot{\beta}^2 + 2\ddot{s}_x\sin\beta\right) - g \\ 2l\dot{\beta}\sin\beta \end{bmatrix}^T\Big|_{\hat{\mathbf{x}},\ddot{s}_x}. \tag{126}$$

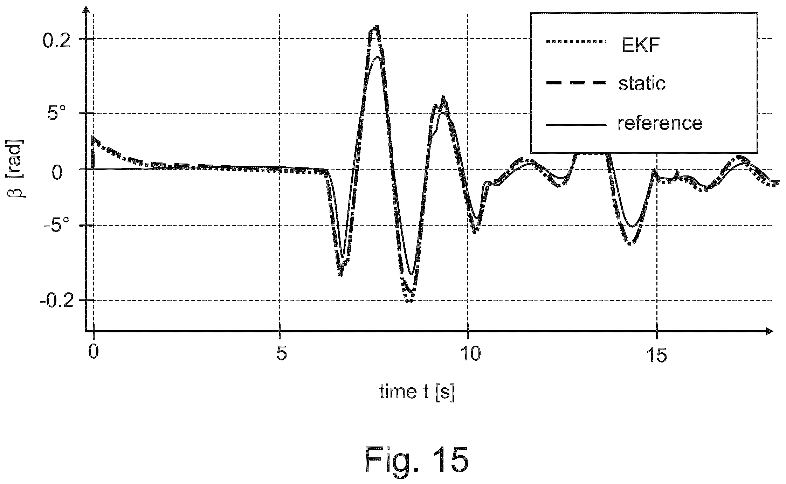

Dabei sind die Kovarianzmatrix-Schätzungen des Prozeßrauschens $Q = I_{2\times2}$, des Messrauschens $R = 1000$ sowie die initiale Fehler-Kovarianzmatrix $P = 0_{2x2}$ .
Wie Figur 15 zeigt, entspricht der Pendelwinkel, der mittels erweitertem Kalman-Filter (EKF) geschätzt wird oder auch mittels einem einfachen statischen Ansatz bestimmt wird, recht gut einer Validierungs-Messung des Pendelwinkels an einem kardanischen Gelenk mittels einem Drehwinkel-Encoder an der Laufkatze.
Interessant ist dabei, dass die Berechnung mittels eines relativ einfachen statischen Ansatzes vergleichbar gute Ergebnisse liefert wie der erweiterte Kalman-Filter. Deshalb können die Pendeldynamik gemäß (122) und die Ausgansgleichung gemäß (123) um den stabilen Zustand $\beta = \dot{\beta} = 0$ linearisiert werden. Wenn weiterhin die Seillänge $l$ als konstant angenommen wird so dass $\dot{l} = \ddot{l} = 0$ , ergibt sich für das linearisierte System

$$\dot{\mathbf{x}} = \begin{bmatrix} 0 & 1 \\ \dfrac{-g}{l} & 0 \end{bmatrix}\mathbf{x} + \begin{bmatrix} 0 \\ \dfrac{1}{l} \end{bmatrix}\ddot{s}_x, \tag{127}$$

$$y = \begin{bmatrix} g & 0 \end{bmatrix}\mathbf{x} \tag{128}$$

und $_I a_x$ dient als Referenzwert für den Ausgang. Unter Vernachlässigung der Dynamikeffekte gemäß (127) und Berücksichtigung von nur der statischen Ausgangsfunktion (128), kann der Pendelwinkel aus der einfachen statischen Beziehung

$$\beta = \frac{l\, a_x}{g} \qquad\qquad (129)$$

gewonnen werden, der interessanteerweise unabhängig von *l* ist. Fig. 15 zeigt, dass die hierdurch gewonnen Ergebnisse ebenso genau sind wie die des Kalman Filters.

Unter Verwendung von $\beta$ und der Gleichung (101), kann somit eine genaue Schätzung der Lastposition erreicht werden.

Bei Modellierung der Dynamik der geschwindigkeitsbasierten Kranantriebe gemäß (108) einhergehend mit einer Parameterbestimmung, werden die sich ergebenden Zeitkonstanten gemäß $T_i < \frac{1}{50}$ sehr klein. Insofern können Dynamikeffekte der Antriebe vernachlässigt werden.

Um die Pendeldynamik mit der Antriebsgeschwindigkeit $\dot{s}_x$ anstelle der Antriebsbeschleunigung $\ddot{s}_x$ als Systemeingangsgröße anzugeben, kann das linearisierte Dynamiksystem gmäß (127) durch Integration "erhöht" werden, woraus sich ergibt:

$$\dot{\tilde{\mathbf{x}}} = \begin{bmatrix} 0 & 1 \\ -\dfrac{g}{l} & 0 \end{bmatrix} \underbrace{\int_0^t \mathbf{x}(\tau)\mathrm{d}\tau}_{\tilde{\mathbf{x}}} + \begin{bmatrix} 0 \\ \dfrac{1}{l} \end{bmatrix} \dot{s}_x \qquad\qquad (130)$$

Dabei ist der neue Statusvektor $\tilde{\mathbf{x}} = [\int\beta \;\; \beta]^T$. Die Dynamik bleibt ersichtlich dieselbe, wohingegen die physikalische Bedeutung und der Eingang sich verändern. Als Unterschied zu (127) soll $\beta$ und $\dot{\beta}$ bei Null stabilisiert werden, nicht jedoch das Zeitintegral $\int\beta$. Da der Regler eine gewünschte Geschwindigkeit $\dot{s}_{x,d}$ halten können soll, sollte der gewünschte stabile Zustand permanent aus $\dot{\tilde{\mathbf{x}}} = 0$ als

$$\tilde{\mathbf{x}}_d = \begin{bmatrix} \dfrac{\dot{s}_{x,d}}{g} & 0 \end{bmatrix}^T . \qquad\qquad (131)$$

berechnet werden. Dies kann auch als statischer Vorfilter *F* im Frequenzbereich angesehen werden, der sicherstellt, dass $\lim_{s \to 0} G_{u,x_1}(s) = 1F$ für die Transferfunktion vom Geschwindigkeitseingang zum ersten Zustand

$$G_{u,x_1}(s) = \frac{1}{ls^2 + g} . \qquad\qquad (132)$$

ist. Die erste Komponente des neuen Statusvektors $\tilde{\mathbf{x}}$ kann mithilfe eines Kalman-Bucy Filters auf Basis von (130) geschätzt werden, mit der Systemausgangsgröße $y = [0\ 1]\tilde{\mathbf{x}}$. Das Ergebnis ist ähnlich, wenn ein Regler auf Basis von (127) entworfen wird und der Motorregler durch das integrierte Eingangssignal $u = \int_0^t \ddot{s}_x(\tau)\mathrm{d}\tau$ gesteuert wird.

Das gewonnene Feedback kann als linear-quadratischer Regler (LQR) bestimmt werden, der eine linear-quadratische Gauss-Regler-Struktur (LQG) zusammen mit dem Kalman-Bucy Filter darstellen kann. Sowohl das Feedback als auch der Kalman-Stellfaktor können an die Seillänge *l* angepasst werden, bspw. unter Verwendung von Stellfaktorplänen.

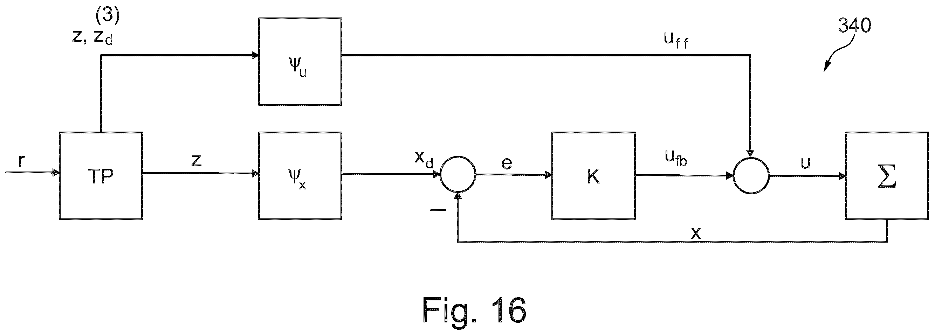

Um den Lasthaken nahe entlang von Trajektorien zu steuern, kann - ähnlich wie schon zuvor erläutert - eine mit zwei Freiheitsgraden versehene Struktur wie in Fig. 16 gezeigt zusammen mit einem Trajektorienplaner verwendet werden, der eine $C^3$-differenzierbare Referenztrajektorie für die Lasthakenposition bereitstellt. Die Katzposition kann dem Dynamiksystem gemäß (130) hinzugefügt werden, woraus sich das System

$$\Sigma: \quad \dot{\mathbf{x}} = \underbrace{\begin{bmatrix} 0 & 1 & 0 \\ \dfrac{-g}{l} & 0 & 0 \\ 0 & 0 & 0 \end{bmatrix}}_{\tilde{A}} \mathbf{x} + \underbrace{\begin{bmatrix} 0 \\ \dfrac{1}{l} \\ 1 \end{bmatrix}}_{\tilde{B}} u \tag{133}$$

ergibt, wobei $u = \dot{s}_x$ ist, so dass die flache Ausgangsgröße

$$z = \boldsymbol{\lambda}^T \mathbf{x}, \quad \boldsymbol{\lambda}^T \begin{bmatrix} \tilde{B} & \tilde{A}\tilde{B} & \tilde{A}^2\tilde{B} \end{bmatrix} = \begin{bmatrix} 0 & 0 & \dfrac{g}{l} \end{bmatrix} \tag{134}$$

$$= \begin{bmatrix} 0 & -l & 1 \end{bmatrix} = s_x - l\beta, \tag{135}$$

ist, was mit der Hakenposition der linearisierten Fallkonstellation korrespondiert. Zustand und Eingang können durch den flachen Ausgang und dessen Ableitungen algebraisch parametrisiert werden, und zwar mit $\mathbf{z} = [z\ \dot{z}\ \ddot{z}]^T$ als

$$\mathbf{x} = \Psi_x(\mathbf{z}) = \begin{bmatrix} \dfrac{-\dot{z}}{g} & \dfrac{-\ddot{z}}{g} & z + \dfrac{l\ddot{z}}{g} \end{bmatrix}^T, \tag{136}$$

$$u = \Psi_u(\mathbf{z}, \overset{(3)}{z}) = \dot{z} + \dfrac{l\dddot{z}}{g} \tag{137}$$

was die algebraische Berechnung der Referenzzustände und des nominalen Eingangsstellsignals aus der geplanten Trajektorie für z ermöglicht. Ein Wechsel des Einstellpunkts zeigt dabei, dass der nominale Fehler nahe Null gehalten werden kann, so dass Feedback Signal $u_{fb}$ des Reglers $K$ signifikant kleiner als die nominale Eingangsstellgröße $u_{ff}$ ist. In der Praxis kann die Eingangsstellgröße auf $u_{fb}$ = werden, wenn das Signal der drahtlosen Intertialmesseinrichtung verloren wird.

Wie Figur 16 zeigt, kann die mit zwei Freiheitsgraden versehene Reglerstruktur einen Trajektorienplaner TP aufweisen, der eine sanfte Trajektorie $z \in C^3$ für die den flachen Ausgang mit begrenzten Ableitungen, die Eingangsgröße $\Psi_u$ und die Parametrisierung des Zustands $\Psi_x$, sowie den Regler $K$.

## Patentansprüche

1. Turmdrehkran, mit einem Hubseil (207), das von einer Laufkatze (206), die an einem Kranausleger (202) verfahrbar ist, abläuft und ein Lastaufnahmemittel (208) trägt, Antriebseinrichtungen zum Bewegen mehrerer Kranelemente und Verfahren des Lastaufnahmemittels (208), einer Steuervorrichtung (3) zum Steuern der Antriebseinrichtungen derart, dass das Lastaufnahmemittel (208) entlang eines Verfahrwegs verfährt, sowie einer Pendeldämpfungseinrichtung (340) zum Dämpfen von Pendelbewegungen des Lastaufnahmemittels (208) und/oder des Hubseils (207), wobei die Pendeldämpfungseinrichtung (340) eine Pendelsensorik (60) mit einer Erfassungseinrichtung zum Erfassen und/oder Schätzen einer Auslenkung ($\varphi$; $\beta$) des Hubseils (207) und/oder des Lastaufnahmemittels (208) gegenüber einer Vertikalen (61) sowie einen Reglerbaustein (341) mit einem geschlossenen Regelkreis zum Beeinflussen der Ansteuerung der Antriebseinrichtungen in Abhängigkeit der ermittelten Auslenkung ($\varphi$; $\beta$) aufweist, **dadurch gekennzeichnet, dass** die Erfassungsvorrichtung (60) eine am Lastaufnahmemittel (208) angebrachte Inertialmeßeinrichtung (IMU) mit Beschleunigungs- und Drehratensensormitteln zum Bereitstellen von Beschleunigungs- und Drehratensignalen, erste Bestimmungsmittel (401) zum Bestimmen und/oder Schätzen einer Verkippung ($\varepsilon_\beta$) des Lastaufnahmemittels (208) aus den Beschleunigungs- und Drehratensignalen der Inertialmeßeinrichtung (IMU) und zweite Bestimmungsmittel (410) zum Bestimmen der Auslenkung ($\beta$) des Hubseils (207) und/oder des Lastaufnahmemittels (208) gegenüber der Vertikalen (61) aus der ermittelten Verkippung ($\varepsilon_\beta$) des Lastaufnahmemittels (208) und einer Inertial-Beschleunigung ($_l a$) des Lastaufnahmemittels (208) aufweist, wobei der Reglerbaustein (341) dazu ausgebildet ist, Regelverstärkungen in Abhängigkeit von Veränderungen bei zumindest Hubseillänge (I) und Katzpsition ($X_{tr}$) nachzuziehen und anzupassen.

**2.** Turmdrehkran nach dem vorhergehenden Anspruch, wobei die ersten Bestimmungsmittel (401) einen Komplementärfilter (402) mit einem Hochpass-Filter (403) für das Drehratensignal der Inertialmeßeinrichtung (IMU) und einen Tiefpass-Filter (404) für das Beschleunigungssignal der Inertialmeßeinrichtung (IMU) oder ein daraus abgeleitetes Signal aufweist, welcher Komplementärfilter (402) dazu ausgebildet ist, eine drehratengestützte Schätzung der Verkippung ($\varepsilon_{\beta,\omega}$) des Lastaufnahmemittels (208), die auf dem hochpassgefilterten Drehratensignal basiert, und eine beschleunigungsgestützte Schätzung der Verkippung ($\varepsilon_{\beta,a}$) des Lastaufnahmemittels (208), die auf dem tiefpassgefilterten Beschleunigungssignal basiert, miteinander zu verknüpfen und aus den verknüpften drehraten- und beschleunigungsgestützten Schätzungen der Verkippung ($\varepsilon_{\beta,\omega}$ ; $\varepsilon_{\beta,a}$) des Lastaufnahmemittels (208) die gesuchte Verkippung ($\varepsilon_{\beta}$) des Lastaufnahmemittels (208) zu bestimmen, wobei die drehratengestützte Schätzung der Verkippung ($\varepsilon_{\beta,\omega}$) des Lastaufnahmemittels (208) vorzugsweise eine Integration des hochpassgefilterten Drehratensignals umfaßt und/oder die beschleunigungsgestützte Schätzung der Verkippung ($\varepsilon_{\beta,a}$) des Lastaufnahmemittels (208) auf dem Quotienten einer gemessenen Horizontalbeschleunigung ($_{K}a_{x}$) und einer gemessenen Vertikalbeschleunigung ($_{K}a_{z}$) beruht, aus dem die beschleunigungsgestützte Schätzung der Verkippung ($\varepsilon_{\beta,a}$) anhand der

Beziehung $\varepsilon_{\beta,a} = \arctan\left( \dfrac{_{K}a_{x}}{_{K}a_{z}} \right)$ . gewonnen wird.

**3.** Turmdrehkran nach einem der vorhergehenden Ansprüche, wobei die zweiten Bestimmungsmittel (410) a.) eine Filter- und/oder Beobachtereinrichung, insbesondere in Form eines Kalman-Filters (411) oder eines erweiterten Kalman-Filters, die als Eingangsgröße die ermittelte Verkippung ($\varepsilon_{\beta}$) des Lastaufnahmemittels (208) berücksichtigt und aus einer Inertialbeschleunigung (Ia) am Lastaufnahmemittel (208) die Auslenkung ($\varphi$; $\beta$) des Hubseils (207) und/oder des Lastaufnahmemittels (208) gegenüber der Vertikalen (61) bestimmt, und/oder b.) eine Berechnungseinrichtung zum Berechnen der Auslenkung ($\beta$) des Hubseils (207) und/oder des Lastaufnahmemittels (208) gegenüber der Vertikalen (61) aus dem Quotienten einer horizontalen Inertialbeschleunigung ($_{I}a_{x}$) und der Erdbeschleunigung (g) aufweisen.

**4.** Turmdrehkran nach einem der vorhergehenden Ansprüche, wobei die Inertialmeseinrichtung (IMU) einen drahtlosen Kommunikations-Baustein zum drahtlosen Übermitteln von Messignalen und/oder daraus abgeleiteten Signalen an einen Empfänger aufweist, wobei der Kommunikations-Baustein und der Empfäger vorzugsweise über eine WLAN-Verbindung miteinander verbindbar sind und der Empfänger an der Laufkatze angeordnet ist, von der das Hubseil abläuft, und/oder an dem Lastaufnahmemittel (208) zumindest eine Umlenkrolle für das Hubseil (207) vorgesehen ist, an welche Umlenkrolle ein Generator zum Erzeugen von elektrischer Energie angekoppelt ist, die in einen Speicher speisbar ist, der die Inertialmesseinrichtung (IMU) mit elektrischer Energie versorgt.

**5.** Turmdrehkran nach dem vorhergehenden Anspruch, wobei die Erfassungseinrichtung (60) ferner eine bildgegebende Sensorik, insbesondere eine Kamera (62) aufweist, die im Bereich eines Aufhängepunktes des Hubseils (207), insbesondere einer Laufkatze (206), im Wesentlichen senkrecht nach unten blickt, wobei eine Bildauswerteeinrichtung (64) zum Auswerten eines von der bildgebenden Sensorik bereitgestellten Bilds hinsichtlich der Position des Lastaufnahmemittels (208) in dem bereitgestellten Bild und Bestimmung der Auslenkung ($\varphi$; $\beta$) des Lastaufnahmemittels (208) und/oder des Hubseils (207) und/oder der Auslenkungsgeschwindigkeit gegenüber der Vertikalen (61) vorgesehen ist.

**6.** Turmdrehkran nach einem der vorhergehenden Ansprüche, wobei die Pendeldämpfungseinrichtung (340) eine Strukturdynamik-Sensorik (342) zum Erfassen von Verformungen und/oder dynamischen Insich-Bewegungen von Strukturbauteilen des Krans aufweist und der Reglerbaustein (341) der Pendeldämpfungseinrichtung (340) dazu ausgebildet ist, beim Beeinflussen der Ansteuerung der Antriebseinrichtungen sowohl das Pendelsignal der Pendelsensorik (60) als auch die dem Regelkreis rückgeführten Strukturdynamiksignale, die Verformungen und/oder dynamische Insich-Bewegungen der Strukturbauteile angeben, zu berücksichtigen, wobei der Reglerbaustein (341) vorzugsweise eine Zwei-Freiheitsgrade-Regelungsstruktur aufweist und/oder zusätzlich zu dem geschlossenen Regelkreis ein Vorsteuermodul (350), das vorzugsweise als differenzielles Flachheitsmodell ausgebildet ist, zum Vorsteuern der Stellsignale für die Antriebseinrichtungen aufweist, wobei das Vorsteuermodul (350) insbesondere dazu ausgebildet ist, die Vorsteuerung ohne Berücksichtigung der Pendelsignale der Pendelsensorik (60) und der Strukturdynamiksignale der Strukturdynamiksensorik (342) auszuführen.

**7.** Turmdrehkran nach dem vorhergehenden Anspruch, wobei dem Vorsteuermodul (350)

- eine vorzugsweise zwischen dem Trajektorien-Planungsmodul (351) und dem Sollwert-Filtermodul (352) einerseits und dem Vorsteuermodul (350) andererseits vorgesehene Kerbfiltereinrichtung (353) zum Filtern der der Vorsteuerung zugeführten Eingangssignale, die dazu ausgebildet ist, aus den genannten Eingangssignalen anregbare Eigenfrequenzen der Strukturdynamik zu eliminieren, und/oder
- ein Trajektorien-Planungsmodul (351), und/oder
- ein Sollwert-Filtermodul (352) zum Bestimmen eines Sollverlaufs für die Lastaufnahmemittelposition und deren zeitlichen Ableitungen aus vorbestimmten Sollwerten für das Lastaufnahmemittel zugeordnet sind.

8. Turmdrehkran nach einem der vorhergehenden Ansprüche 6 bis 7, wobei der Reglerbaustein (341) ein Regelungsmodell aufweist, das die Strukturdynamik des Krans in voneinander unabhängige Teile aufteilt, die zumindest einen Schwenkdynamikteil, der die Strukturdynamik bezüglich Verschwenken des Auslegers (202) um die aufrechte Kranschwenkachse berücksichtigt, und einen Radialdynamikteil, der Strukturdynamikbewegungen parallel zu einer vertikalen, Ausleger parallelen Ebene berücksichtigt, umfassen.

9. Turmdrehkran nach einem der vorhergehenden Ansprüche 6 bis 8, wobei die Strukturdynamik-Sensorik (342) zumindest

   - einen Radialdynamik-Sensor zum Erfassen von dynamischen Bewegungen der Kranstruktur in einer aufrechten Ebene parallel zum Kranausleger (202), und
   - einen Schwenkdynamiksensor zum Erfassen von dynamischen Bewegungen der Kranstruktur um eine aufrechte Krandrehachse, insbesondere Turmachse (205)

   aufweist und der Reglerbaustein (341) der Pendeldämpfungseinrichtung (340) dazu ausgebildet ist, die Ansteuerung der Antriebseinrichtungen, insbesondere eines Katzantriebs und Drehwerkantriebs, in Abhängigkeit der erfassten dynamischen Bewegungen der Kranstruktur in der aufrechten, auslegerparallelen Ebene und der erfassten dynamischen Bewegungen der Kranstruktur um die aufrechte Krandrehachse zu beeinflussen.

10. Turmdrehkran nach einem der vorhergehenden Ansprüche 6 bis 9, wobei die Strukturdynamik-Sensorik (342) ferner

    - einen Hubdynamik-Sensor zum Erfassen von vertikalen dynamischen Verformungen des Kranauslegers (202) aufweist und der Reglerbaustein (341) der Pendeldämpfungseinrichtung (340) dazu ausgebildet ist, die Ansteuerung der Antriebseinrichtungen, insbesondere eines Hubwerkantriebs, in Abhängigkeit der erfassten vertikalen dynamischen Verformungen des Kranauslegers (202) zu beeinflussen, und/oder
    - dazu ausgebildet ist, dynamische Verwindungen eines den Kranausleger tragenden Kranturms (201) und/oder des Kranauslegers (202) zu bestimmen und der Reglerbaustein (341) der Pendeldämpfungseinrichtung (340) dazu ausgebildet ist, die Ansteuerung der Antriebseinrichtungen in Abhängigkeit der erfassten dynamischen Verwindungen des Kranauslegers (202) und/oder des Kranturms (201) zu beeinflussen, und/oder
    - dazu ausgebildet ist, alle Eigenmoden der dynamischen Verwindungen des Kranauslegers (202) und/oder des Kranturms (201), deren Eigenfrequenzen in einem vorbestimmten Frequenzbereich liegen, zu erfassen, wobei die Strukturdynamik-Sensorik (342) zumindest einen, vorzugsweise mehrere Turmsensor(en), der/die beabstandet von einem Knotenpunkt einer Turmeigenschwingung angeordnet ist, zum Erfassen von Turmverwindungen sowie zumindest einen, vorzugsweise mehrere Auslegersensor(en), der/die beabstandet von einem Knotenpunkt einer Auslegereigenschwingung angeordnet ist, zum Erfassen von Auslegerverwindungen aufweist.

11. Turmdrehkran nach einem der vorhergehenden Ansprüche 6 bis 10, wobei die Strukturdynamik-Sensorik (342) Dehnungsmessstreifen und/oder Beschleinigungssensoren und/oder Drehratensensoren, insbesondere in Form von Gyroskopen, zum Erfassen der Verformungen und/oder dynamischen Insich-Bewegungen von Strukturbauteilen des Krans aufweist, wobei die Beschleunigungssensoren und/oder Drehratensensoren vorzugsweise dreiachsig erfassend ausgebildet sind, wobei die Strukturdynamik-Sensorik (344) vorzugsweise zumindest einen Drehraten- und/oder Beschleunigungssensor und/oder Dehnungsmessstreifen zum Erfassen von dynamischen Turmverformungen, zumindest einen Drehraten- und/oder Beschleunigungssensor und/oder Dehnungsmessstreifen zum Erfassen von dynamischen Auslegerverformungen aufweist.

12. Turmdrehkran nach einem der vorhergehenden Ansprüche, wobei der Reglerbaustein (341) eine Filter- und/oder Beobachtereinrichtung (345), insbesondere in Form eines Kalman-Filters (346), in dem erfasste und/oder geschätzte und/oder berechnete und/oder simulierte Funktionen, die die Dynamik der Strukturbauteile des Krans charakterisieren, implementiert sind, zum Beeinflussen der Stellgrößen von Antriebsreglern (347) zum Ansteuern der Antriebseinrichtungen aufweist, wobei die genannte Filter- und/oder Beobachtereinrichtung (345) dazu ausgebildet ist, als Eingangsgrößen einerseits die Stellgrößen der Antriebsregler (347) und andererseit das Pendelsignal der Pendelsensorik (60) und/oder die dem Regelkreis rückgeführten Strukturdynamiksignale, die Verformungen und/oder dynamische Insich-Bewegungen der Strukturbauteile angeben, zu erhalten und in Abhängigkeit der für bestimmte Reglerstellgrößen erhaltenen dynamikinduzierten Bewegungen von Kranelementen und/oder Verformungen von Strukturbauteilen die Reglerstellgrößen zu beeinflussen.

13. Verfahren zum Steuern eines Turmdrehkrans, der gemäß einem der Anprüche 1 bis 12 ausgebildet ist und dessen an einem Hubseil (207) angebrachtes Lastaufnahmemittel (208) durch Antriebseinrichtungen verfahren wird, welche Antriebseinrichtungen von einer Steuervorrichtung (3) des Krans angesteuert werden, wobei die Ansteuerung der Antriebseinrichtungen von einer Pendeldämpfungseinrichtung (340) umfassend einen Reglerbaustein (341) mit einem geschlossenen Regelkreis in Abhängigkeit von pendelrelevanten Parametern beeinflusst wird, **dadurch gekennzeichnet, dass** an dem Lasthaken von einer dort angebrachten Inertialmesseinrichtung (IMU) mit Beschleunigungs- und Drehratensensoren Beschleunigungs- und Drehratensignale, die die Drehraten und translatorischen Beschleunigungen am Lasthaken angeben, bereitgestellt und drahtlos an den Reglerbausstein übermittelt werden, wobei eine Verkippung ($\varepsilon_\beta$) des Lastaufnahmemittels (208) aus den Beschleunigungs- und Drehratensignalen der Inertialmeßeinrichtung (IMU) bestimmt wird, sodann die Auslenkung ($\beta$) des Hubseils (207) und/oder des Lastaufnahmemittels (208) gegenüber der Vertikalen (61) aus der ermittelten Verkippung ($\varepsilon_\beta$) des Lastaufnahmemittels (208) und einer Inertial-Beschleunigung ($_I a$) des Lastaufnahmemittels (208) bestimmt und dem geschlossenen Regelkreis zugeführt wird, wobei wobei von dem Reglerbaustein (341) Regelverstärkungen in Abhängigkeit von Veränderungen bei zumindest Hubseillänge (I) und Katzposition ($x_{tr}$) nachgezogen und angepaßt werden.

14. Verfahren nach dem vorhergehenden Anspruch, wobei die Beschleunigungssignale, die die translatorischen Beschleunigungen am Lasthaken angeben, bezüglich dreier Raumachsen bestimmt und die Drehratensignale, die die Drehraten am Lasthaken wiedergeben, bezüglich zumindest zweier Raumachsen erfaßt werden, wobei die Beschleunigungs- und Drehratensignale einem Komplementärfilter (402) mit einem Hochpass-Filter (403) für das Drehratensignal der Inertialmeßeinrichtung (IMU) und einem Tiefpass-Filter (404) für das Beschleunigungssignal der Inertialmeßeinrichtung (IMU) oder ein daraus abgeleitetes Signal zugeführt werden, wobei von dem Komplementärfilter (402) eine drehratengestützte Schätzung der Verkippung ($\varepsilon_{\beta,\omega}$) des Lastaufnahmemittels (208), die auf dem hochpassgefilterten Drehratensignal basiert, und eine beschleunigungsgestützte Schätzung der Verkippung ($\varepsilon_{\beta,a}$) des Lastaufnahmemittels (208), die auf dem tiefpassgefilterten Beschleunigungssignal basiert, gemacht und miteinander zu verknüpft werden und aus den verknüpften drehraten- und beschleunigungsgestützten Schätzungen der Verkippung ($\varepsilon_{\beta,\omega}$ ; $\varepsilon_{\beta,a}$ ) des Lastaufnahmemittels (208) die gesuchte Verkippung ($\varepsilon_\beta$) des Lastaufnahmemittels (208) bestimmt wird, und/oder wobei von einer Filter- und/oder Beobachtereinrichung, der als Eingangsgröße die ermittelte Verkippung ($\varepsilon_\beta$) des Lastaufnahmemittels (208) zugeführt wird, aus einer Inertialbeschleunigung (Ia) am Lastaufnahmemittel (208) die Auslenkung ($\varphi$; $\beta$) des Hubseils (207) und/oder des Lastaufnahmemittels (208) gegenüber der Vertikalen (61) bestimmt wird.

**Claims**

1. Revolving tower crane, comprising a hoisting rope (207), which runs off from a trolley (206) that is movable along a crane jib (202) and carries a load-handling means (208), drive devices for moving a plurality of crane elements and for moving the load-handling means (208), a control device (3) for controlling the drive devices such that the load-handling means (208) travels along a travel path, and a sway damping device (340) for damping sway movements of the load-handling means (208) and/or of the hoisting rope (207), wherein the sway damping device (340) comprises a sway sensor system comprising a detection device for detecting and/or estimating a deflection ($\varphi$; $\beta$) of the hoisting rope (207) and/or of the load-handling means (208) relative to a vertical (61), and a controller module (341) comprising a closed control loop for influencing the actuation of the drive devices as a function of the determined deflection ($\varphi$; $\beta$), **characterized in that** the detection device (60) comprises an inertial measuring device (IMU), mounted on the load-handling means (208), with acceleration and angular-rate sensor means for providing acceleration and angular-rate signals, first determination means (401) for determining and/or estimating a tilting ($\varepsilon_\beta$) of the load-handling means (208) from the acceleration and angular-rate signals of the inertial measuring device (IMU), and second determination means (410) for determining the deflection ($\beta$) of the hoisting rope (207) and/or of the load-handling means (208) relative to the vertical from the determined tilting ($\varepsilon_\beta$) of the load-handling means (208) and an inertial acceleration (Ia) of the load-handling means (208), wherein the controller module (341) is configured to update and adapt control gains as a function of changes in at least the hoisting-rope length (I) and the trolley position ($X_{tr}$).

2. Revolving tower crane according to the preceding claim, wherein the first determination means (401) have a complementary filter (402) with a high-pass filter (403) for the angular-rate signal of the inertial measuring device (IMU) and a low-pass filter (404) for the acceleration signal of the inertial measuring device (IMU) or a signal derived therefrom, which complementary filter (402) is configured to link an angular-rate-based estimate of the tilting ($\varepsilon_{\beta,\omega}$) of the load-handling means (208), which is based on the high-pass-filtered angular-rate signal, and an acceleration-based estimate of the tilting ($\varepsilon_{\beta,a}$) of the load-handling means (208), which is based on the low-pass-filtered acceleration signal, to one another and to determine, from the linked angular-rate-based and acceleration-based estimates of the tilting ($\varepsilon_{\beta,\omega}$; $\varepsilon_{\beta,a}$) of the load-handling means (208), the sought tilting ($\varepsilon_{\beta}$) of the load-handling means (208), wherein the angular-rate-based estimate of the tilting ($\varepsilon_{\beta,\omega}$) of the load-handling means (208) preferably comprises an integration of the high-pass-filtered angular-rate signal and/or the acceleration-based estimate of the tilting ($\varepsilon_{\beta,a}$) of the load-handling means (208) is based on the quotient of a measured horizontal acceleration ($_K a_x$) and a measured vertical acceleration ($_K a_z$), from which the acceleration-based estimate of the tilting ($\varepsilon_{\beta,a}$) is obtained according to the relationship $\varepsilon_{\beta,a} = arctan\left(\frac{^K a_x}{^K a_z}\right)$.

3. Revolving tower crane according to one of the preceding claims, wherein the second determination means (410) have a.) a filter and/or observer device, in particular in the form of a Kalman filter (411) or an extended Kalman filter, which takes into account, as an input variable, the determined tilting ($\varepsilon_{\beta}$) of the load-handling means (208) and determines, from an inertial acceleration (Ia) at the load-handling means (208), the deflection ($\varphi$ ; $\beta$) of the hoisting rope (207) and/or of the load-handling means (208) relative to the vertical (61), and/or b.) a calculation device for calculating the deflection ($\beta$) of the hoisting rope (207) and/or of the load-handling means (208) relative to the vertical (61) from the quotient of a horizontal inertial acceleration ($_I a_x$) and the gravitational acceleration (g).

4. Revolving tower crane according to one of the preceding claims, wherein the inertial measuring device (IMU) has a wireless communication module for wirelessly transmitting measurement signals and/or signals derived therefrom to a receiver, wherein the communication module and the receiver are preferably connectable to one another via a WLAN connection and the receiver is arranged on the trolley from which the hoisting rope runs off, and/or at least one deflection pulley for the hoisting rope (207) is provided on the load-handling means (208), to which deflection pulley a generator for generating electrical energy is coupled, which energy can be fed into a storage device that supplies the inertial measuring device (IMU) with electrical energy.

5. Revolving tower crane according to the preceding claim, wherein the detection device (60) further has an imaging sensor system, in particular a camera (62), which looks substantially vertically downward in the region of a suspension point of the hoisting rope (207), in particular of a trolley (206), wherein an image evaluation device (64) is provided for evaluating an image provided by the imaging sensor system with regard to the position of the load-handling means (208) in the provided image and for determining the deflection ($\varphi$ ; $\beta$) of the load-handling means (208) and/or of the hoisting rope and/or the deflection velocity relative to the vertical (61).

6. Revolving tower crane according to one of the preceding claims, wherein the sway damping device (340) has a structural-dynamics sensor system (342) for detecting deformations and/or dynamic internal movements of structural components of the crane, and the controller module (341) of the sway damping device (340) is configured, when influencing the actuation of the drive devices, to take into account both the sway signal of the sway sensor system (60) and the structural-dynamics signals fed back to the control loop, which indicate deformations and/or dynamic internal movements of the structural components, wherein the controller module (341) preferably has a two-degree-of-freedom control structure and/or, in addition to the closed control loop, has a feedforward module (350), which is preferably configured as a differential flatness model, for feedforward control of the control signals for the drive devices, wherein the feedforward module (350) is in particular configured to carry out the feedforward control without taking into account the sway signals of the sway sensor system (60) and the structural-dynamics signals of the structural-dynamics sensor system (342).

7. Revolving tower crane according to the preceding claim, wherein the feedforward module (350) is assigned

    - a notch filter device (353), preferably provided between the trajectory planning module (351) and the setpoint filter module (352), on the one hand, and the feedforward module (350), on the other hand, for filtering the input signals supplied to the feedforward control, which notch filter device is configured to eliminate natural frequencies of the structural dynamics that can be excited from said input signals, and/or
    - a trajectory planning module (351), and/or
    - a setpoint filter module (352) for determining a desired profile for the load-handling-means position and the time derivatives thereof from predetermined setpoint values for the load-handling means.

8. Revolving tower crane according to one of preceding claims 6 to 7, wherein the controller module (341) has a control model that divides the structural dynamics of the crane into mutually independent parts, which comprise at least one slewing-dynamics part, which takes into account the structural dynamics with respect to slewing of the jib (202) about the upright crane slewing axis, and a radial-dynamics part, which takes into account structural-dynamics movements parallel to a vertical plane parallel to the jib.

9. Revolving tower crane according to one of preceding claims 6 to 8, wherein the structural-dynamics sensor system (342) has at least

   - a radial-dynamics sensor for detecting dynamic movements of the crane structure in an upright plane parallel to the crane jib (202), and
   - a slewing-dynamics sensor for detecting dynamic movements of the crane structure about an upright crane rotation axis, in particular tower axis (205),

   and the controller module (341) of the sway damping device is configured to influence the actuation of the drive devices, in particular of a trolley drive and slewing-gear drive, as a function of the detected dynamic movements of the crane structure in the upright, jib-parallel plane and of the detected dynamic movements of the crane structure about the upright crane rotation axis.

10. Revolving tower crane according to one of preceding claims 6 to 9, wherein the structural-dynamics sensor system (342) further

    - has a hoisting-dynamics sensor for detecting vertical dynamic deformations of the crane jib (202), and the controller module (341) of the sway damping device (340) is configured to influence the actuation of the drive devices, in particular of a hoist drive, as a function of the detected vertical dynamic deformations of the crane jib (202), and/or
    - is configured to determine dynamic torsions of a crane tower (201) carrying the crane jib and/or of the crane jib (202), and the controller module (341) of the sway damping device (340) is configured to influence the actuation of the drive devices as a function of the detected dynamic torsions of the crane jib (202) and/or of the crane tower (201), and/or
    - is configured to detect all natural modes of the dynamic torsions of the crane jib (202) and/or of the crane tower (201), the natural frequencies of which lie in a predetermined frequency range, wherein the structural-dynamics sensor system (342) has at least one, preferably a plurality of, tower sensor(s), which is/are arranged at a distance from a node point of a natural tower vibration, for detecting tower torsions, and at least one, preferably a plurality of, jib sensor(s), which is/are arranged at a distance from a node point of a natural jib vibration, for detecting jib torsions.

11. Revolving tower crane according to one of preceding claims 6 to 10, wherein the structural-dynamics sensor system (342) has strain gauges and/or acceleration sensors and/or angular-rate sensors, in particular in the form of gyroscopes, for detecting the deformations and/or dynamic internal movements of structural components of the crane, wherein the acceleration sensors and/or angular-rate sensors are preferably configured for three-axis detection, wherein the structural-dynamics sensor system (344) preferably has at least one angular-rate and/or acceleration sensor and/or strain gauge for detecting dynamic tower deformations, and at least one angular-rate and/or acceleration sensor and/or strain gauge for detecting dynamic jib deformations.

12. Revolving tower crane according to one of the preceding claims, wherein the controller module (341) has a filter and/or observer device (345), in particular in the form of a Kalman filter (346), in which detected and/or estimated and/or calculated and/or simulated functions that characterize the dynamics of the structural components of the crane are implemented, for influencing the manipulated variables of drive controllers (347) for actuating the drive devices, wherein said filter and/or observer device (345) is configured to receive, as input variables, on the one hand the manipulated variables of the drive controllers (347) and, on the other hand, the sway signal of the sway sensor system (60) and/or the structural-dynamics signals fed back to the control loop, which indicate deformations and/or dynamic internal movements of the structural components, and to influence the controller manipulated variables as a function of the dynamically induced movements of crane elements and/or deformations of structural components obtained for specific controller manipulated variables.

13. Method for controlling a revolving tower crane that is configured according to one of claims 1 to 12 and the load-handling means (208) of which, attached to a hoisting rope (207), is moved by drive devices, which drive devices are actuated by a control device (3) of the crane, wherein the actuation of the drive devices is influenced by a sway damping device (340), comprising a controller module (341) with a closed control loop, as a function of sway-relevant parameters, **characterized in that** acceleration and angular-rate signals, which indicate the angular rates and translational accelerations at the load hook, are provided at the load hook by an inertial measuring device (IMU), mounted there, with acceleration and angular-rate sensors and are transmitted wirelessly to the controller module, wherein a tilting ($\varepsilon_\beta$) of the load-handling means (208) is determined from the acceleration and angular-rate signals of the inertial measuring device (IMU), then the deflection ($\beta$) of the hoisting rope (207) and/or of the load-handling means (208) relative to the vertical (61) is determined from the determined tilting ($\varepsilon_\beta$) of the load-handling means (208) and an inertial acceleration ($_\text{I}a$) of the load-handling means (208) and is supplied to the closed control loop, wherein control gains are updated and adapted by the controller module (341) as a function of changes in at least the hoisting-rope length (I) and the trolley position ($X_{tr}$).

14. Method according to the preceding claim, wherein the acceleration signals, which indicate the translational accelerations at the load hook, are determined with respect to three spatial axes and the angular-rate signals, which represent the angular rates at the load hook, are detected with respect to at least two spatial axes, wherein the acceleration and angular-rate signals are supplied to a complementary filter (402) with a high-pass filter (403) for the angular-rate signal of the inertial measuring device (IMU) and a low-pass filter (404) for the acceleration signal of the inertial measuring device (IMU) or a signal derived therefrom, wherein the complementary filter (402) makes and links to one another an angular-rate-based estimate of the tilting ($\varepsilon_{\beta,\omega}$) of the load-handling means (208), which is based on the high-pass-filtered angular-rate signal, and an acceleration-based estimate of the tilting ($\varepsilon_{\beta,a}$) of the load-handling means (208), which is based on the low-pass-filtered acceleration signal, and determines, from the linked angular-rate-based and acceleration-based estimates of the tilting ($\varepsilon_{\beta,\omega}$ ; $\varepsilon_{\beta,a}$) of the load-handling means (208), the sought tilting ($\varepsilon_\beta$) of the load-handling means (208), and/or wherein the deflection ($\varphi$ ; $\beta$) of the hoisting rope (207) and/or of the load-handling means (208) relative to the vertical (61) is determined from an inertial acceleration (Ia) at the load-handling means by a filter and/or observer device to which the determined tilting ($\varepsilon_\beta$) of the load-handling means (208) is supplied as an input variable.

## Revendications

1. Grue à tour pivotante, comprenant un câble de levage (207) qui se déroule à partir d'un chariot (206), lequel est déplaçable sur une flèche de grue (202), et qui porte un moyen de préhension de charge (208), des dispositifs d'entraînement pour déplacer plusieurs éléments de grue et pour déplacer le moyen de préhension de charge (208), un dispositif de commande (3) destiné à commander les dispositifs d'entraînement de telle sorte que le moyen de préhension de charge (208) se déplace le long d'un trajet de déplacement, ainsi qu'un dispositif d'amortissement du ballant (340) destiné à amortir des mouvements de ballant du moyen de préhension de charge (208) et/ou du câble de levage (207), le dispositif d'amortissement du ballant (340) comprenant un système de capteurs de ballant avec un dispositif de détection destiné à détecter et/ou estimer une déviation ($\varphi$ ; $\beta$) du câble de levage (207) et/ou du moyen de préhension de charge (208) par rapport à une verticale (61), ainsi qu'un module régulateur (341) avec une boucle de régulation fermée destinée à influencer la commande des dispositifs d'entraînement en fonction de la déviation déterminée ($\varphi$ ; $\beta$), **caractérisée en ce que** le dispositif de détection (60) comprend un dispositif de mesure inertielle (IMU), monté sur le moyen de préhension de charge (208), avec des moyens capteurs d'accélération et de vitesse angulaire destinés à fournir des signaux d'accélération et de vitesse angulaire, des premiers moyens de détermination (401) destinés à déterminer et/ou estimer un basculement ($\varepsilon_\beta$) du moyen de préhension de charge (208) à partir des signaux d'accélération et de vitesse angulaire du dispositif de mesure inertielle (IMU), et des seconds moyens de détermination (410) destinés à déterminer la déviation ($\beta$) du câble de levage (207) et/ou du moyen de préhension de charge (208) par rapport à la verticale à partir du basculement déterminé ($\varepsilon_\beta$) du moyen de préhension de charge (208) et d'une accélération inertielle (Ia) du moyen de préhension de charge (208), le module régulateur (341) étant configuré pour mettre à jour et adapter des gains de régulation en fonction de changements d'au moins la longueur du câble de levage (I) et la position du chariot ($X_{tr}$).

2. Grue à tour pivotante selon la revendication précédente, dans laquelle les premiers moyens de détermination (401) comprennent un filtre complémentaire (402) avec un filtre passe-haut (403) pour le signal de vitesse angulaire du dispositif de mesure inertielle (IMU) et un filtre passe-bas (404) pour le signal d'accélération du dispositif de mesure inertielle (IMU) ou un signal dérivé de celui-ci, lequel filtre complémentaire (402) est configuré pour relier entre elles une estimation fondée sur la vitesse angulaire du basculement ($\varepsilon_{\beta,\omega}$) du moyen de préhension de charge (208), qui est basée sur le signal de vitesse angulaire filtré passe-haut, et une estimation fondée sur l'accélération du basculement ($\varepsilon_{\beta,a}$) du moyen de préhension de charge (208), qui est basée sur le signal d'accélération filtré passe-bas, et pour déterminer, à partir des estimations reliées entre elles, fondées sur la vitesse angulaire et sur l'accélération, du basculement ($\varepsilon_{\beta,\omega}$ ; $\varepsilon_{\beta,a}$) du moyen de préhension de charge (208), le basculement recherché ($\varepsilon_{\beta}$) du moyen de préhension de charge (208), l'estimation fondée sur la vitesse angulaire du basculement ($\varepsilon_{\beta,\omega}$) du moyen de préhension de charge (208) comprenant de préférence une intégration du signal de vitesse angulaire filtré passe-haut et/ou l'estimation fondée sur l'accélération du basculement ($\varepsilon_{\beta,a}$) du moyen de préhension de charge (208) étant basée sur le quotient d'une accélération horizontale mesurée ($_K a_x$) et d'une accélération verticale mesurée ($_K a_z$), à partir duquel l'estimation fondée sur l'accélération du basculement ($\varepsilon_{\beta,a}$) est obtenue selon la relation

$$\varepsilon_{\beta,a} = arctan\left(\frac{K^a x}{K^a z}\right).$$

3. Grue à tour pivotante selon l'une des revendications précédentes, dans laquelle les seconds moyens de détermination (410) comprennent a.) un dispositif de filtrage et/ou d'observation, notamment sous la forme d'un filtre de Kalman (411) ou d'un filtre de Kalman étendu, qui prend en compte, comme grandeur d'entrée, le basculement déterminé ($\varepsilon_{\beta}$) du moyen de préhension de charge (208) et détermine, à partir d'une accélération inertielle (la) au niveau du moyen de préhension de charge (208), la déviation ($\varphi$ ; $\beta$) du câble de levage (207) et/ou du moyen de préhension de charge (208) par rapport à la verticale (61), et/ou b.) un dispositif de calcul destiné à calculer la déviation ($\beta$) du câble de levage (207) et/ou du moyen de préhension de charge (208) par rapport à la verticale (61) à partir du quotient d'une accélération inertielle horizontale ($_I a_x$) et de l'accélération de la pesanteur (g).

4. Grue à tour pivotante selon l'une des revendications précédentes, dans laquelle le dispositif de mesure inertielle (IMU) comprend un module de communication sans fil destiné à transmettre sans fil des signaux de mesure et/ou des signaux dérivés de ceux-ci à un récepteur, le module de communication et le récepteur étant de préférence connectables l'un à l'autre par une liaison WLAN, et le récepteur étant disposé sur le chariot à partir duquel le câble de levage se déroule, et/ou au moins une poulie de renvoi pour le câble de levage (207) étant prévue sur le moyen de préhension de charge (208), à laquelle poulie de renvoi est couplé un générateur destiné à produire de l'énergie électrique, laquelle peut être introduite dans un accumulateur qui alimente le dispositif de mesure inertielle (IMU) en énergie électrique.

5. Grue à tour pivotante selon la revendication précédente, dans laquelle le dispositif de détection (60) comprend en outre un système de capteurs imageurs, notamment une caméra (62), qui regarde sensiblement verticalement vers le bas dans la zone d'un point de suspension du câble de levage (207), notamment d'un chariot (206), un dispositif d'évaluation d'image (64) étant prévu pour évaluer une image fournie par le système de capteurs imageurs quant à la position du moyen de préhension de charge (208) dans l'image fournie et pour déterminer la déviation ($\varphi$ ; $\beta$) du moyen de préhension de charge (208) et/ou du câble de levage et/ou la vitesse de déviation par rapport à la verticale (61).

6. Grue à tour pivotante selon l'une des revendications précédentes, dans laquelle le dispositif d'amortissement du ballant (340) comprend un système de capteurs de dynamique structurelle (342) destiné à détecter des déformations et/ou des mouvements internes dynamiques de composants structurels de la grue, et le module régulateur (341) du dispositif d'amortissement du ballant (340) est configuré, lors de l'influence exercée sur la commande des dispositifs d'entraînement, pour prendre en compte à la fois le signal de ballant du système de capteurs de ballant (60) et les signaux de dynamique structurelle réinjectés dans la boucle de régulation, lesquels indiquent des déformations et/ou des mouvements internes dynamiques des composants structurels, le module régulateur (341) présentant de préférence une structure de régulation à deux degrés de liberté et/ou comprenant, en plus de la boucle de régulation fermée, un module de précommande (350), qui est de préférence configuré comme modèle de platitude différentielle, pour la précommande des signaux de réglage destinés aux dispositifs d'entraînement, le module de précommande (350) étant notamment configuré pour exécuter la précommande sans prise en compte des signaux de ballant du système de capteurs de ballant (60) et des signaux de dynamique structurelle du système de capteurs de dynamique structurelle (342).

7. Grue à tour pivotante selon la revendication précédente, dans laquelle sont associés au module de précommande (350)

- un dispositif de filtre coupe-bande (353), prévu de préférence entre le module de planification de trajectoire (351) et le module de filtrage de consigne (352), d'une part, et le module de précommande (350), d'autre part, pour filtrer les signaux d'entrée fournis à la précommande, lequel dispositif de filtre coupe-bande est configuré pour éliminer, desdits signaux d'entrée, des fréquences propres de la dynamique structurelle susceptibles d'être excitées, et/ou
- un module de planification de trajectoire (351), et/ou

- un module de filtrage de consigne (352) destiné à déterminer, à partir de valeurs de consigne prédéterminées pour le moyen de préhension de charge, un profil de consigne pour la position du moyen de préhension de charge et ses dérivées temporelles.

8. Grue à tour pivotante selon l'une des revendications précédentes 6 à 7, dans laquelle le module régulateur (341) comprend un modèle de régulation qui divise la dynamique structurelle de la grue en parties indépendantes les unes des autres, lesquelles comprennent au moins une partie de dynamique d'orientation, qui prend en compte la dynamique structurelle relative au pivotement de la flèche (202) autour de l'axe d'orientation vertical de la grue, et une partie de dynamique radiale, qui prend en compte des mouvements de dynamique structurelle parallèles à un plan vertical parallèle à la flèche.

9. Grue à tour pivotante selon l'une des revendications précédentes 6 à 8, dans laquelle le système de capteurs de dynamique structurelle (342) comprend au moins

   - un capteur de dynamique radiale destiné à détecter des mouvements dynamiques de la structure de grue dans un plan vertical parallèle à la flèche de grue (202), et
   - un capteur de dynamique d'orientation destiné à détecter des mouvements dynamiques de la structure de grue autour d'un axe de rotation vertical de grue, notamment un axe de tour (205),

   et le module régulateur (341) du dispositif d'amortissement du ballant est configuré pour influencer la commande des dispositifs d'entraînement, notamment d'un entraînement de chariot et d'un entraînement de mécanisme d'orientation, en fonction des mouvements dynamiques détectés de la structure de grue dans le plan vertical parallèle à la flèche et des mouvements dynamiques détectés de la structure de grue autour de l'axe de rotation vertical de grue.

10. Grue à tour pivotante selon l'une des revendications précédentes 6 à 9, dans laquelle le système de capteurs de dynamique structurelle (342) en outre

    - comprend un capteur de dynamique de levage destiné à détecter des déformations dynamiques verticales de la flèche de grue (202), et le module régulateur (341) du dispositif d'amortissement du ballant (340) est configuré pour influencer la commande des dispositifs d'entraînement, notamment d'un entraînement de levage, en fonction des déformations dynamiques verticales détectées de la flèche de grue (202), et/ou
    - est configuré pour déterminer des torsions dynamiques d'une tour de grue (201) portant la flèche de grue et/ou de la flèche de grue (202), et le module régulateur (341) du dispositif d'amortissement du ballant (340) est configuré pour influencer la commande des dispositifs d'entraînement en fonction des torsions dynamiques détectées de la flèche de grue (202) et/ou de la tour de grue (201), et/ou
    - est configuré pour détecter tous les modes propres des torsions dynamiques de la flèche de grue (202) et/ou de la tour de grue (201), dont les fréquences propres se situent dans une plage de fréquences prédéterminée, le système de capteurs de dynamique structurelle (342) comprenant au moins un, de préférence plusieurs, capteur(s) de tour, disposé(s) à distance d'un point nodal d'une vibration propre de tour, pour détecter des torsions de tour, ainsi qu'au moins un, de préférence plusieurs, capteur(s) de flèche, disposé(s) à distance d'un point nodal d'une vibration propre de flèche, pour détecter des torsions de flèche.

11. Grue à tour pivotante selon l'une des revendications précédentes 6 à 10, dans laquelle le système de capteurs de dynamique structurelle (342) comprend des jauges de contrainte et/ou des capteurs d'accélération et/ou des capteurs de vitesse angulaire, notamment sous la forme de gyroscopes, pour détecter les déformations et/ou les mouvements internes dynamiques de composants structurels de la grue, les capteurs d'accélération et/ou les capteurs de vitesse angulaire étant de préférence configurés pour une détection triaxiale, le système de capteurs de dynamique structurelle (344) comprenant de préférence au moins un capteur de vitesse angulaire et/ou d'accélération et/ou une jauge de contrainte destiné(e) à détecter des déformations dynamiques de tour, ainsi qu'au moins un capteur de vitesse angulaire et/ou d'accélération et/ou une jauge de contrainte destiné(e) à détecter des déformations dynamiques de flèche.

12. Grue à tour pivotante selon l'une des revendications précédentes, dans laquelle le module régulateur (341) comprend un dispositif de filtrage et/ou d'observation (345), notamment sous la forme d'un filtre de Kalman (346), dans lequel sont implémentées des fonctions détectées et/ou estimées et/ou calculées et/ou simulées qui caractérisent la dynamique des composants structurels de la grue, pour influencer les grandeurs de réglage de régulateurs d'entraînement (347) destinés à commander les dispositifs d'entraînement, ledit dispositif de filtrage et/ou d'observation (345) étant configuré pour recevoir, comme grandeurs d'entrée, d'une part les grandeurs de réglage des régulateurs d'entraînement (347) et, d'autre part, le signal de ballant du système de capteurs de ballant (60) et/ou les signaux de dynamique structurelle réinjectés dans la boucle de régulation, lesquels indiquent des déformations et/ou des mouvements internes dynamiques des composants structurels, et pour influencer les grandeurs de réglage des régulateurs en fonction des mouvements induits dynamiquement d'éléments de grue et/ou des déformations de composants structurels obtenus pour des grandeurs de réglage de régulateur déterminées.

13. Procédé de commande d'une grue à tour pivotante, qui est configurée selon l'une des revendications 1 à 12 et dont le moyen de préhension de charge (208), fixé à un câble de levage (207), est déplacé par des dispositifs d'entraînement, lesquels dispositifs d'entraînement sont commandés par un dispositif de commande (3) de la grue, la commande des dispositifs d'entraînement étant influencée par un dispositif d'amortissement du ballant (340) comprenant un module régulateur (341) avec une boucle de régulation fermée en fonction de paramètres pertinents pour le ballant, **caractérisé en ce que,** au niveau du crochet de charge, un dispositif de mesure inertielle (IMU) monté à cet endroit, avec des capteurs d'accélération et de vitesse angulaire, fournit des signaux d'accélération et de vitesse angulaire qui indiquent les vitesses angulaires et les accélérations de translation au niveau du crochet de charge, et les transmet sans fil au module régulateur, un basculement ($\varepsilon_\beta$) du moyen de préhension de charge (208) étant déterminé à partir des signaux d'accélération et de vitesse angulaire du dispositif de mesure inertielle (IMU), puis la déviation ($\beta$) du câble de levage (207) et/ou du moyen de préhension de charge (208) par rapport à la verticale (61) étant déterminée à partir du basculement déterminé ($\varepsilon_\beta$) du moyen de préhension de charge (208) et d'une accélération inertielle ($_l a$) du moyen de préhension de charge (208), puis fournie à la boucle de régulation fermée, des gains de régulation étant mis à jour et adaptés par le module régulateur (341) en fonction de changements d'au moins la longueur du câble de levage (I) et la position du chariot ($X_{tr}$).

14. Procédé selon la revendication précédente, dans lequel les signaux d'accélération, qui indiquent les accélérations de translation au niveau du crochet de charge, sont déterminés par rapport à trois axes spatiaux et les signaux de vitesse angulaire, qui représentent les vitesses angulaires au niveau du crochet de charge, sont détectés par rapport à au moins deux axes spatiaux, les signaux d'accélération et de vitesse angulaire étant fournis à un filtre complémentaire (402) avec un filtre passe-haut (403) pour le signal de vitesse angulaire du dispositif de mesure inertielle (IMU) et un filtre passe-bas (404) pour le signal d'accélération du dispositif de mesure inertielle (IMU) ou un signal dérivé de celui-ci, le filtre complémentaire (402) réalisant et reliant entre elles une estimation fondée sur la vitesse angulaire du basculement ($\varepsilon_{\beta,\omega}$) du moyen de préhension de charge (208), qui est basée sur le signal de vitesse angulaire filtré passe-haut, et une estimation fondée sur l'accélération du basculement ($\varepsilon_{\beta,a}$) du moyen de préhension de charge (208), qui est basée sur le signal d'accélération filtré passe-bas, et le basculement recherché ($\varepsilon_\beta$) du moyen de préhension de charge (208) étant déterminé à partir des estimations reliées entre elles, fondées sur la vitesse angulaire et sur l'accélération, du basculement ($\varepsilon_{\beta,\omega}$ ; $\varepsilon_{\beta,a}$) du moyen de préhension de charge (208), et/ou dans lequel la déviation ($\varphi$ ; $\beta$) du câble de levage (207) et/ou du moyen de préhension de charge (208) par rapport à la verticale (61) est déterminée à partir d'une accélération inertielle (la) au niveau du moyen de préhension de charge par un dispositif de filtrage et/ou d'observation auquel le basculement déterminé ($\varepsilon_\beta$) du moyen de préhension de charge (208) est fourni comme grandeur d'entrée.

Fig. 1

EP 4 501 839 B1

Fig. 2

Fig. 3

Fig. 4

Fig. 5

Fig. 6

Fig. 7

Fig. 8

Fig. 9

WLAN Empfänges
an Laufkatze

207

IMU und
WLAN-Sender
an Lasthaken

206

208

Fig. 10

EP 4 501 839 B1

Fig. 11

207

208

Fig. 12

Fig. 13

Fig. 14

Fig. 15

Fig. 16

EP 4 501 839 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 202008018260 U1
- DE 102009032270 A1
- DE 102016004350 A1
- DE 202008018206 U1
- EP 1628902 B1
- DE 10324692 A1
- EP 2562125 B1
- US 20130161279 A
- DE 10064182 A1
- US 5526946 B
- EP 2436637 A1
- CN 207418145 U
- JP H08143273 A
- JP 2016222363 A

### In der Beschreibung aufgeführte Nicht-Patentliteratur

- **E. ARNOLD** ; **O. SAWODNY** ; **J. NEUPERT** ; **K. SCHNEIDER**. Anti-sway system for boom cranes based on a model predictive control approach. *IEEE International Conference Mechatronics and Automation, 2005, Niagara Falls, Ont., Canada*, 2005, vol. 3, 1533-1538
- **ARNOLD, E.** ; **NEUPERT, J.** ; **SAWODNY, O.** Modellprädiktive Trajektoriengenerierung für flachheitsbasierte Folgeregelungen am Beispiel eines Hafenmobilkrans. *Automatisierungstechnik*, August 2008, vol. 56
- **J. NEUPERT** ; **E. ARNOLD** ; **K. SCHNEIDER** ; **O. SAWODNY**. Tracking and anti-sway control for boom cranes. *Control Engineering Practice*, 2010, vol. 18, 31-44
- **RALF ROTHFUß**. Anwendung der flachheitsbasierten Analyse und Regelung nichtlinearer Mehrgrößensysteme. VDI-Verlag, 1997